# EUROPÄISCHE PATENTSCHRIFT

(11) **EP 0 794 234 B1**
(45) Veröffentlichungstag und Bekanntmachung des Hinweises auf die Patenterteilung: **08.09.1999**
(21) Anmeldenummer: 97810093.1
(22) Anmeldetag: 24.02.1997
(51) Int. Cl.: C09B 67/22

(54) **Farbstoffmischungen, Verfahren zu deren Herstellung und deren Verwendung**
Dyemixtures, process for their preparation and the use thereof
Mélanges de colorants, leur procédé de fabrication et leur utilisation

(30) Priorität: 04.03.1996 CH 56196
(43) Veröffentlichungstag der Anmeldung: 10.09.1997
(73) Patentinhaber: Ciba Specialty Chemicals Holding Inc., 4057 Basel (CH)
(72) Erfinder: Adam, Jean-Marie, 68300 Rosenau (FR); Bacher, Jean-Pierre, 68220 Buschwiller (FR)

(56) Entgegenhaltungen:
- EP-A- 0 478 503
- EP-A- 0 693 538

## Beschreibung

Die vorliegende Erfindung betrifft neue Farbstoffmischungen, Verfahren zu deren Herstellung und Verwendung dieser Farbstoffmischungen zum Färben und Bedrucken von Fasermaterialien, insbesondere textilen Fasermaterialien.

Gegenstand der vorliegenden Erfindung sind Farbstoffmischungen, welche dadurch gekennzeichnet sind, dass sie mindestens einen Farbstoff der Formel 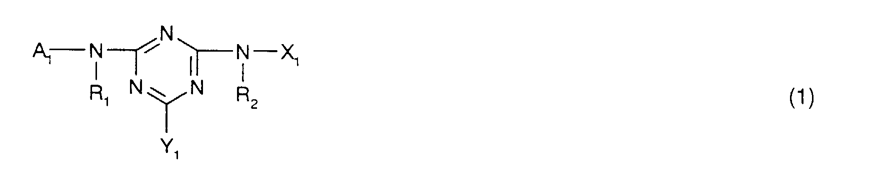 und mindestens einen Farbstoff der Formel 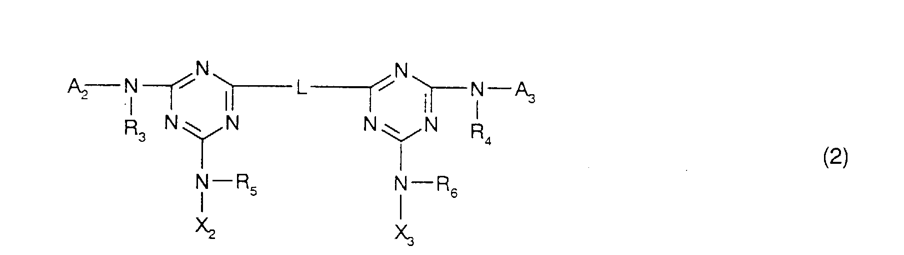 enthalten, worin
R₁, R₂, R₃, R₄, R₅ und R₆ unabhängig voneinander Wasserstoff oder gegebenenfalls substituiertes C₁-C₄-Alkyl sind,
X₁, X₂ und X₃ unabhängig voneinander gegebenenfalls substituiertes C₁-C₈-Alkyl, C₅-C₇-Cycloalkyl oder gegebenenfalls durch C₁-C₄-Alkyl, C₁-C₄-Alkoxy, C₂-C₄-Alkanoylamino, Amino, Hydroxy, Ureido, Halogen, Carboxy oder Sulfo substituiertes Phenyl oder Naphthyl sind oder der Rest der Formel -N(R₂)-X₁, -N(R₅)-X₂ oder
-N(R₆)-X₃ ein gegebenenfalls weitere Heteroatome enthaltender Ring ist,
L ein organisches Brückenglied,
Y₁ ein Rest der Formel 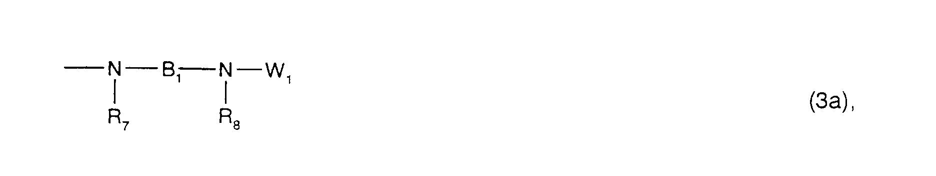 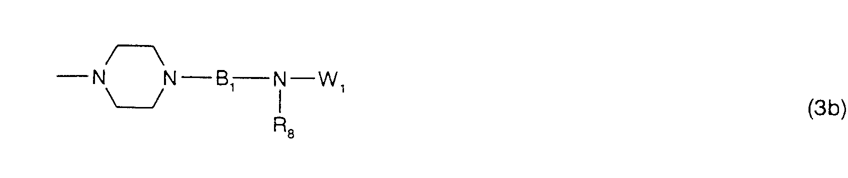 oder 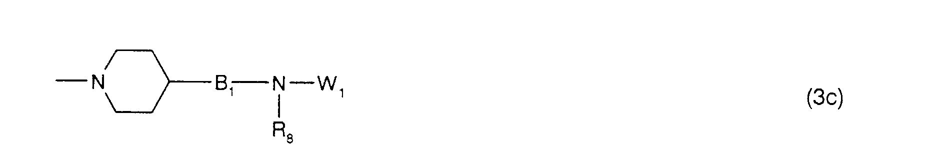 ist, worin
B₁ ein farbloses organisches Brückenglied,
R₇ und R₈ unabhängig voneinander Wasserstoff oder gegebenenfalls substituiertes C₁-C₄-Alkyl sind,
W₁ Wasserstoff, gegebenenfalls substituiertes C₁-C₈-Alkyl, C₅-C₇-Cycloalkyl, Phenyl oder Naphthyl oder ein Rest der Formel -CO-R ist, wobei R gegebenenfalls substituiertes C₁-C₈-Alkyl, C₅-C₇-Cycloalkyl, Phenyl oder Naphthyl bedeutet, und
A₁, A₂ und A₃ unabhängig voneinander Reste eines Monoazo-, Polyazo-, Metallkomplexazo-, Anthrachinon-, Formazan-, Phthalocyanin- oder Dioxazinfarbstoffes sind.

Als C₁-C₄-Alkyl kommen für R₁, R₂, R₃, R₄, R₅, R₆, R₇ und R₈ unabhängig voneinander z.B. Methyl, Aethyl, Propyl, Isopropyl, Butyl, sek.-Butyl, tert.-Butyl oder Isobutyl in Betracht. Die genannten Alkylreste können unsubstituiert oder z.B. durch Hydroxy, Sulfo, Sulfato, Cyano oder Carboxy substituiert sein. Bevorzugt als Alkylreste sind die entsprechenden unsubstituierten Reste.

Als C₁-C₈-Alkyl kommen für X₁, X₂, X₃, W₁ und R unabhängig voneinander vorzugsweise C₁-C₄-Alkylreste, wie z.B. Methyl, Aethyl, Propyl, Isopropyl, Butyl, sek.-Butyl, tert.-Butyl oder Isobutyl, in Betracht. Die genannten Alkylreste können unsubstituiert oder z.B. durch Hydroxy, Sulfo, Sulfato, Cyano oder Carboxy substituiert sein. Bevorzugt sind hierbei die unsubstituierten Reste.

Als gegebenenfalls weitere Heteroatome enthaltender Ring kommt für den Rest der Formel -N(R₂)-X₁, -N(R₅)-X₂ oder -N(R₆)-X₃ z.B. Morpholino in Betracht.

Als C₅-C₇-Cycloalkyl kommt für X₁, X₂, X₃, W₁ und R insbesondere der Cyclohexylrest in Betracht. Die genannten Cycloalkylreste können unsubstituiert oder z.B. durch C₁-C₄-Alkyl, insbesondere durch Methyl, substituiert sein.

Als Phenyl oder Naphthyl kommen für X₁, X₂ und X₃ neben den entsprechenden unsubstituierten Resten die durch C₁-C₄-Alkyl, C₁-C₄-Alkoxy, C₂-C₄-Alkanoylamino, Amino, Hydroxy, Ureido, Halogen, Carboxy oder Sulfo substituierten Reste in Betracht.

Als Phenyl oder Naphthyl kommen für W₁ und R neben den entsprechenden unsubstituierten Resten die beispielsweise durch C₁-C₄-Alkyl, C₁-C₄-Alkoxy, C₂-C₄-Alkanoylamino, Amino, Hydroxy, Ureido, Halogen, Carboxy oder Sulfo substituierten Reste in Betracht.

Als farbloses organisches Brückenglied kommt für B₁ z.B. gegebenenfalls substituiertes C₁-C₁₂-Alkylen, welches durch 1, 2 oder 3 Glieder aus der Gruppe -NH-, -N(CH₃)- oder -O- unterbrochen sein kann, oder gegebenenfalls substituiertes C₅-C₇-Cycloalkylen, Phenylen oder Naphthylen in Betracht. Als C₅-C₇-Cycloalkylen kommt hierbei insbesondere Cyclohexylen in Betracht, welches unsubstituiert oder z.B. durch C₁-C₄-Alkyl, insbesondere durch Methyl, substituiert sein kann. Als Substituenten der genannten Phenylen- und Napthylenreste kommen hierbei z.B. C₁-C₄-Alkyl, C₁-C₄-Alkoxy, C₂-C₄-Alkanoylamino, Amino, Hydroxy, Ureido, Halogen, Carboxy oder Sulfo, insbesondere C₁-C₄-Alkyl, C₁-C₄-Alkoxy, Halogen oder Sulfo, in Betracht. Als Substituenten der genannten C₁-C₁₂-Alkylenreste kommen z.B. Hydroxy, Sulfo, Sulfato, Cyano oder Carboxy in Betracht. Vorzugsweise sind die C₁-C₁₂-Alkylenreste unsubstituiert.

R₁, R₂, R₃, R₄, R₅ und R₆ sind bevorzugt unabhängig voneinander Wasserstoff oder C₁-C₄-Alkyl. R₁, R₃ und R₄ sind besonders bevorzugt Wasserstoff, Methyl oder Aethyl, insbesondere Wasserstoff. R₂, R₅ und R₆ sind besonders bevorzugt C₁-C₄-Alkyl, insbesondere Methyl oder Aethyl und vorzugsweise Aethyl.

X₁, X₂ und X₃ sind bevorzugt unabhängig voneinander C₁-C₈-Alkyl, gegebenenfalls durch C₁-C₄-Alkyl substituiertes C₅-C₇-Cycloalkyl oder gegebenenfalls durch C₁-C₄-Alkyl, C₁-C₄-Alkoxy, C₂-C₄-Alkanoylamino, Ureido, Halogen, Carboxy oder Sulfo substituiertes Phenyl oder Naphthyl. Besonders bevorzugt ist hierbei der Phenylrest, welcher wie oben angegeben substituiert sein kann. Ganz besonders bevorzugt sind X₁, X₂ und X₃ gegebenenfalls durch C₁-C₄-Alkyl, C₁-C₄-Alkoxy, Halogen oder Sulfo substituiertes Phenyl, vorzugsweise unsubstituiertes Phenyl. R₂, R₅ und R₆ sind hierbei besonders bevorzugt C₁-C₄-Alkyl, insbesondere Methyl oder Aethyl und vorzugsweise Aethyl.

B₁ ist bevorzugt ein C₁-C₁₂-Alkylenrest, insbesondere ein C₁-C₁₀-Alkylenrest, welcher durch 1, 2 oder 3 Glieder aus der Gruppe -NH-, -N(CH₃)- oder insbesondere -O- unterbrochen sein kann und unsubstituiert oder durch Hydroxy, Sulfo, Sulfato, Cyano oder Carboxy substituiert ist. Von besonderem Interesse sind hierbei die entsprechenden unsubstituierten Alkylenreste.

Besonders bevorzugt ist B₁ ein C₁-C₁₀-Alkylenrest, insbesondere ein C₁-C₆-Alkylenrest und vorzugsweise ein C₁-C₄-Alkylenrest. Besonders interessante Reste B₁ sind solche der Formeln -CH₂-, -CH₂CH₂- und -CH₂CH₂CH₂-.

R₇ ist bevorzugt Wasserstoff oder C₁-C₄-Alkyl, insbesondere Wasserstoff.

R₈ ist bevorzugt Wasserstoff oder gegebenenfalls durch Hydroxy, Sulfo, Sulfato, Cyano oder Carboxy substituiertes C₁-C₈-Alkyl, vorzugsweise Wasserstoff oder C₁-C₄-Alkyl und insbesondere Wasserstoff.

R ist bevorzugt gegebenenfalls durch C₁-C₄-Alkyl, C₁-C₄-Alkoxy, Halogen, Carboxy oder Sulfo substituiertes Phenyl oder insbesondere C₁-C₈-Alkyl. Besonders bevorzugt ist R C₁-C₄-Alkyl, insbesondere Methyl oder Aethyl und vorzugsweise Methyl.

W₁ ist bevorzugt Wasserstoff oder ein Rest der Formel -CO-R, wobei für R die oben angegebenen Bedeutungen und Bevorzugungen gelten. Insbesondere ist R hierbei C₁-C₈-Alkyl oder gegebenenfalls durch C₁-C₄-Alkyl, C₁-C₄-Alkoxy, Halogen, Carboxy oder Sulfo substituiertes Phenyl, vorzugsweise C₁-C₈-Alkyl. Besonders bevorzugt ist W₁ Wasserstoff.

Bei dem Rest Y₁ handelt es sich bevorzugt um einen Rest der Formel (3a) oder (3b), insbesondere um einen Rest der Formel (3a).

Als organisches Brückenglied kommen für L z.B. Reste der Formel 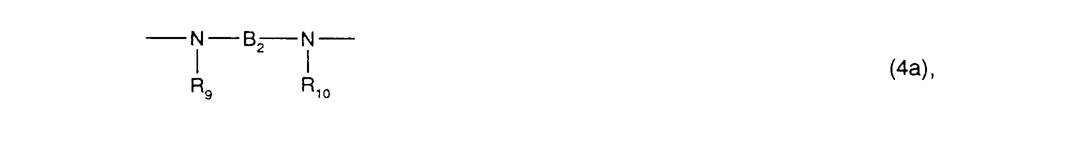 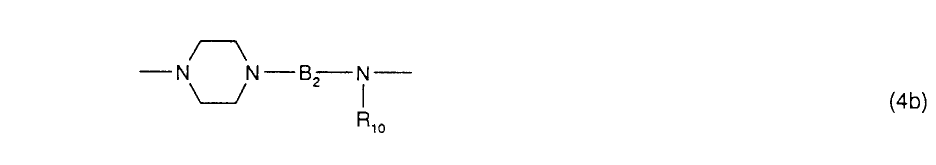 oder 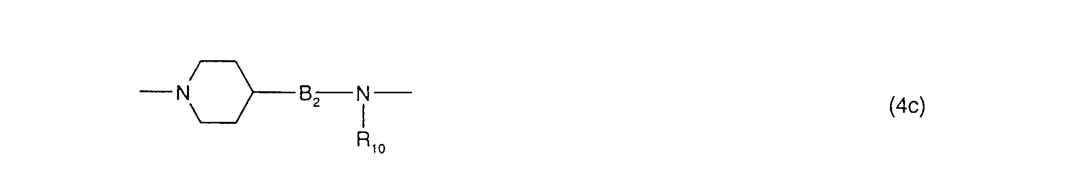 in Betracht, wobei für B₂ die oben für B₁ angegebenen Bedeutungen und Bevorzugungen gelten, für R₉ die oben für R₇ angegebenen Bedeutungen und Bevorzugungen gelten und für R₁₀ die oben für R₈ angegebenen Bedeutungen und Bevorzugungen gelten.

Von Interesse sind ferner Brückenglieder L der Formel

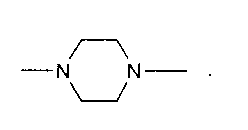

Vorzugsweise sind R₉ und R₁₀ unabhängig voneinander Wasserstoff oder C₁-C₄-Alkyl, und B₂ ist ein C₁-C₁₀-Alkylenrest, welcher durch 1, 2 oder 3 Glieder aus der Gruppe -NH-, -N(CH₃)- oder -O- unterbrochen sein kann und unsubstituiert oder durch Hydroxy, Sulfo, Sulfato, Cyano oder Carboxy substituiert ist.

Bevorzugt sind für L Reste der Formeln (4a), (4b) und (4c), insbesondere Reste der Formeln (4a) und (4b) und vorzugsweise Reste der Formel (4a).

Die Reste A₁, A₂ und A₃ können an ihrem Grundgerüst die bei organischen Farbstoffen üblichen Substituenten gebunden enthalten.

Als Beispiele für Substituenten in den Resten A₁, A₂ und A₃ seien genannt: Alkylgruppen mit 1 bis 4 Kohlenstoffatomen, wie Methyl, Aethyl, Propyl, Isopropyl oder Butyl, wobei die Alkylreste z.B. durch Hydroxyl, Sulfo oder Sulfato weitersubstituiert sein können; Alkoxygruppen mit 1 bis 4 Kohlenstoffatomen, wie Methoxy, Aethoxy, Propoxy, Isopropoxy oder Butoxy, wobei die Alkylreste z.B. durch Hydroxyl, Sulfo oder Sulfato weitersubstituiert sein können; gegebenenfalls durch C₁-C₄-Alkyl, C₁-C₄-Alkoxy, Halogen, Carboxy oder Sulfo substituiertes Phenyl; Acylaminogruppen mit 1 bis 8 Kohlenstoffatomen, insbesondere solche Alkanoylaminogruppen, wie z.B. Acetylamino oder Propionylamino; gegebenenfalls im Phenylring durch C₁-C₄-Alkyl, C₁-C₄-Alkoxy, Halogen oder Sulfo substituiertes Benzoylamino; gegebenenfalls im Phenylring durch C₁-C₄-Alkyl, C₁-C₄-Alkoxy, Halogen oder Sulfo substituiertes Phenylamino; N,N-Di-β-hydroxyäthylamino; N,N-Di-β-sulfatoäthylamino; Alkylsulfonyl mit 1 bis 4 Kohlenstoffatomen, wie Methylsulfonyl oder Aethylsulfonyl; Trifluormethyl; Nitro; Amino; Cyano; Halogen, wie Fluor, Chlor oder Brom; Carbamoyl; Sulfamoyl; N-Mono- oder N,N-Dialkylsulfamoyl mit jeweils 1 bis 4 Kohlenstoffatomen; gegebenenfalls durch C₁-C₄-Alkyl, C₁-C₄-Alkoxy, Halogen, Carboxy oder Sulfo substituiertes N-Phenylsulfamoyl; Ureido; Hydroxy; Carboxy; Sulfomethyl oder Sulfo.

Für A₁, A₂ und A₃ als Reste eines Monoazofarbstoffes kommen vorzugsweise Reste der Formel 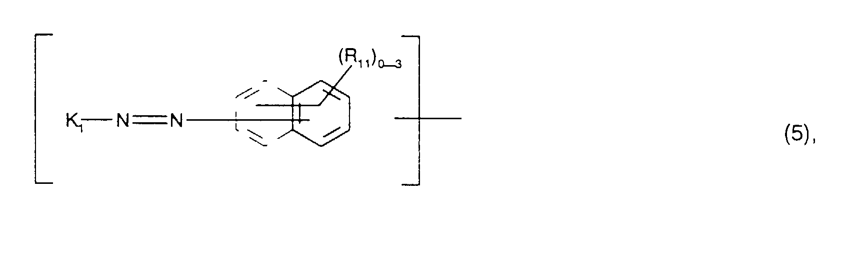 worin (R₁₁)₀₋₃ für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Cyano, Carbamoyl, Carboxyl, Sulfo, Amino und N-Mono- oder N,N-Di-C₁-C₄-Alkylamino steht, und K₁ ein Rest der Benzol- oder Naphthalinreihe oder ein heterocyclischer Rest ist, in Betracht.

(R₁₁)₀₋₃ steht bevorzugt für 0 bis 3 gleiche oder voneinander verschiedene Substituenten ausgewählt aus der Gruppe C₁-C₄-Alkyl, C₁-C₄-Alkoxy, Halogen und Sulfo. Besonders bevorzugt enthalten die Reste der Formel (5) nur einen Substituenten R₁₁, welcher Wasserstoff oder Sulfo, insbesondere Sulfo, ist.

Der Rest K₁ ist bevorzugt ein Benzol-, Naphthalin-, 6-Hydroxypyrid-(2)-on-, 1-Phenyl-5-aminopyrazol-, 1-Phenylpyrazol-(5)-on- oder Indolrest, insbesondere ein Benzol-, Naphthalin-, 1-Phenyl-5-aminopyrazol- oder 1-Phenylpyrazol-(5)-onrest und vorzugsweise ein Naphthalin-, 1-Phenyl-5-aminopyrazol- oder 1-Phenylpyrazol-(5)-onrest.

Als Beispiele für Substituenten des Restes K₁ seien die folgenden genannt:
C₁-C₈-Alkyl, insbesondere C₁-C₄-Alkyl, wie Methyl, Aethyl, Propyl, Isopropyl, Butyl, Isobutyl, sek.-Butyl oder tert.-Butyl; C₁-C₈-Alkoxy, insbesondere C₁-C₄-Alkoxy, wie Methoxy, Aethoxy, Propoxy, Isopropoxy, Butoxy, Isobutoxy, sek.-Butoxy oder tert.-Butoxy; C₂-C₆-Alkanoylamino, insbesondere C₂-C₄-Alkanoylamino, wie z.B. Propionylamino oder insbesondere Acetylamino; Halogen, wie z.B. Fluor oder insbesondere Chlor; Hydroxyl; Cyano; Carbamoyl; Carboxyl; Sulfo; Phenyl; Amino; N-Mono- oder N,N-Di-C₁-C₄-Alkylamino. Hierbei können die genannten Phenylreste unsubstituiert oder z.B. durch C₁-C₄-Alkyl, C₁-C₄-Alkoxy, C₂-C₄-Alkanoylamino, Ureido, Halogen, Carboxyl oder Sulfo substituiert sein.

Besonders bevorzugt ist K₁ ein Rest der Formel 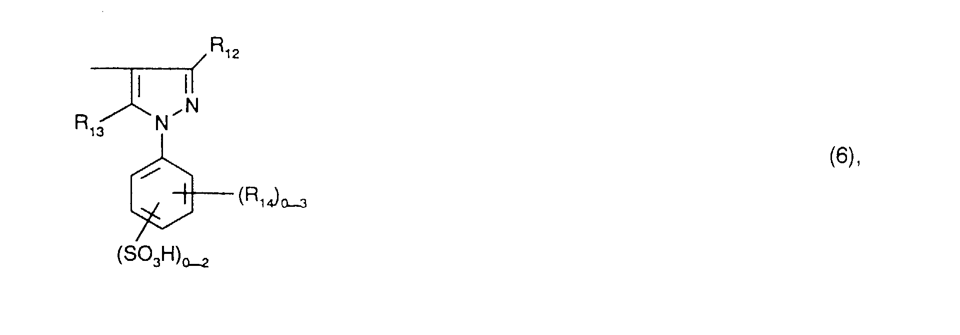
worin R₁₂ Methyl oder Carboxyl,
R₁₃ Amino oder Hydroxyl ist und
(R₁₄)₀₋₃ für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Ureido, Halogen, Carboxyl und Sulfo steht,
oder ein Rest der Formel 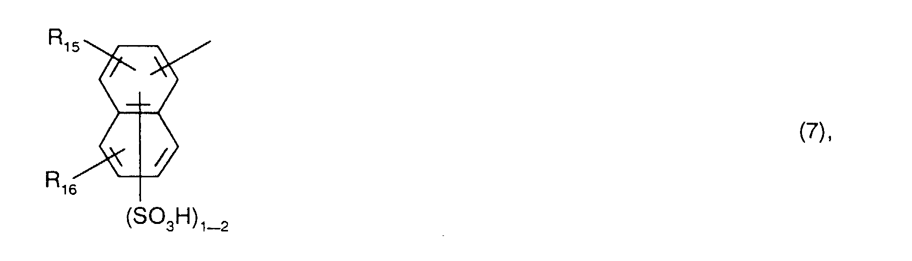 worin R₁₅ Wasserstoff, Amino oder N-Mono- oder N,N-Di-C₁-C₄-Alkylamino und R₁₆ Wasserstoff oder Hydroxyl ist.

R₁₂ ist bevorzugt Methyl.

(R₁₄)₀₋₃ steht bevorzugt für 0 bis 3 gleiche oder voneinander verschiedene Substituenten ausgewählt aus der Gruppe C₁-C₄-Alkyl, C₁-C₄-Alkoxy, Halogen und Sulfo.

R₁₅ ist bevorzugt Amino oder N-Mono- oder N,N-Di-C₁-C₄-Alkylamino, insbesondere Amino.

R₁₆ ist bevorzugt Wasserstoff.

Die Reste der Formel (7) enthalten vorzugsweise nur eine Sulfogruppe.

Als Reste K₁ der Formel (7) sind solche der Formel 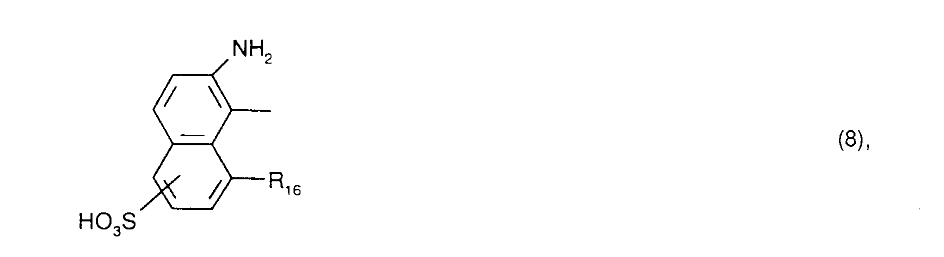 worin R₁₆ Wasserstoff oder Hydroxyl, insbesondere Wasserstoff, bedeutet, bevorzugt.

Bei dem Rest der Formel (5) handelt es sich bevorzugt um einen Rest der Formel 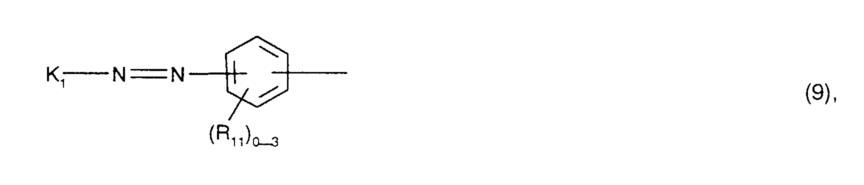 wobei für K₁ und (R₁₁)₀₋₃ die oben angegebenen Bedeutungen und Bevorzugungen gelten.

Für A₁, A₂ und A₃ als Reste eines Polyazofarbstoffes kommen insbesondere Reste eines Disazofarbstoffes, vorzugsweise Reste der Formel 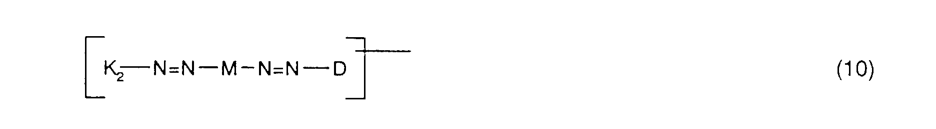 in Betracht, worin D ein Rest der Benzol- oder Naphthalinreihe, M der Rest einer Mittelkomponente der Benzol- oder Naphthalinreihe und K₂ ein Rest der Benzol- oder Naphthalinreihe oder ein heterocyclischer Rest ist.

Für den Rest K₂ gelten hierbei die oben für K₁ angegebenen Bedeutungen und Bevorzugungen.

Als Beispiele für Substituenten der Reste D und M seien die folgenden genannt: C₁-C₈-Alkyl, insbesondere C₁-C₄-Alkyl, wie Methyl, Aethyl, Propyl, Isopropyl, Butyl, Isobutyl, sek.-Butyl oder tert.-Butyl; C₁-C₈-Alkoxy, insbesondere C₁-C₄-Alkoxy, wie Methoxy, Aethoxy, Propoxy, Isopropoxy, Butoxy, Isobutoxy, sek.-Butoxy oder tert.-Butoxy; C₂-C₆-Alkanoylamino, insbesondere C₂-C₄-Alkanoylamino, wie z.B. Propionylamino oder insbesondere Acetylamino; Halogen, wie z.B. Fluor oder insbesondere Chlor; Hydroxyl; Cyano; Carbamoyl; Carboxyl; Sulfo; Phenyl; Amino; N-Mono- oder N,N-Di-C₁-C₄-Alkylamino. Hierbei können die genannten Phenylreste unsubstituiert oder z.B. durch C₁-C₄-Alkyl, C₁-C₄-Alkoxy, C₂-C₄-Alkanoylamino, Ureido, Halogen, Carboxyl oder Sulfo substituiert sein.

Bevorzugte Substituenten der Reste D und M sind C₁-C₄-Alkyl, C₁-C₄-Alkoxy, C₂-C₄-Alkanoylamino, Halogen, Hydroxyl, Cyano, Carbamoyl, Carboxyl, Sulfo, Amino oder N-Mono- oder N,N-Di-C₁-C₄-Alkylamino. Besonders bevorzugte Substituenten der Reste D und M sind C₁-C₄-Alkyl, C₁-C₄-Alkoxy, C₂-C₄-Alkanoylamino, Halogen, Hydroxyl, Sulfo, Amino oder N-Mono- oder N,N-Di-C₁-C₄-Alkylamino.

Besonders bevorzugt sind für A₁, A₂ und A₃ als Reste eines Disazofarbstoffes Reste der Formel 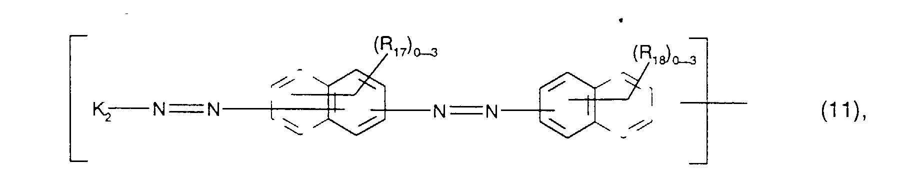 worin
für K₂ die oben angegebenen Bedeutungen und Bevorzugungen gelten und (R₁₇)₀₋₃ und (R₁₈)₀₋₃ unabhängig voneinander für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Cyano, Carbamoyl, Carboxyl, Sulfo, Amino und N-Mono- oder N,N-Di-C₁-C₄-Alkylamino stehen. Bevorzugt stehen (R₁₇)₀₋₃ und (R₁₈)₀₋₃ unabhängig voneinander für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Sulfo, Amino oder N-Mono- oder N,N-Di-C₁-C₄-Alkylamino. Ganz besonders bevorzugt stehen (R₁₇)₀₋₃ und (R₁₈)₀₋₃ unabhängig voneinander für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Sulfo und Amino.

Ganz besonders bevorzugt sind für A₁, A₂ und A₃ als Reste eines Disazofarbstoffes Reste der Formel 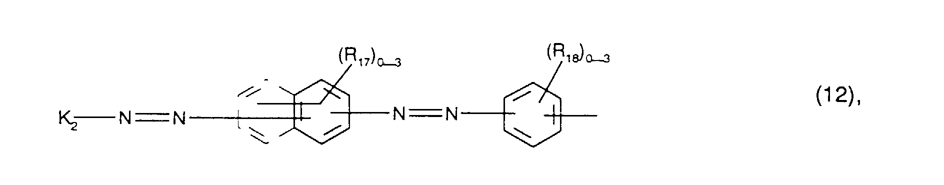 worin
für K₂, (R₁₇)₀₋₃ und (R₁₈)₀₋₃ die oben angegebenen Bedeutungen und Bevorzugungen gelten.

Für A₁, A₂ und A₃ als Reste eines Anthrachinonfarbstoffs kommen insbesondere solche der Formel 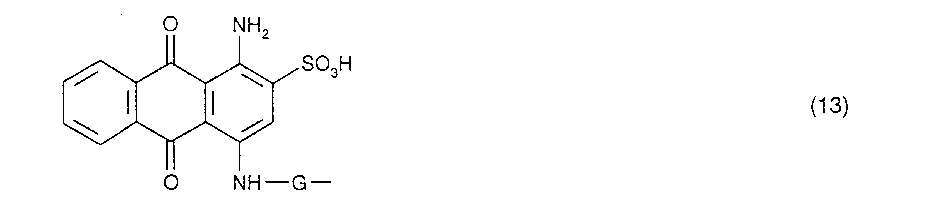 in Betracht, worin G einen unsubstituierten oder durch C₁-C₄-Alkyl, C₁-C₄-Alkoxy, Halogen, Carboxy oder Sulfo substituierten Phenylenrest oder einen Cyclohexylen-, Phenylenmethylen- oder C₂-C₆-Alkylenrest bedeutet.

Bevorzugt ist G ein unsubstituierter oder durch C₁-C₄-Alkyl, C₁-C₄-Alkoxy, Halogen, Carboxy oder Sulfo, insbesondere durch C₁-C₄-Alkyl oder Sulfo, substituierter Phenylenrest.

Von besonderer Bedeutung für A₁, A₂ und A₃ als Reste eines Anthrachinonfarbstoffs sind solche der Formel 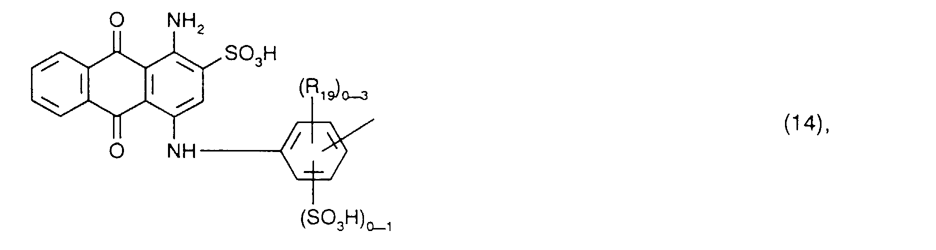 worin (R₁₉)₀₋₃ für 0 bis 3 gleiche oder voneinander verschiedene Substituenten ausgewählt aus der Gruppe C₁-C₄-Alkyl, C₁-C₄-Alkoxy, Halogen, Carboxy und Sulfo steht. Besonders bevorzugt ist hierbei R₁₉ C₁-C₄-Alkyl, insbesondere Methyl. Vorzugsweise enthalten die Reste der Formel (14) zwei Sulfogruppen.

Bei den Resten A₁, A₂ und A₃ handelt es sich vorzugsweise um Reste eines Monoazo-, Disazo- oder Anthrachinonfarbstoffes, wobei für diese genannten Reste die oben angegebenen Bedeutungen und Bevorzugungen gelten.

Bevorzugt sind A₁, A₂ und A₃ Reste der Formel (5), (10) oder (13). K₁ und K₂ sind hierbei vorzugsweise Reste der Formel (6) oder (7), insbesondere Reste der Formel (6) oder (8). Für die Reste R₁, R₂, R₃, R₄, R₅, R₆, X₁, X₂, X₃, Y₁ und L gelten hierbei die oben angegebenen Bedeutungen und Bevorzugungen.

Besonders bevorzugt sind A₁, A₂ und A₃ Reste der Formel (5), (11) oder (13). K₁ und K₂ sind hierbei vorzugsweise Reste der Formel (6) oder (7), insbesondere Reste der Formel (6) oder (8). Für die Reste R₁, R₂, R₃, R₄, R₅, R₆, X₁, X₂, X₃, Y₁ und L gelten hierbei die oben angegebenen Bedeutungen und Bevorzugungen.

Ganz besonders bevorzugt sind A₁, A₂ und A₃ Reste der Formel (9), (12) oder (14). K₁ und K₂ sind hierbei vorzugsweise Reste der Formel (6) oder (7), insbesondere Reste der Formel (6) oder (8). Für die Reste R₁, R₂, R₃, R₄, R₅, R₆, X₁, X₂, X₃, Y₁ und L gelten hierbei die oben angegebenen Bedeutungen und Bevorzugungen.

Bevorzugt sind Farbstoffmischungen, worin
R₁, R₂, R₃, R₄, R₅, R₆, R₇ und R₈ Wasserstoff oder C₁-C₄-Alkyl sind,
X₁, X₂ und X₃ gegebenenfalls durch C₁-C₄-Alkyl, C₁-C₄-Alkoxy, C₂-C₄-Alkanoylamino, Ureido, Halogen, Carboxy oder Sulfo substituiertes Phenyl sind,
B₁ ein C₁-C₁₀-Alkylenrest ist, welcher durch 1, 2 oder 3 Glieder aus der Gruppe -NH-,
-N(CH₃)- oder -O- unterbrochen sein kann und unsubstituiert oder durch Hydroxy, Sulfo, Sulfato, Cyano oder Carboxy substituiert ist,
W₁ Wasserstoff oder ein Rest der Formel -CO-R ist, wobei R gegebenenfalls durch C₁-C₄-Alkyl, C₁-C₄-Alkoxy, Halogen, Carboxy oder Sulfo substituiertes Phenyl oder insbesondere C₁-C₈-Alkyl ist, und
L ein Rest der Formel (4a), (4b) oder (4c) ist, wobei
R₉ und R₁₀ Wasserstoff oder C₁-C₄-Alkyl sind, und
B₂ die oben für B₁ angegebenen Bedeutungen hat. Für die Reste A₁, A₂ und A₃ gelten hierbei die oben angegebenen Bedeutungen und Bevorzugungen. R₂, R₅ und R₆ sind hierbei vorzugsweise C₁-C₄-Alkyl.

Besonders bevorzugt sind Farbstoffmischungen, worin
Y₁ ein Rest der Formel 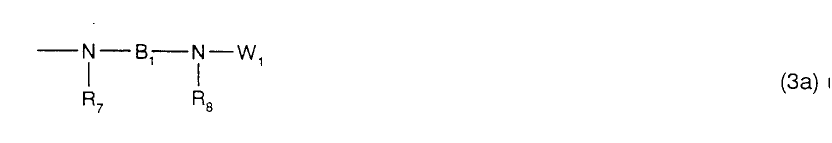 und
L ein Rest der Formel 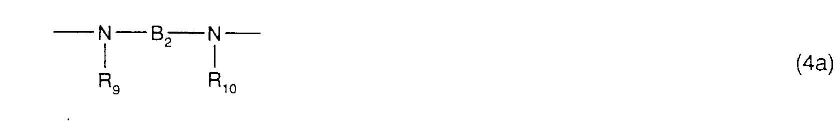 ist, oder
Y₁ ein Rest der Formel 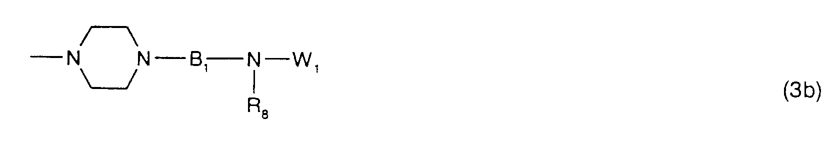 und
L ein Rest der Formel 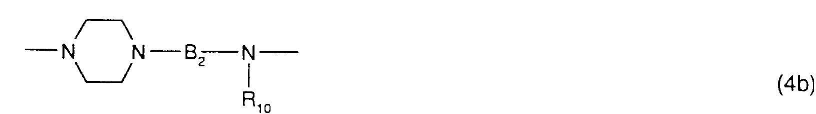 ist, oder
Y₁ ein Rest der Formel 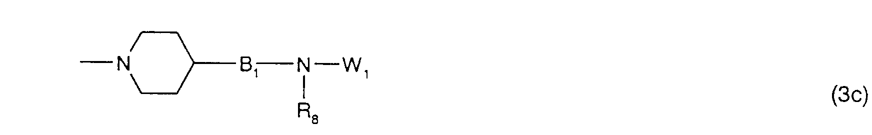 und
L ein Rest der Formel 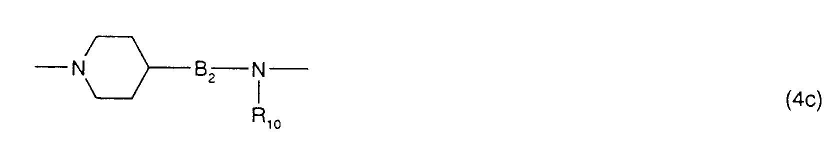 ist,
   wobei
   B₁ und B₂ identische Bedeutungen haben,
   R₇ und R₉ identische Bedeutungen haben, und
   R₈ und R₁₀ identische Bedeutungen haben.

Vorzugsweise haben hierbei jeweils die Reste A₁, A₂ und A₃; die Reste X₁, X₂ und X₅; die Reste R₁, R₃ und R₄; sowie die Reste R₂, R₅ und R₆ identische Bedeutungen. Bevorzugt sind hierbei B₁ und B₂ ein C₁-C₁₀-Alkylenrest, welcher durch 1, 2 oder 3 Glieder aus der Gruppe -NH-, -N(CH₃)- oder -O- unterbrochen sein kann und unsubstituiert oder durch Hydroxy, Sulfo, Sulfato, Cyano oder Carboxy substituiert ist,
R₇ und R₉ Wasserstoff oder C₁-C₄-Alkyl,
R₈ und R₁₀ Wasserstoff oder C₁-C₄-Alkyl, und
W₁ Wasserstoff oder ein Rest der Formel -CO-R, wobei R gegebenenfalls durch C₁-C₄-Alkyl, C₁-C₄-Alkoxy, Halogen, Carboxy oder Sulfo substituiertes Phenyl oder insbesondere C₁-C₈-Alkyl ist.

Die Farbstoffe der Formel (1) können z.B. erhalten werden, indem man Cyanurhalogenid, insbesondere Cyanurfluorid oder vorzugsweise Cyanurchlorid, mit einer Verbindung der Formel

A₁-NHR₁ (15),

einer Verbindung der Formel

X₁-NHR₂ (16)

und einer Verbindung der Formel

Y₁-H (17)

umsetzt und gegebenenfalls eine Umwandlungsreaktion anschliesst, wobei A₁, X₁, Y₁, R₁ und R₂ die unter Formel (1) angegebenen Bedeutungen haben.

Vorzugsweise setzt man Cyanurhalogenid zunächst mit in etwa stöchiometrischen Mengen einer Verbindung der Formel (15) bei einer Temperatur von -5 bis 20°C, vorzugsweise 0 bis 5°C um, wobei der pH-Wert durch Zugabe geeigneter Basen, z.B. Alkalimetallbasen wie Lithium-, Natrium- oder Kaliumhydroxid oder -carbonat, neutral bis sauer, vorzugsweise bei 2 bis 7, insbesondere 2 bis 4, gehalten wird. Zu dem erhaltenen Reaktionsgemisch werden zweckmässigerweise in etwa stöchiometrische Mengen einer Verbindung der Formel (16) gegeben und diese bei leicht erhöhter Temperatur, vorzugsweise bei 10 bis 60°C, insbesondere 15 bis 30°C, und einem neutralen bis leicht sauren pH-Wert, der vorzugsweise 6 bis 7 beträgt, mit dem Triazinderivat zur Reaktion gebracht.

Eine weitere Möglichkeit besteht darin, Cyanurhalogenid zunächst mit einem Vorprodukt der Verbindung der Formel (15), wie z.B. einer Diazokomponente im Falle von Azofarbstoffresten, umzusetzen und dann, beispielsweise durch Diazotierung und Kupplung, zum entsprechenden Farbstoffrest A₁ umzusetzen. Diese Umsetzung zum Farbstoffrest kann z.B. vorzugsweise direkt im Anschluss an die Umsetzung von Cyanurhalogenid mit dem Vorprodukt erfolgen, oder aber auch im weiteren Verlauf der Synthese des Farbstoffs der Formel (1).

Die gemäss den oben beschriebenen Verfahren erhältlichen Triazinylverbindungen enthalten noch ein Halogenatom, welches durch Reaktion mit einer Verbindung der Formel (17) bei erhöhter Temperatur, vorzugsweise 20 bis 70°C, und einem neutralen bis leicht alkalischen pH-Wert, der je nach eingesetzter Verbindung der Formel (17) z.B. 7 bis 9 beträgt, in eine Gruppe Y₁ umgewandelt werden kann. Vorteilhafterweise setzt man einen Ueberschuss der Verbindung der Formel (17) ein.

Als Umwandlungsreaktion kommt insbesondere eine Acylierungsreaktion in Betracht, wobei ein Rest W₁ der Formel -CO-R eingeführt wird.

Hierbei geht man wie oben beschrieben vor und verwendet eine Verbindung der Formel (17), worin W₁ Wasserstoff bedeutet. Das erhaltene Reaktionsprodukt wird anschliessend mit einer Verbindung der Formel

Hal-CO-R (18)

umgesetzt, worin Hal Halogen, insbesondere Brom oder Chlor, bedeutet und R die oben angegebenen Bedeutungen hat.

Für die Einführung eines Restes der Formel -CO-R, worin R Methyl ist, verwendet man vorzugsweise Essigsäureanhydrid.

Die Umsetzung mit Verbindungen der oben genannten Formel (18) kann generell in dipolaren aprotischen Lösungsmitteln, wie z.B. Dimethylformamid, Dimethylsulfoxid oder N-Methylpyrrolidon, in Gegenwart einer Base, wie beispielsweise einem Alkalicarbonat oder Alkalihydroxid, z.B. Natriumcarbonat, Kaliumcarbonat oder Natriumhydroxid, bei einer Temperatur von z.B. 30 bis 80°C, erfolgen.

Die Umsetzung mit Essigsäureanhydrid erfolgt in der Regel in wässrigem Medium, in Gegenwart einer Base, wie beispielsweise einem Alkalicarbonat oder Alkalihydroxid, z.B. Natriumcarbonat, Kaliumcarbonat oder Natriumhydroxid, bei einer Temperatur von z.B. 20 bis 60°C, insbesondere 30 bis 50°C, und einem pH-Wert von z.B. 4 bis 7, insbesondere 5 bis 6.

Farbstoffe der Formel (2) können z.B. erhalten werden, indem man eine Verbindung der Formel

H-L-H (19)

in beliebiger Reihenfolge mit einer Verbindung der Formel 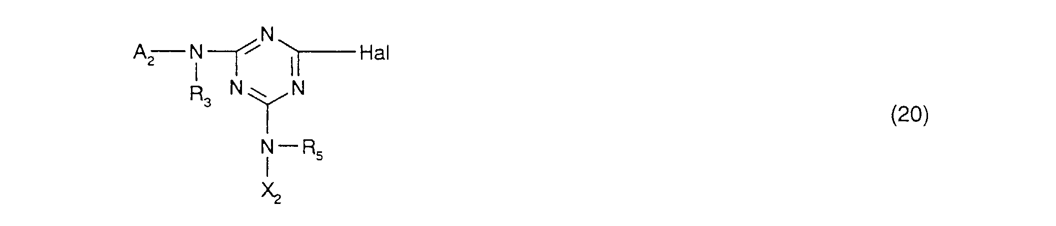 und einer Verbindung der Formel 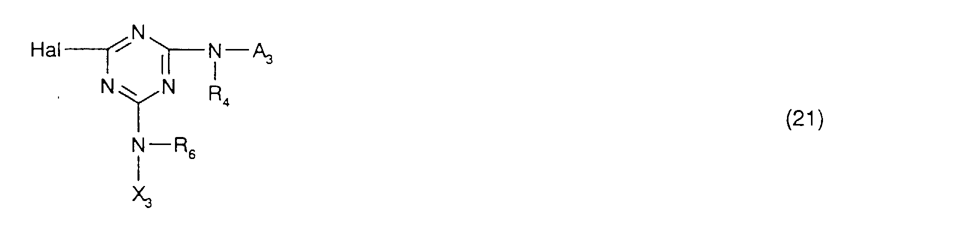 umsetzt, wobei R₃, R₄, R₅, R₆, A₂, A₃, X₂, X₃ und L die oben unter Formel (2) angegebenen Bedeutungen haben und Hal Halogen, insbesondere Fluor oder vorzugsweise Chlor, bedeutet.

Die Reaktion der Verbindung der Formel (19) mit den Verbindungen der Formeln (20) und (21) wird vorzugsweise bei leicht erhöhter Temperatur, vorteilhaft z.B. bei 30 bis 80°C, und einem pH-Wert von z.B. 7 bis 10, durchgeführt, wobei man zweckmässig in etwa stöchiometrische Mengen der Verbindungen der Formeln (20) und (21) einsetzt. Handelt es sich bei den Verbindungen der Formeln (20) und (21) um identische Verbindungen, so setzt man vorteilhaft ca. 2 Mol-Aequivalente der Verbindung der Formel (20) ein und setzt diese mit ca.1 Mol-Aequivalent der Verbindung der Formel (19) um.

Farbstoffmischungen, welche einen Farbstoff der Formel (1) zusammen mit einem Farbstoff der Formel (2) enthalten, können z.B. erhalten werden, indem man eine Verbindung der Formel (20) mit einer Verbindung der Formel (19) umsetzt. Hierbei werden die Verbindungen der Formeln (20) und (19) in einem molaren Verhältnis eingesetzt, welches grösser als 1:1 und geringer als 2:1 ist. Vorzugsweise setzt man die Verbindungen der Formeln (20) und (19) hierbei in einem molaren Verhältnis von 9:8 bis 15:8, insbesondere in einem molaren Verhältnis von 10:8 bis 14:8 ein. Die Einführung eines Restes W₁ der Formel -CO-R in den Farbstoff der Formel (1) der Farbstoffmischung kann anschliessend wie oben angegeben erfolgen.

Die in den obigen Verfahren eingesetzten Verbindungen sind bekannt oder können in Analogie zu bekannten Verbindungen erhalten werden.

Die europäische Patentanmeldung EP-A-0 478 503 beschreibt ebenfalls Mischungen aus mono- und bichromophoren Triazinfarbstoffen, die jedoch grundsätzlich faserreaktive Gruppentragen.

Die europäische Patentanmeldung EP-A-0 693 538 beschreibt Mischungen mindestens zweier triazingruppenhaltiger Säurefarbstoffe, die jeweils zwei bzw. vier Chromophore im Molekül enthalten.

Die Farbstoffmischungen der Farbstoffe der Formeln (1) und (2) können auch z.B. durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen z.B. durch Zerstäubungstrocknung der wässrigen Farbstoffmischungen hergestellt werden.

Die Farbstoffmischungen enthalten bevorzugt 5 bis 95 Gew.%, insbesondere 10 bis 90 Gew.-% und vorzugsweise 20 bis 80 Gew.% eines Farbstoffs der Formel (1), bezogen auf die Gesamtmenge der Farbstoffe der Formeln (1) und (2). Besonders bevorzugt enthalten die Farbstoffmischungen 30 bis 70 Gew.%, insbesondere 40 bis 60 Gew.-% eines Farbstoffs der Formel (1), bezogen auf die Gesamtmenge der Farbstoffe der Formeln (1) und (2).

Die Farbstoffe der Formeln (1) und (2) liegen entweder in der Form ihrer freien Säure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die Bedeutung Sulfo umfasst generell die freie Säureform (-SO₃H) als auch die Salzform.

Bei den Farbstoffen der Formeln (1) und (2) handelt es sich um anionische Säurefarbstoffe. In den Farbstoffen der Formeln (1) und (2) ist die Zahl der anionischen Gruppen, insbesondere die Zahl der Sulfogruppen, grösser oder gleich der Zahl der kationischen Gruppen. Vorzugsweise ist die Zahl der anionischen Gruppen grösser als die Zahl der kationischen Gruppen. Unter kationischen Gruppen sind solche zu verstehen, welche unter den üblichen Färbebedingungen eine kationische Ladung tragen. Als Beispiele seien aliphatisch gebundene Aminoreste genannt. Die im Triazinring vorhandenen sowie die an den Triazinrest gebundenen Stickstoffatome tragen keine kationische Ladung. Die Gesamtzahl der Sulfo- und Sulfatogruppen der Farbstoffe der Formel (1) ist vorzugsweise grösser als eins. Bevorzugt ist die Gesamtzahl der Sulfo- und Sulfatogruppen der Farbstoffe der Formel (1) zwei bis vier, insbesondere zwei oder drei und vorzugsweise zwei. Die Gesamtzahl der Sulfo- und Sulfatogruppen der Farbstoffe der Formel (2) ist vorzugsweise grösser als zwei. Bevorzugt ist die Gesamtzahl der Sulfo- und Sulfatogruppen der Farbstoffe der Formel (2) drei bis acht, insbesondere vier bis acht und vorzugsweise vier.

Die erfindungsgemässen Farbstoffmischungen eignen sich nach an sich bekannten Methoden zum Färben und Bedrucken, insbesondere von stickstoffhaltigen oder hydroxygruppenhaltigen Fasermaterialien, wie z.B. textilen Fasermaterialien aus Cellulose, Seide und insbesondere Wolle und synthetischen Polyamiden. Bevorzugt ist das Färben oder Bedrucken von natürlichen oder synthetischen Polyamidfasermaterialien. Die erfindungsgemässen Farbstoffmischungen können in allgemein üblicher, gegebenenfalls zuvor aufbereiteter Form zum Färben oder Bedrucken verwendet werden. Man erhält egale Färbungen mit guten Allgemeinechtheiten, insbesondere guter Reib-, Nass-, Nassreib- und Lichtechtheit. Ferner sind die erfindungsgemässen Farbstoffmischungen gut wasserlöslich und gut mit anderen Farbstoffen kombinierbar. Das oben genannte Textilmaterial kann in den verschiedensten Verarbeitungsformen vorliegen, wie z.B. als Faser, Garn, Gewebe oder Gewirke.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Herstellungsbeispiel 1:

19,1 Teile 1,3-Phenylendiamin-4-sulfonsäure (98,6%) werden in 100 Teilen Wasser und 52 Teilen einer wässrigen, 2-normalen Natriumhydroxidlösung bei einem pH-Wert von 7 gelöst und innerhalb von 50 Minuten, bei einer Temperatur von 5°C, in ein Gemisch bestehend aus 18,5 Teilen Cyanurchlorid, 100 Teilen Eis und 50 Teilen Wasser getropft. Während des Zutropfens wird der pH bei einem Wert von 3 bis 3,5 gehalten. Anschliessend wird mit 50 Teilen einer wässrigen, 2-normalen Natriumhydroxidlösung der pH-Wert innerhalb von 70 Minuten auf 7 erhöht. Nach einer Stunde werden 25 Teile Salzsäure (37%) und 200 Teile Wasser zugegeben und, bei einer Temperatur von 5 bis 15°C, 25 Teile einer wässrigen, 4-molaren Natriumnitritlösung innerhalb von 25 Minuten zudosiert. Nach zwei Stunden wird das überschüssige Natriumnitrit mit Sulfaminsäure zerstört. Wärenddessen werden 22,5 Teile 2-Naphthylamin-5-sulfonsäure in 100 Teilen Wasser und 52 Teilen einer wässrigen, 2-normalen Natriumhydroxidlösung bei einem pH-Wert von 7 gelöst und innerhalb von 30 Minuten in das Reaktionsgemisch getropft. Darauf wird der pH mittels 112 Teilen einer wässrigen, 2-normalen Natriumhydroxidlösung innerhalb von 80 Minuten auf einen Wert von 7 gestellt. Anschliessend wird eine Lösung von 12,2 Teilen N-Ethylanilin in 100 Teilen 1-molarer Salzsäure innerhalb von 15 Minuten zugetropft, gefolgt von der Zugabe von 101 Teilen einer wässrigen, 2-normalen Natriumhydroxidlösung innerhalb von 50 Minuten. Die dunkelrote Reaktionslösung wird mit 500 Teilen einer wässrigen Natriumchloridlösung versetzt, das ausgefallene Produkt abfiltriert, mit 10%-iger wässriger Natriumchloridlösung gewaschen und im Vakuum bei einer Temperatur von 70°C getrocknet. Man erhält 52,5 Teile einer Zwischenverbindung der Formel 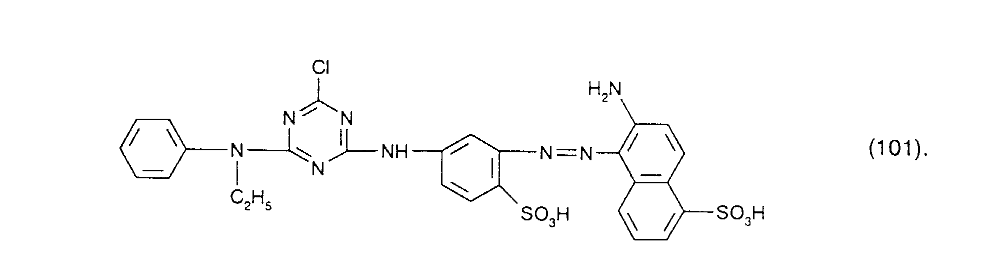 10 Teile des Zwischenprodukts der Formel (101) werden in 200 Teilen Wasser gelöst und innerhalb von 4 Stunden, bei einer Temperatur von 40°C, in eine Lösung von 14 Teilen 3-Methylaminopropylamin in 14 Teilen Wasser getropft. Man lässt eine Stunde bei einer Temperatur von 40°C nachrühren und gibt anschliessend 25 Teile Salzsäure hinzu. Das ausgefallene Produkt wird abfiltriert und mit Wasser gewaschen. Das feuchte Nutschgut wird in 300 Teile Wasser bei einer Temperatur von 70°C gegeben und mit 10 Teilen einer wässrigen, 1-normalen Natriumhydroxidlösung neutralisiert. Das Produkt wird mit 30 Teilen Natriumchlorid ausgesalzen, bei einer Temperatur von 40°C abfiltriert und im Vakuum bei einer Temperatur von 50°C getrocknet. Man erhält 8,8 Teile eines Farbstoffs, welcher in Form der freien Säure der Verbindung der Formel 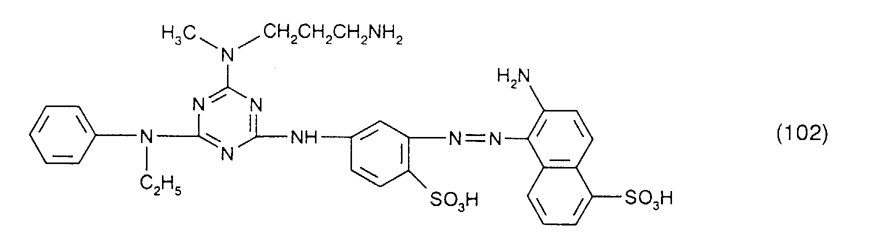 entspricht. Der erhaltene Farbstoff der Formel (102) färbt Wolle und synthetisches Polyamidfasermaterial in orangen Farbtönen.

### Herstellungsbeispiele 2 bis 25:

In analoger Weise zu den Angaben in Herstellungsbeispiel 1 können die in der folgenden Tabelle 1 in Form der freien Säuren angegebenen Farbstoffe erhalten werden, welche Wolle und synthetisches Polyamidfasermaterial in den in Spalte 3 angegebenen Farbtönen färben.

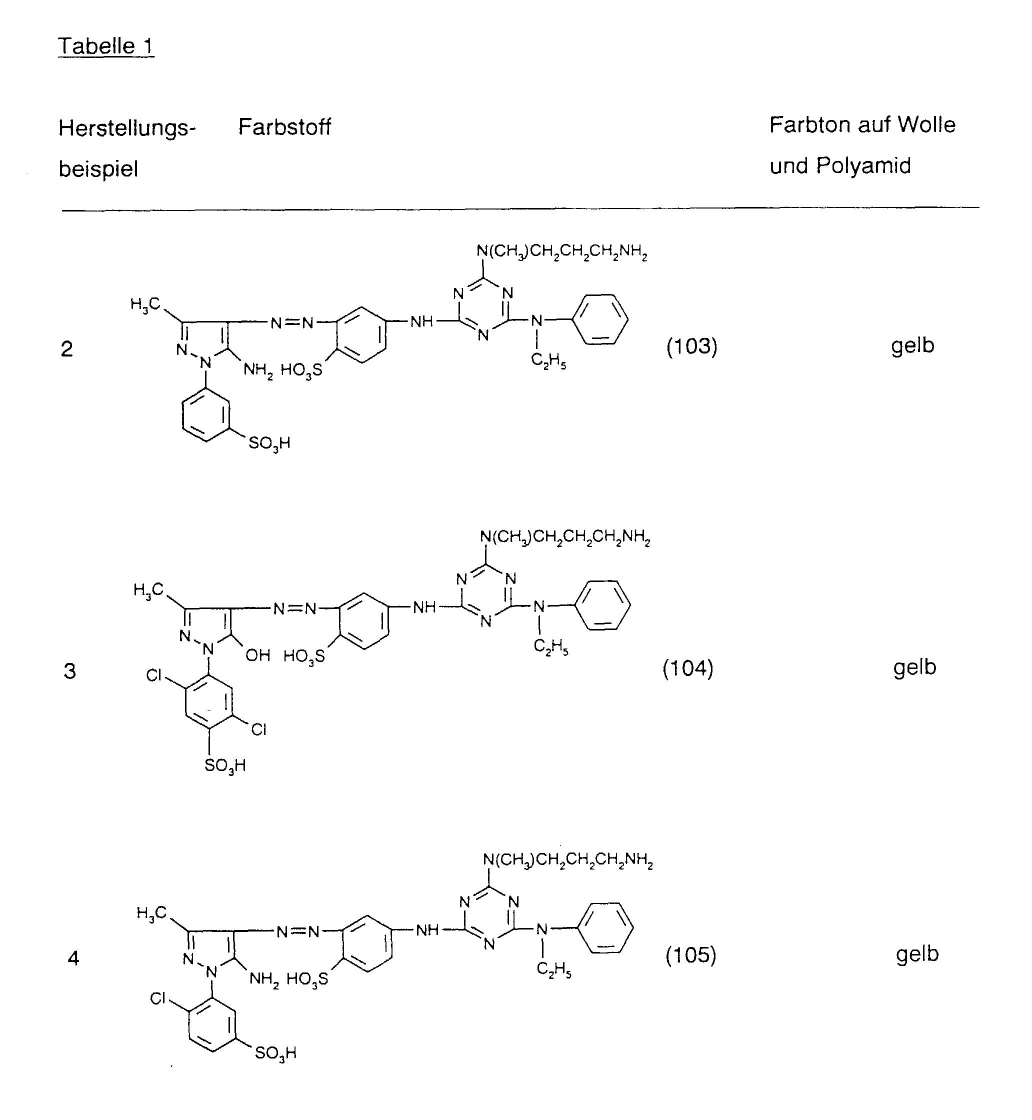

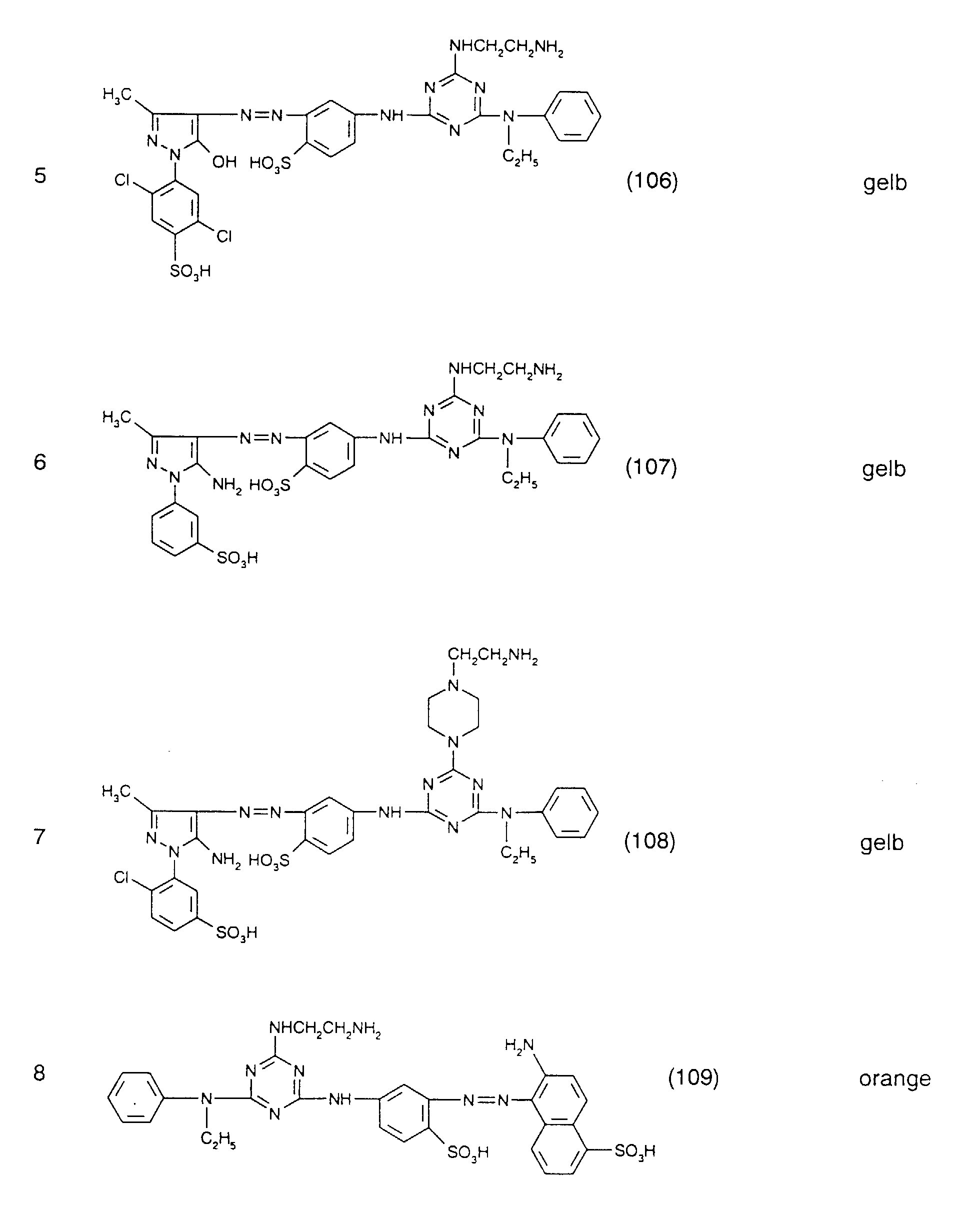

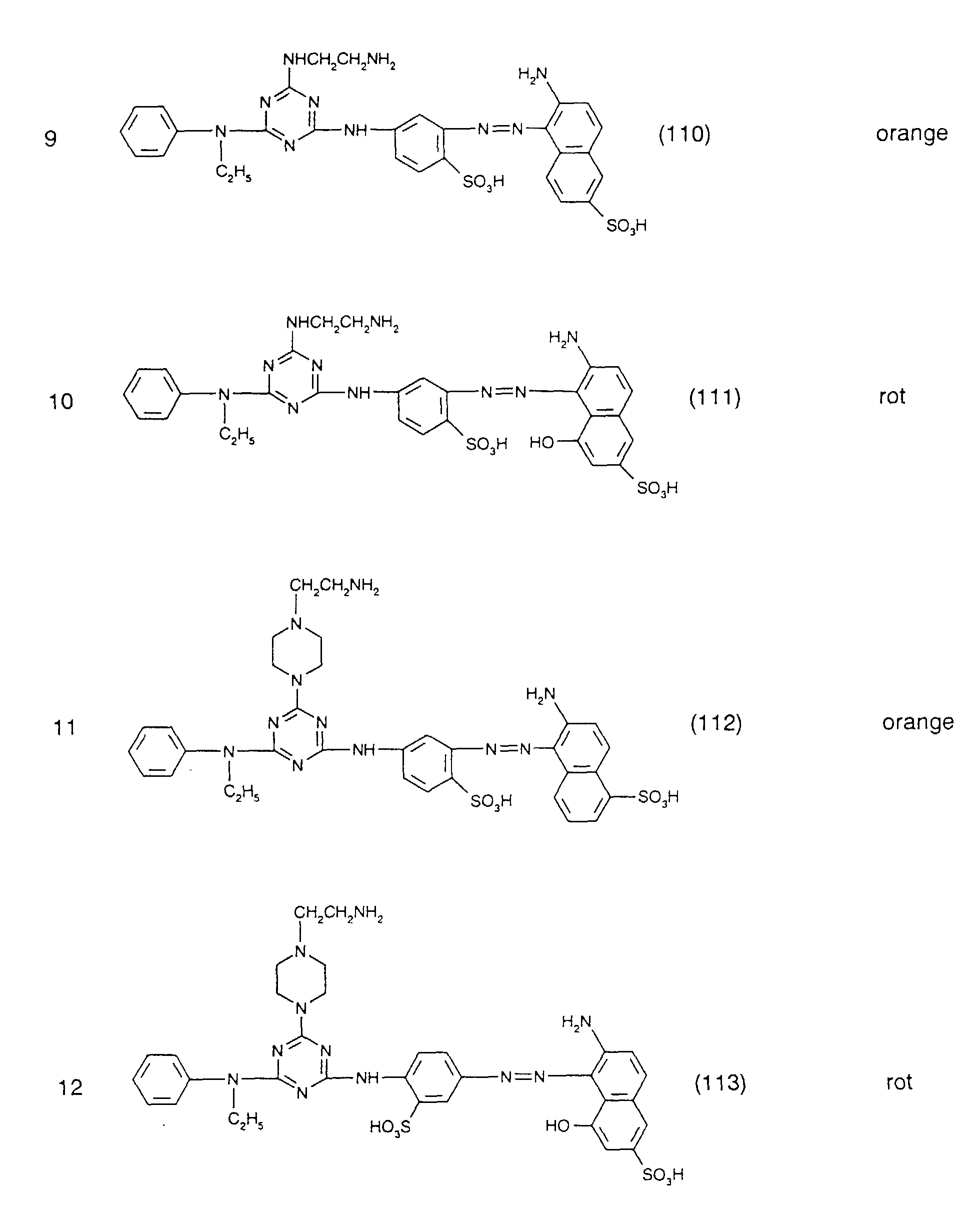

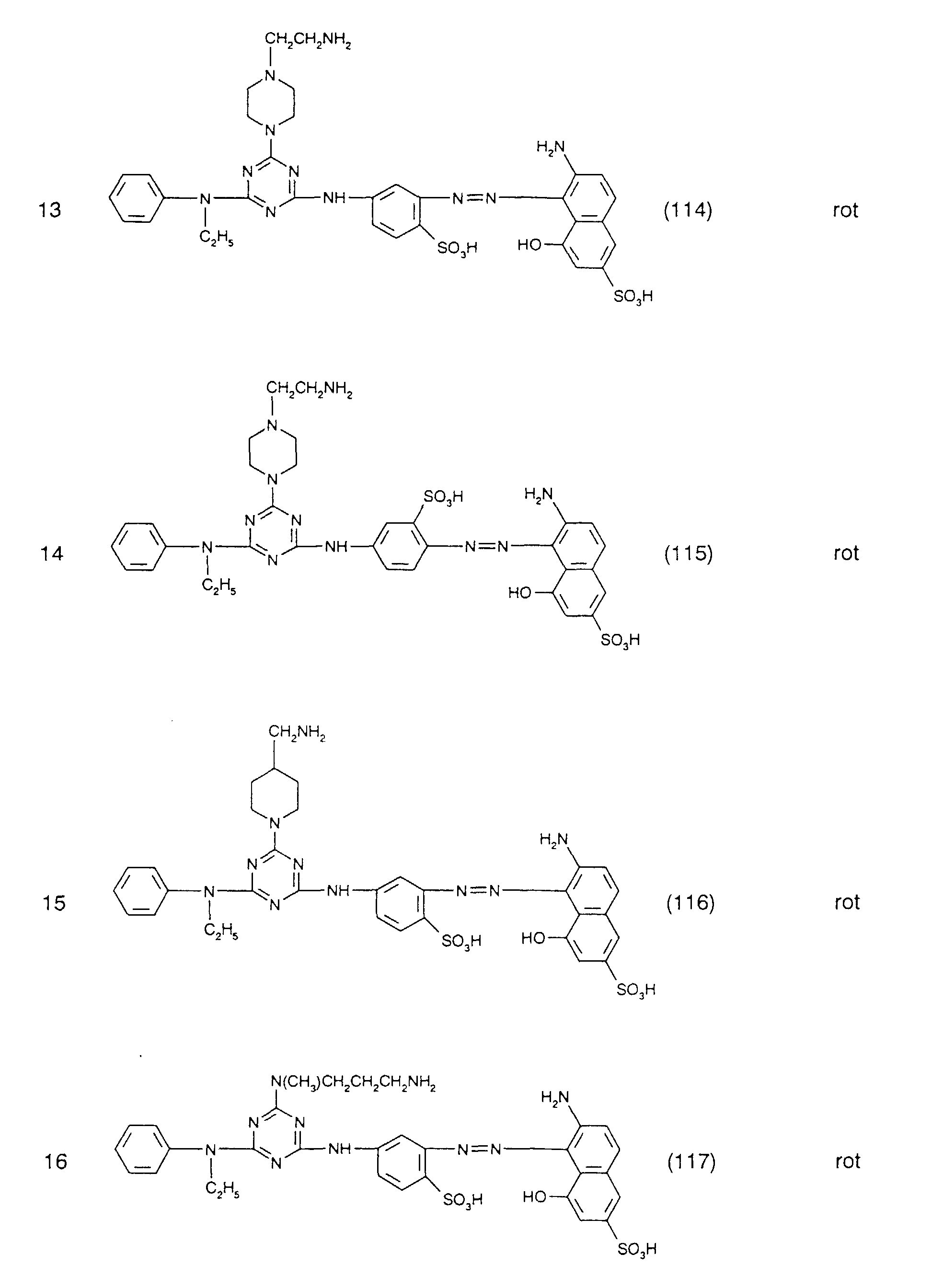

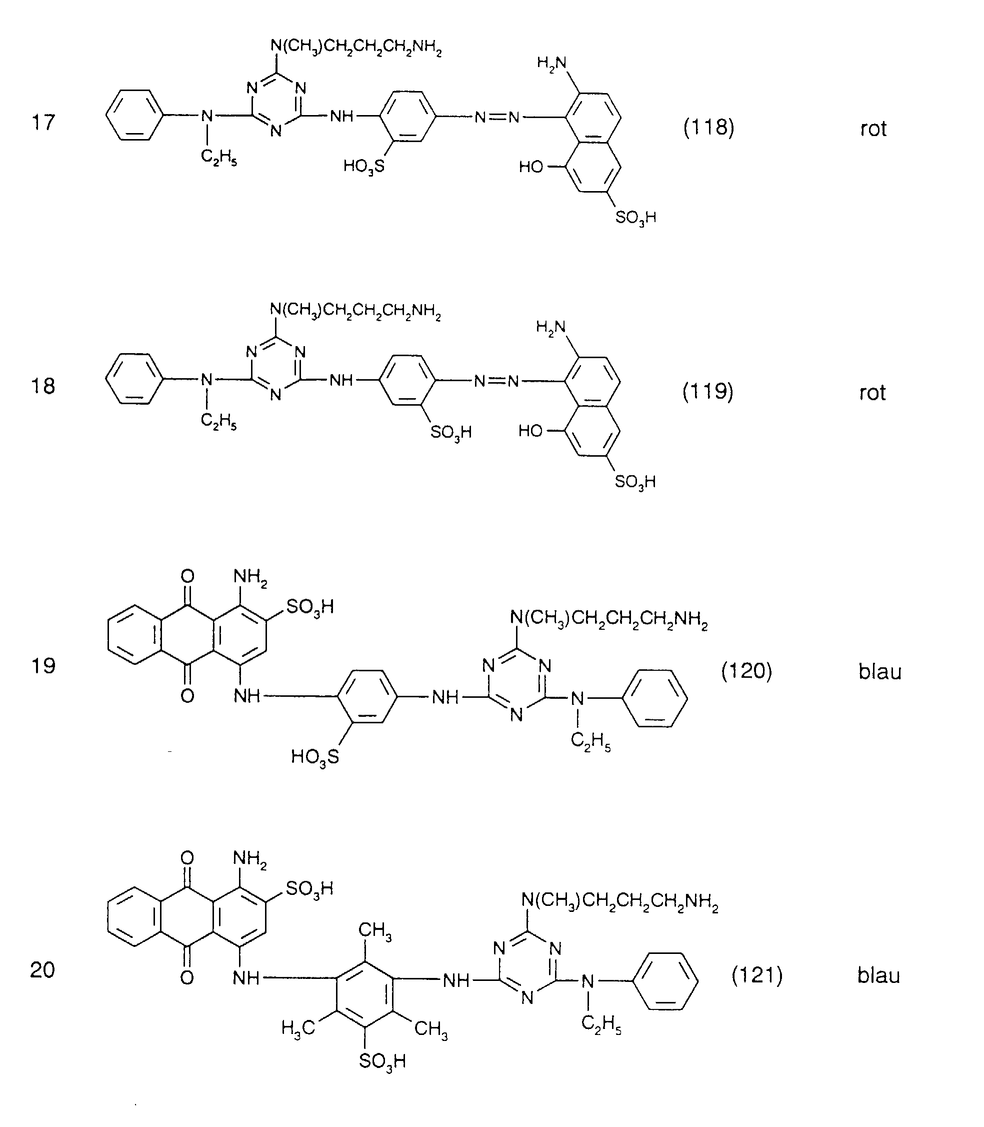

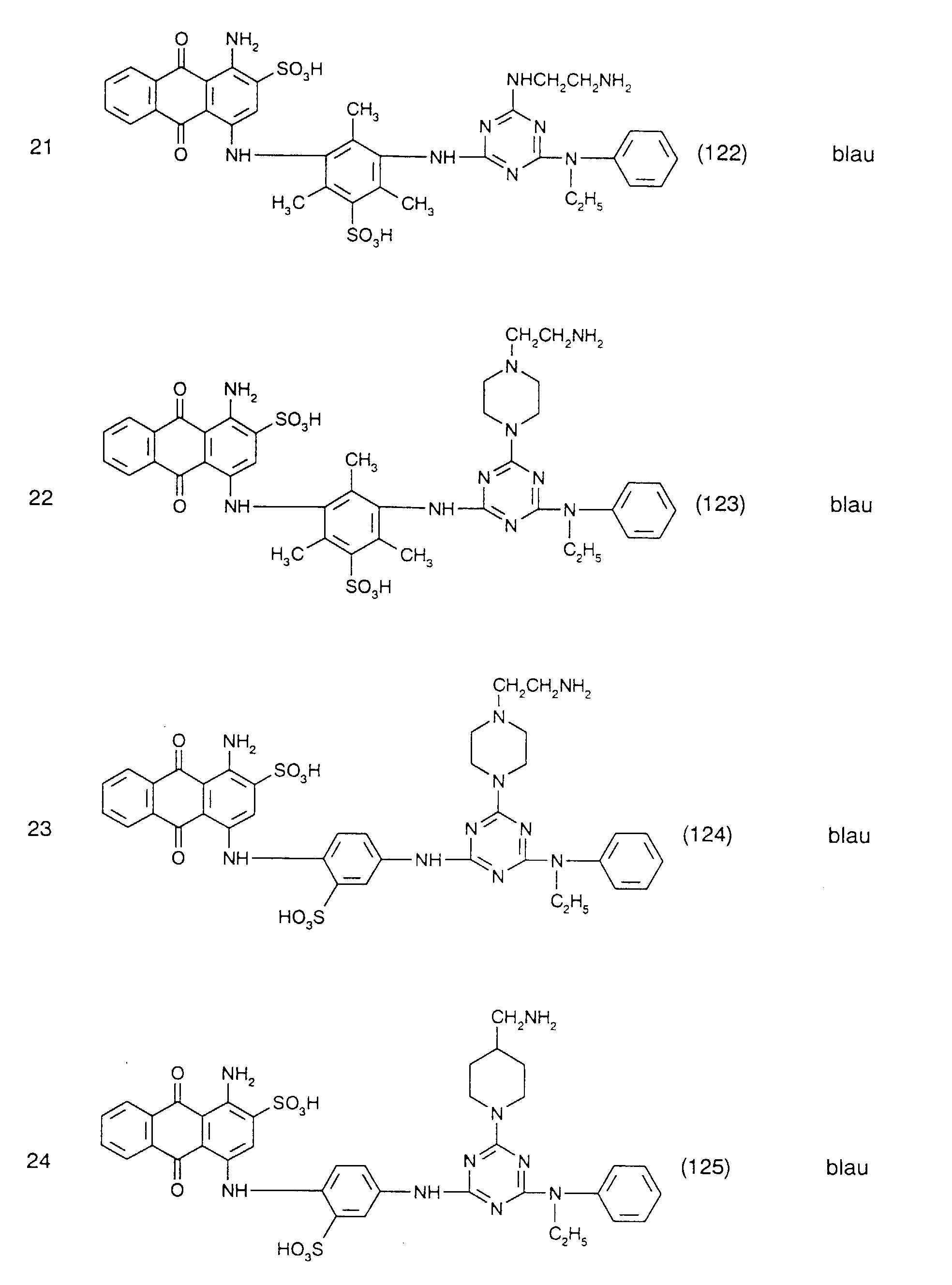

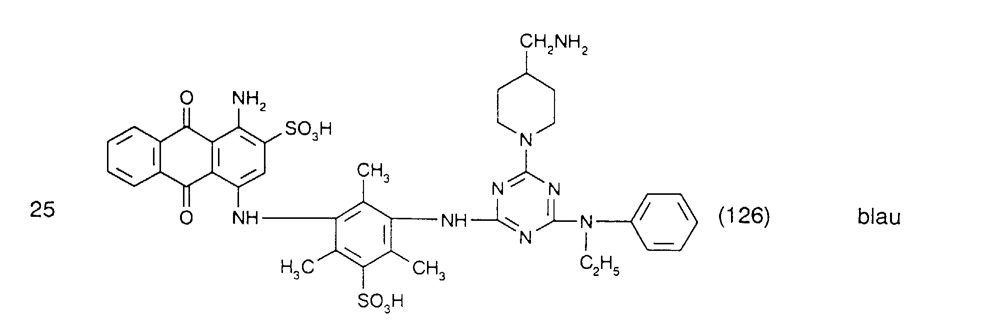

### Herstellungsbeispiel 26:

6,5 Teile des Farbstoffs der Formel 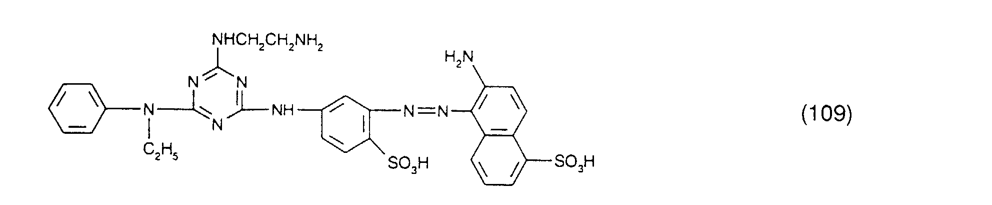 werden bei einer Temperatur von 35 bis 40°C und einem pH-Wert von 6 in 100 Teilen Wasser und 10 Teilen Dioxan gelöst, wobei die Einstellung des pH-Wertes mittels Salzsäure (37 %-ig) erfolgt. Man tropft innerhalb von 30 Minuten 6 Teile Essigsäureanhydrid hinzu, wobei der pH mittels 1-molarer, wässriger Natriumcarbonatlösung bei einem Wert zwischen 5 und 6 gehalten wird. Die Reaktionslösung wird eingedampft und der Rückstand im Vakuum bei einer Temperatur von 70°C getrocknet. Man erhält einen Farbstoff, welcher in Form der freien Säure der Verbindung der Formel 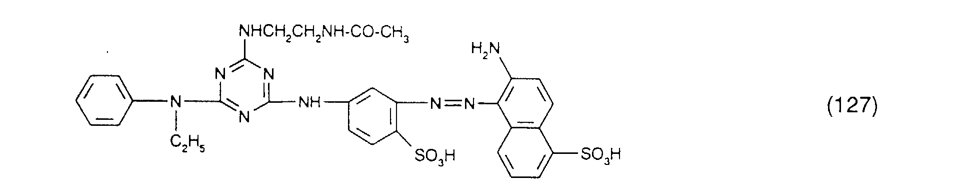 entspricht. Der Farbstoff der Formel (127) färbt Wolle und synthetisches Polyamidfasermaterial in orangen Farbtönen.

### Herstellungsbeispiele 27 bis 50:

In analoger Weise zu den Angaben in Herstellungsbeispiel 26 können die in der folgenden Tabelle 2 in Form der freien Säuren angegebenen Farbstoffe erhalten werden, welche Wolle und synthetisches Polyamidfasermaterial in den in Spalte 3 angegebenen Farbtönen färben.

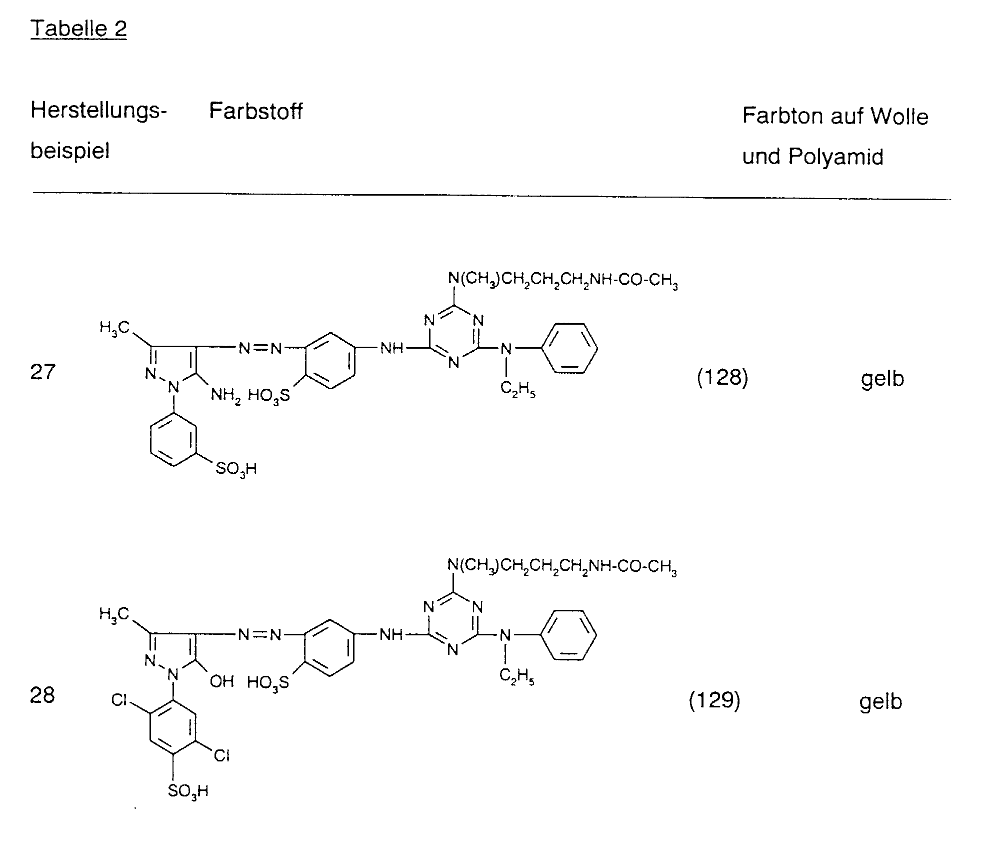

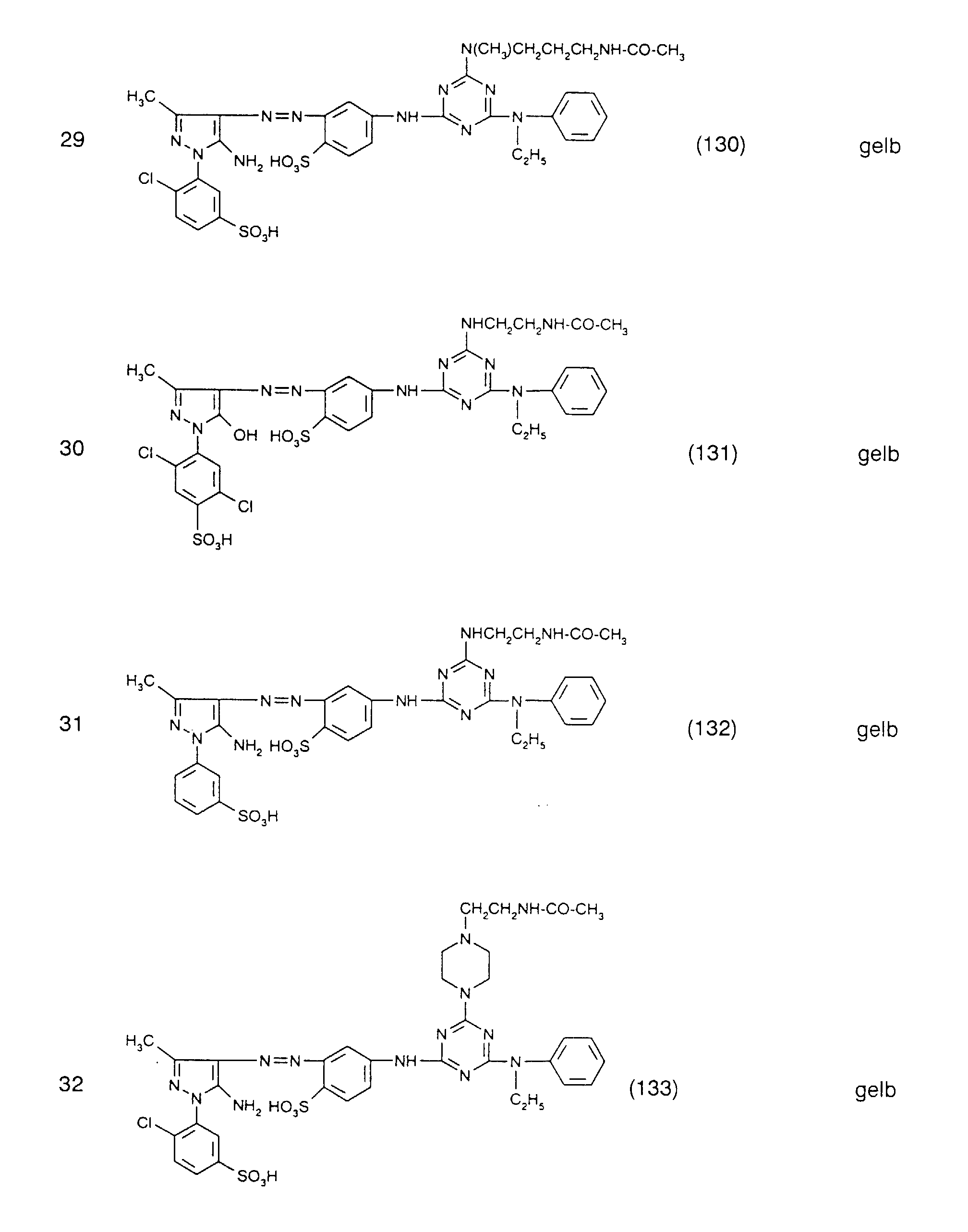

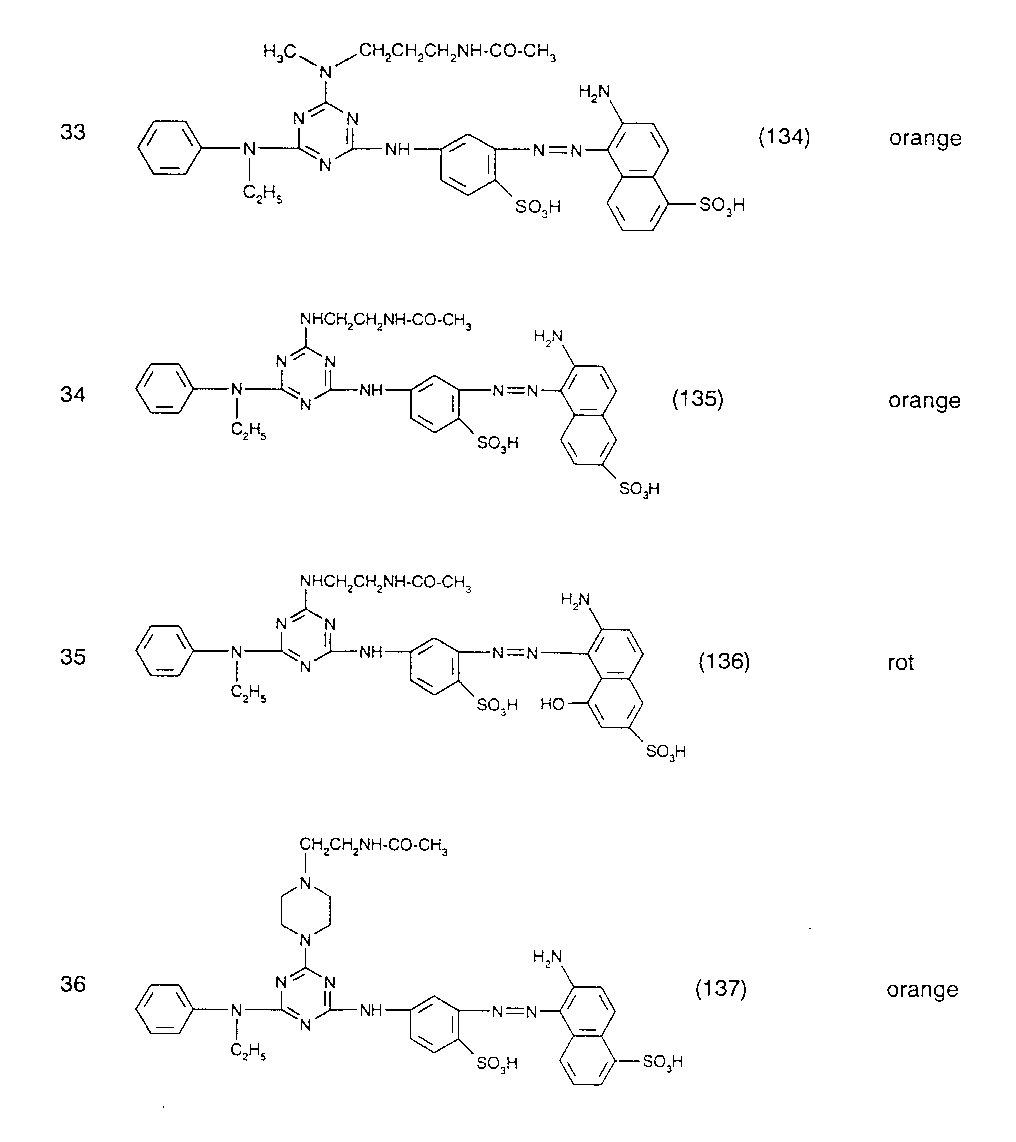

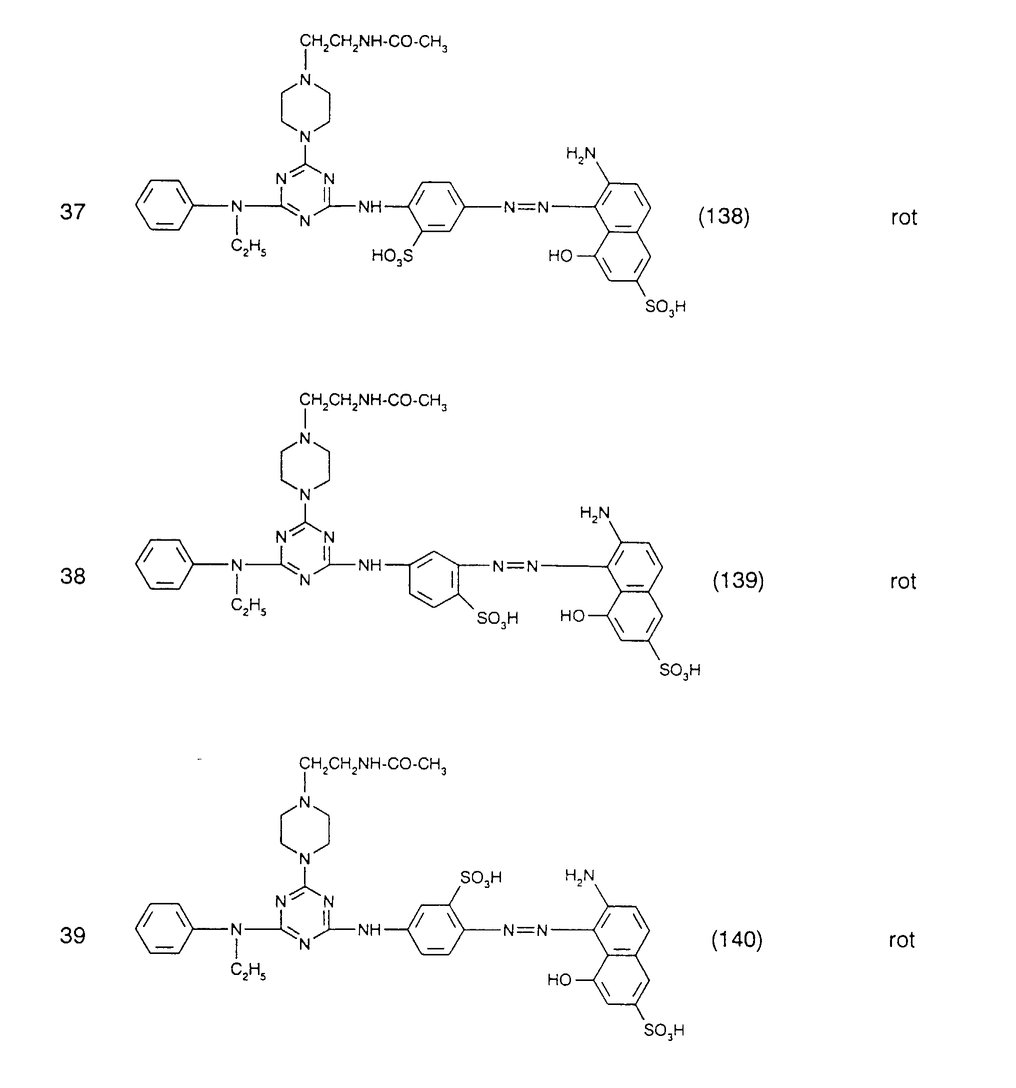

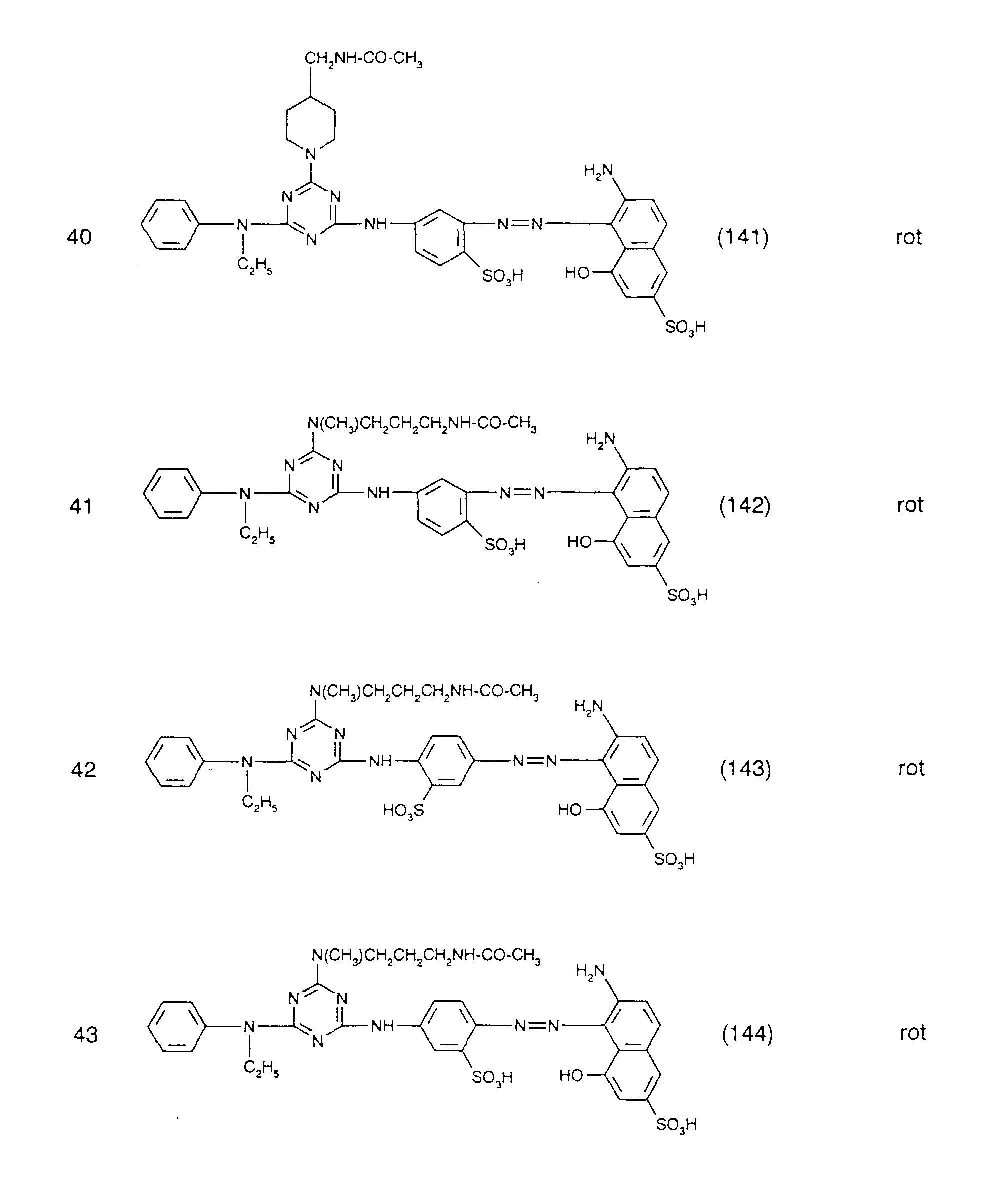

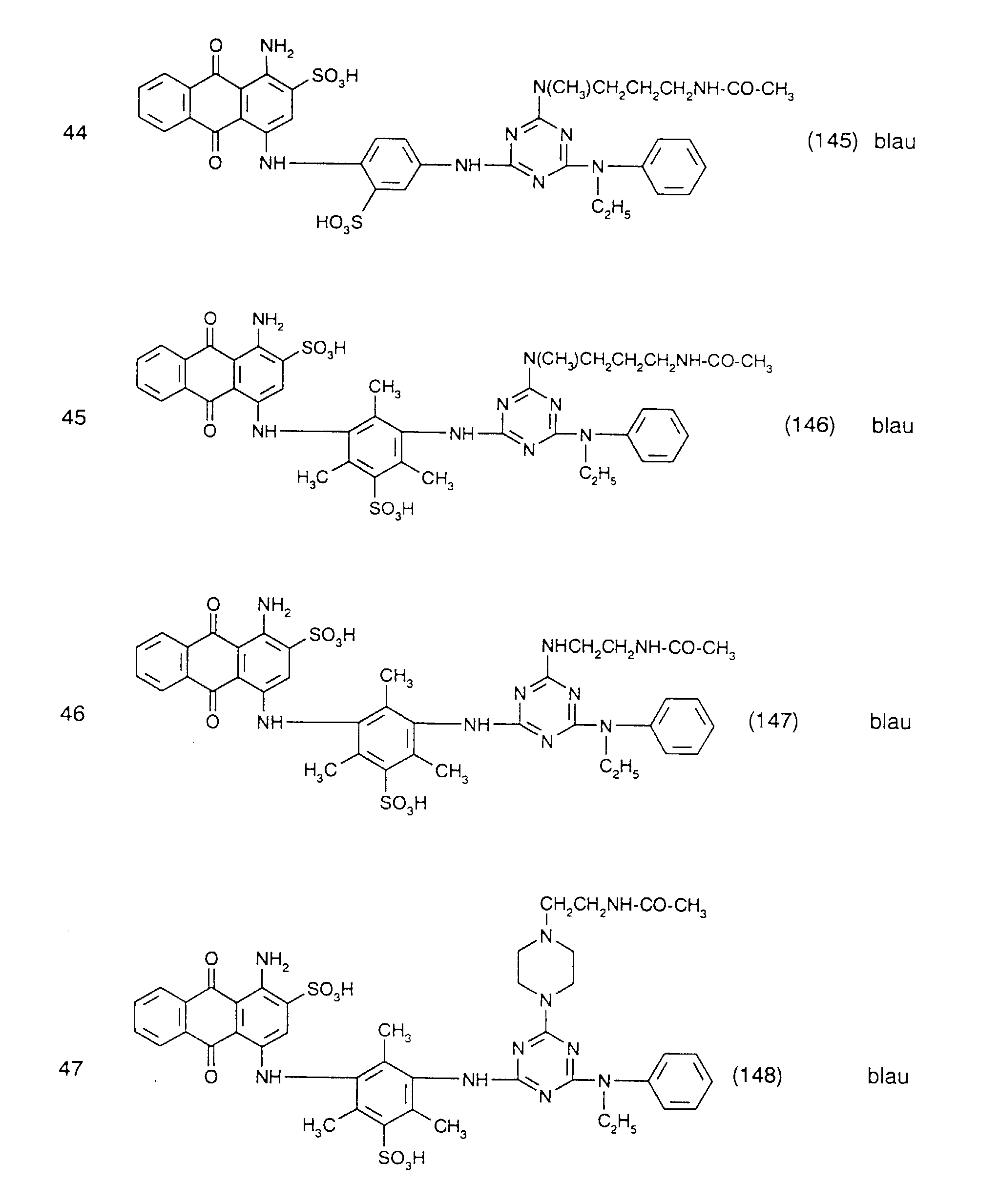

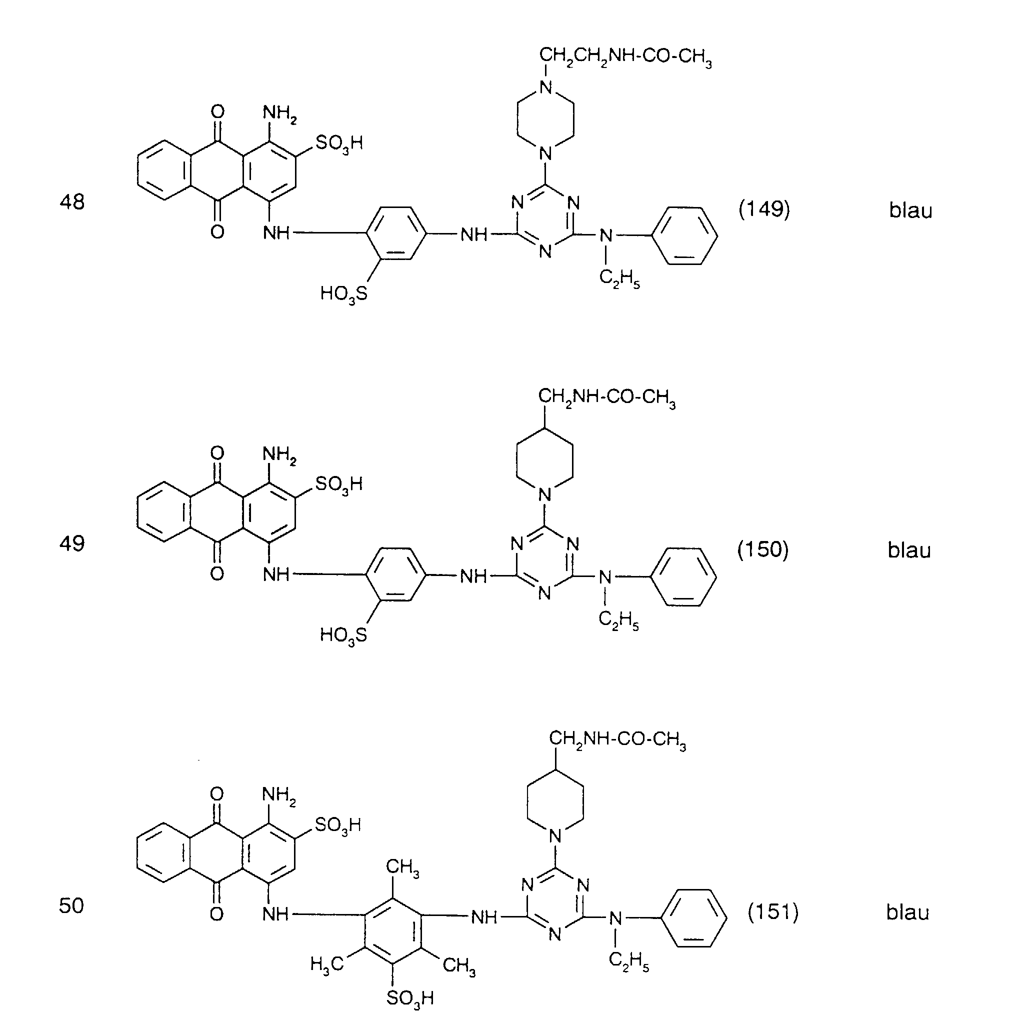

### Herstellungsbeispiel 51:

7,5 Teile der Verbindung der Formel 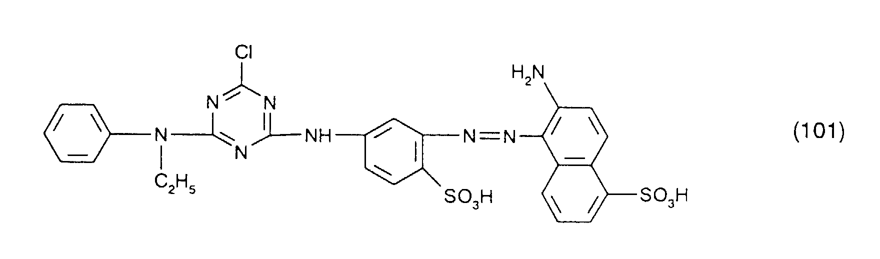 werden in 150 Teilen Wasser gelöst und mit 0,58 Teilen Diaminohexan versetzt. Man erwärmt auf eine Temperatur von 75°C und rührt während 12 Stunden bei einem pH-Wert von 9. Nach Abdampfen des Wassers am Rotationsverdampfer wird das feuchte Produkt im Vakuum bei einer Temperatur von 70°C getrocknet. Man erhält 7,6 Teile eines Farbstoffs, welcher in Form der freien Säure der Verbindung der Formel 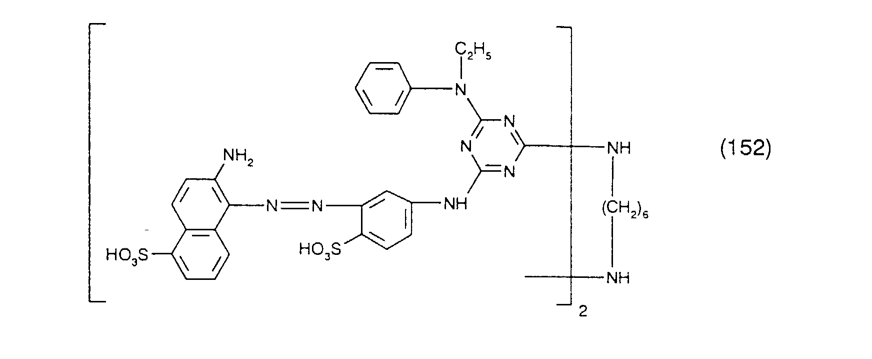 entspricht. Der Farbstoff der Formel (152) färbt Wolle und synthetisches Polyamidfasermaterial in orangen Farbtönen.

### Herstellungsbeispiele 52 bis 81:

In analoger Weise zu den Angaben in Herstellungsbeispiel 51 können die in der folgenden Tabelle 3 in Form der freien Säuren angegebenen Farbstoffe der Formel 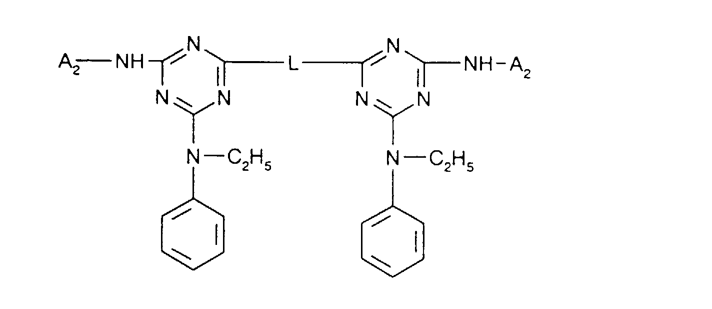 erhalten werden, wobei A₂ und L die in der Tabelle 3 angegebenen Bedeutungen haben. Die in der Tabelle 3 angegebenen Farbstoffe färben Wolle und synthetisches Polyamidfasermaterial in den in Spalte 4 angegebenen Farbtönen.

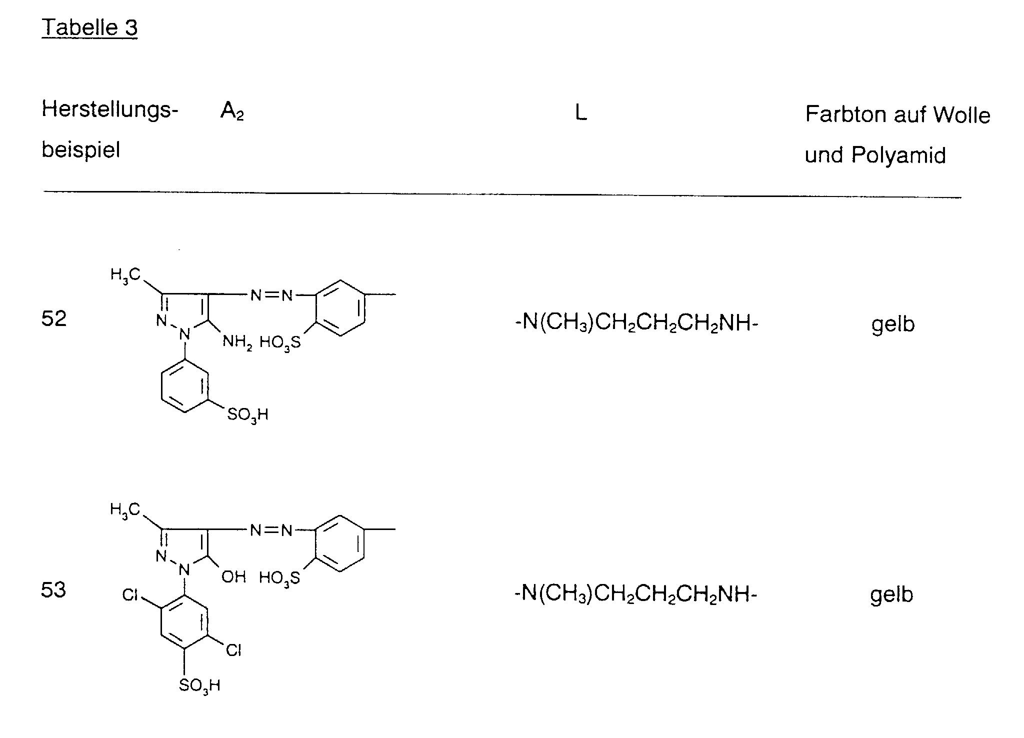

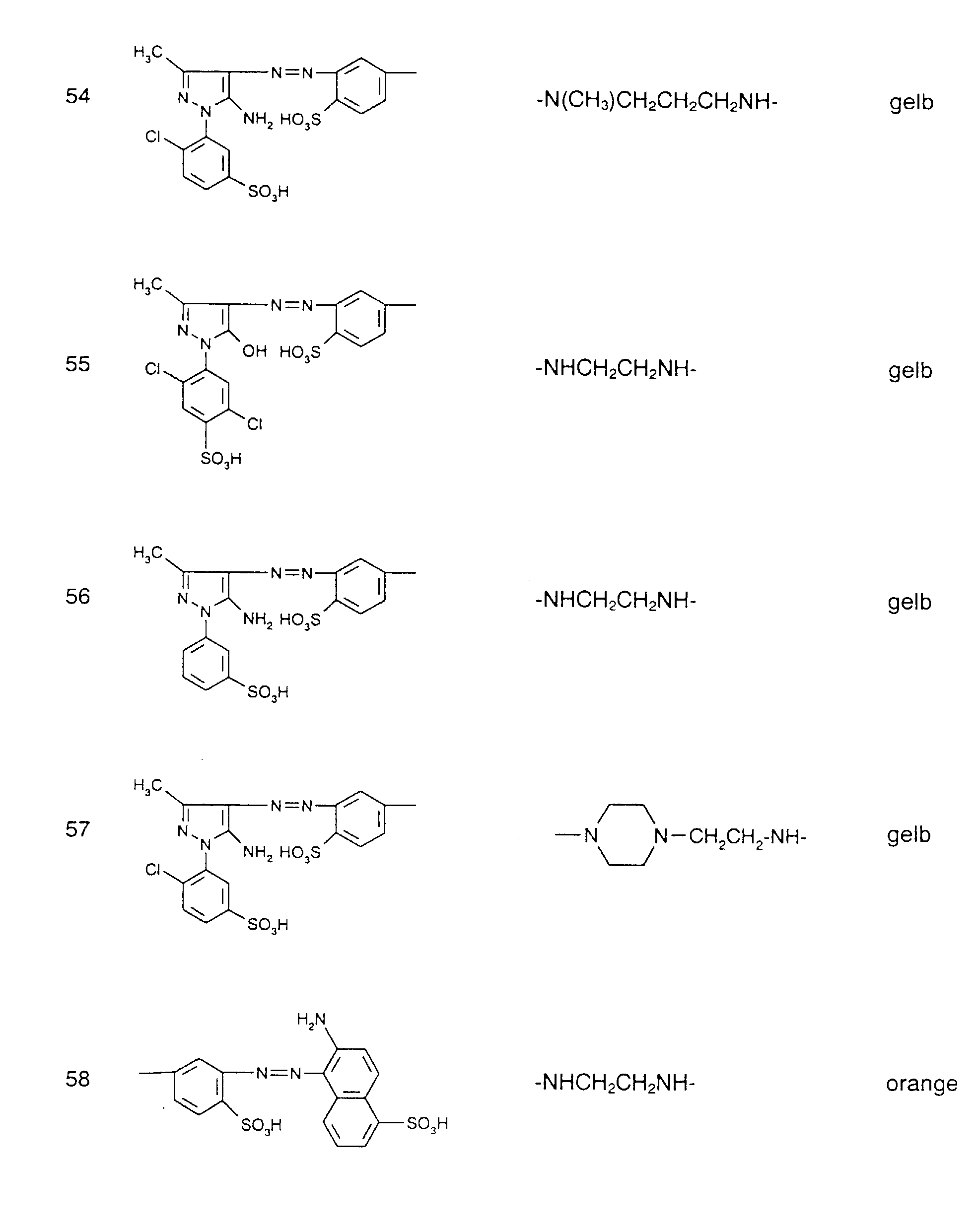

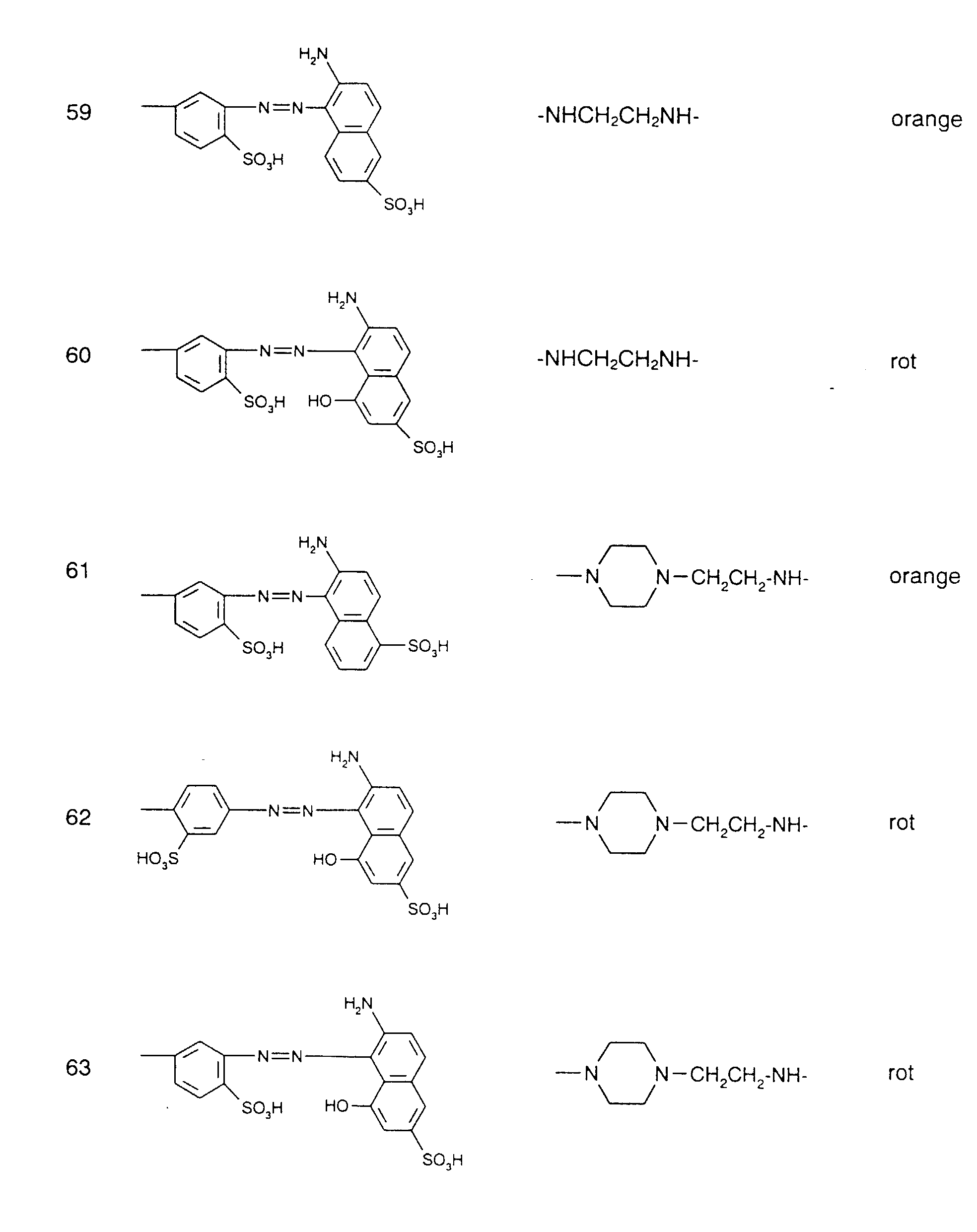

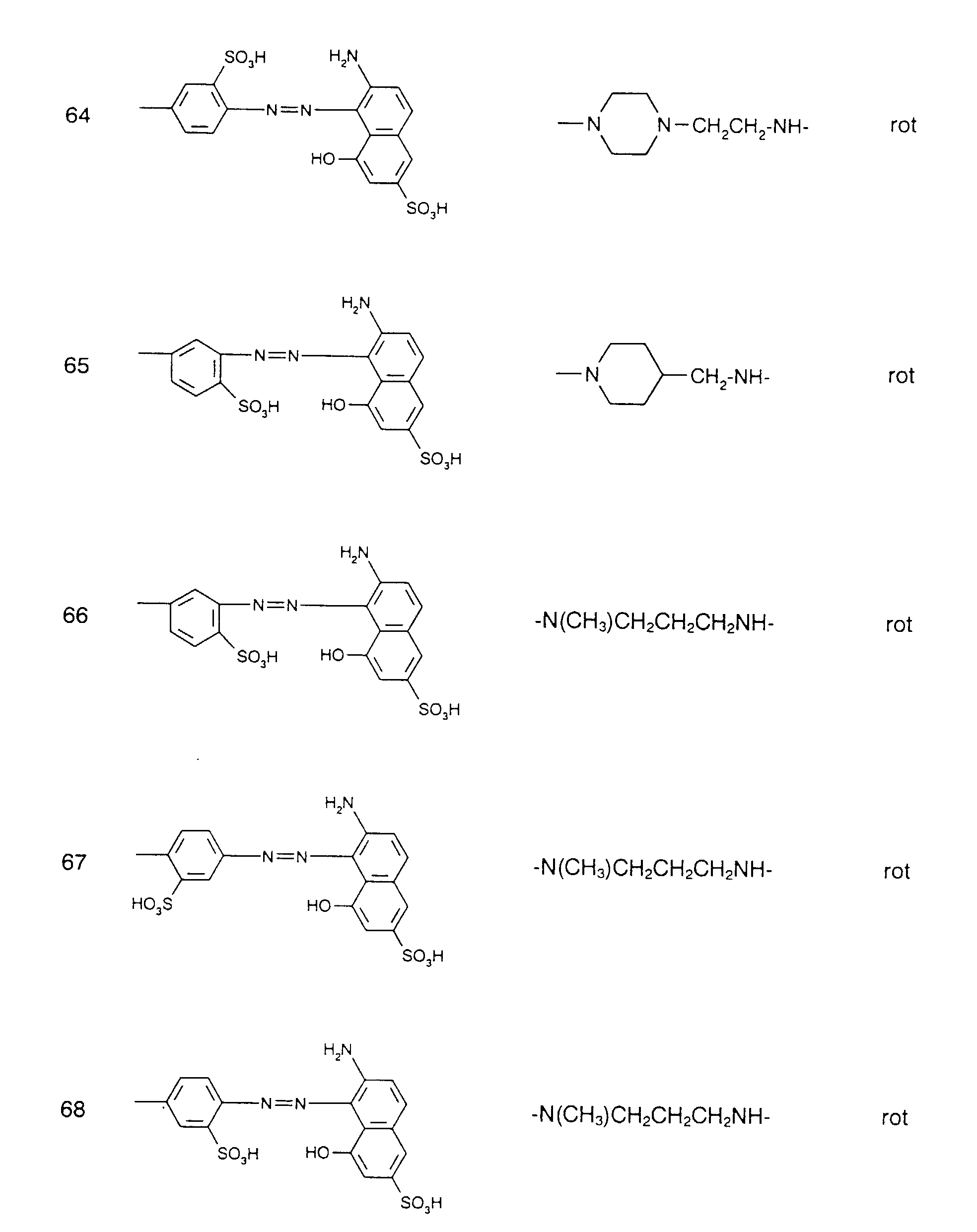

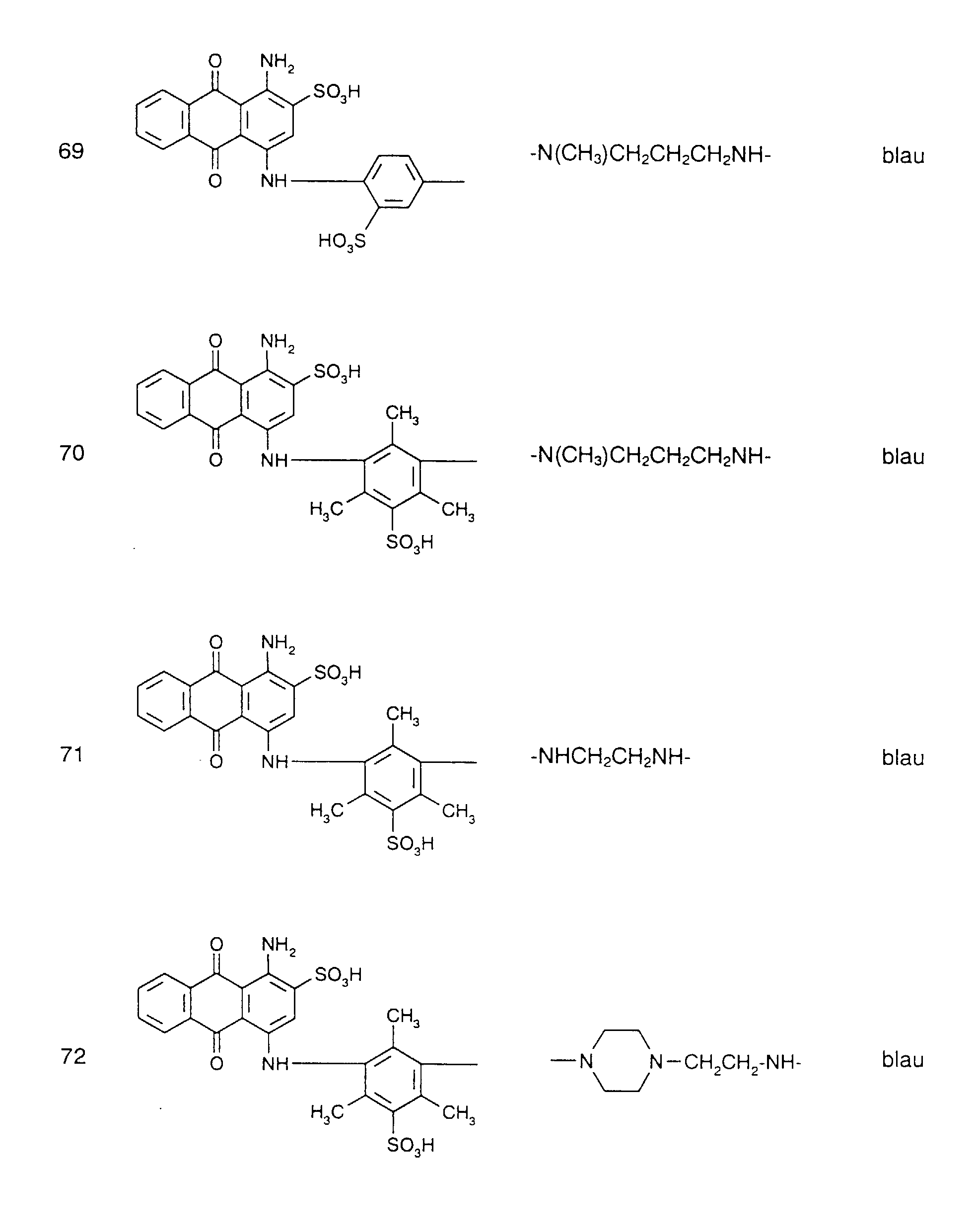

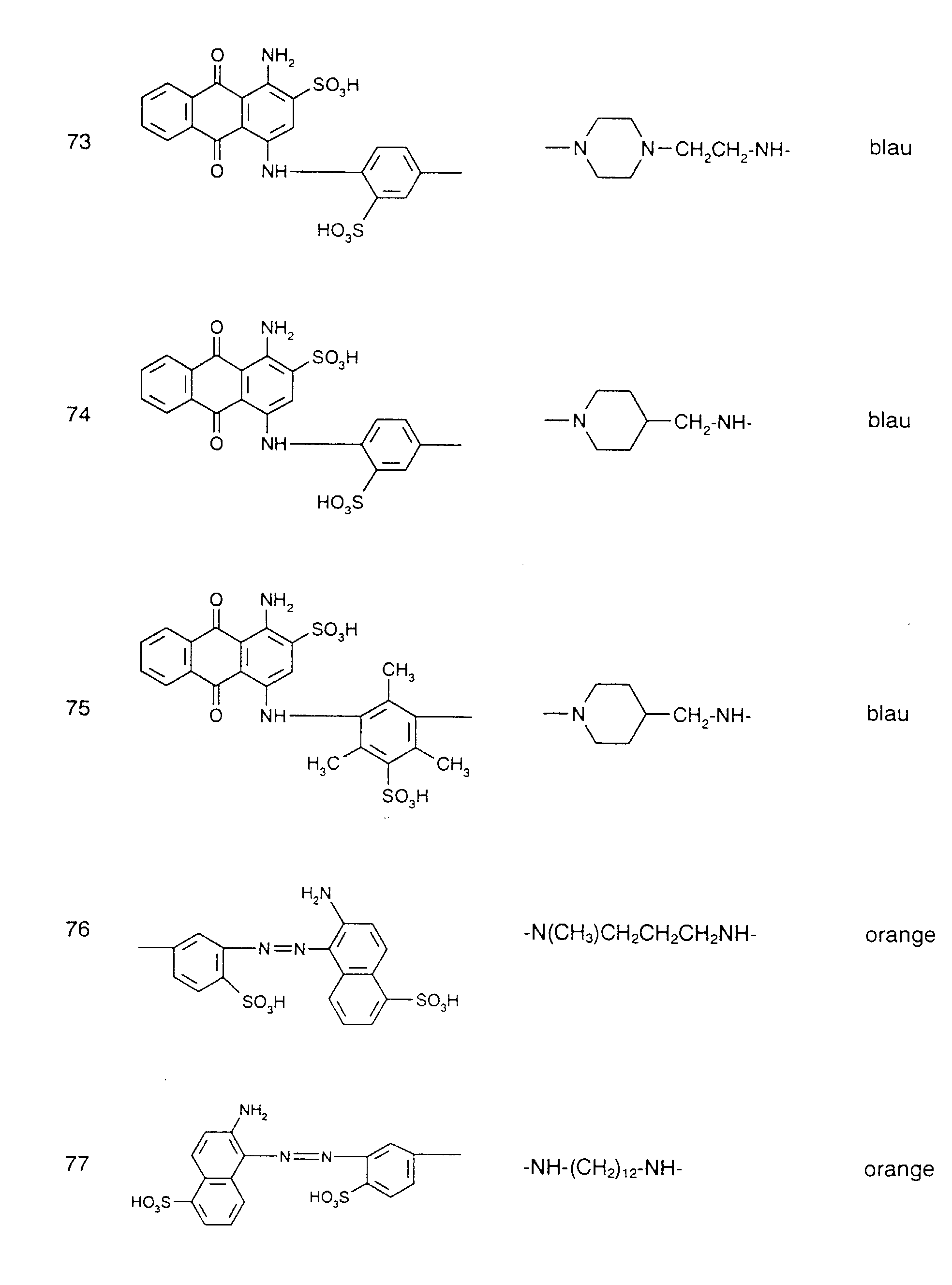

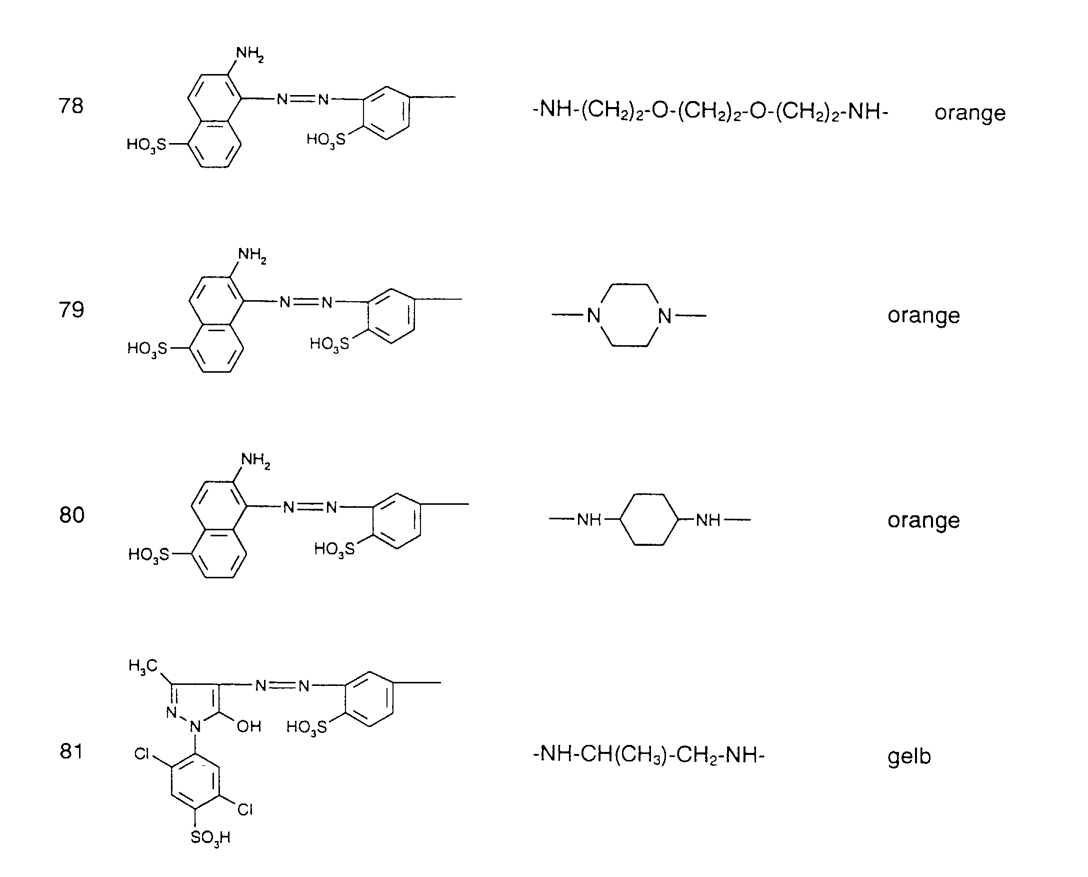

### Beispiel 1:

6,5 Teile der Verbindung der Formel 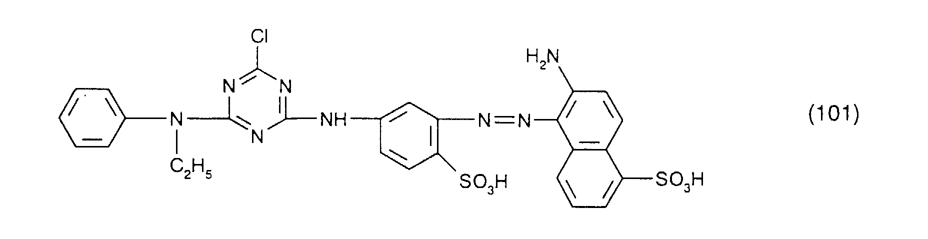 werden in 100 Teilen Wasser bei Raumtemperatur vorgelegt und es werden 10 Teile einer wässrigen, 1-normalen Natriumhydroxidlösung und 1,2 Teile 1,2-Diaminoethan zugegeben. Man erwärmt auf eine Temperatur von 55 bis 60°C und rührt 3 Stunden bei dieser Temperatur. Die Reaktionslösung wird eingedampft und der Rückstand im Vakuum bei einer Temperatur von 70°C getrocknet. Man erhält eine Farbstoffmischung, welche die Farbstoffe der Formeln 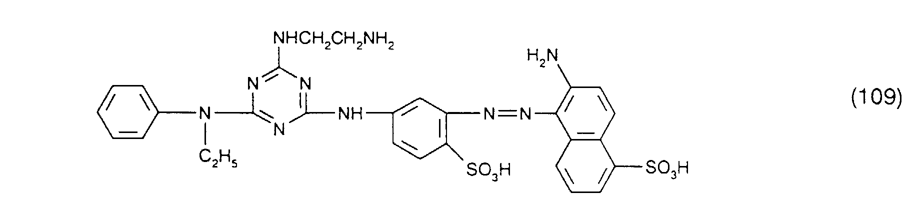 und 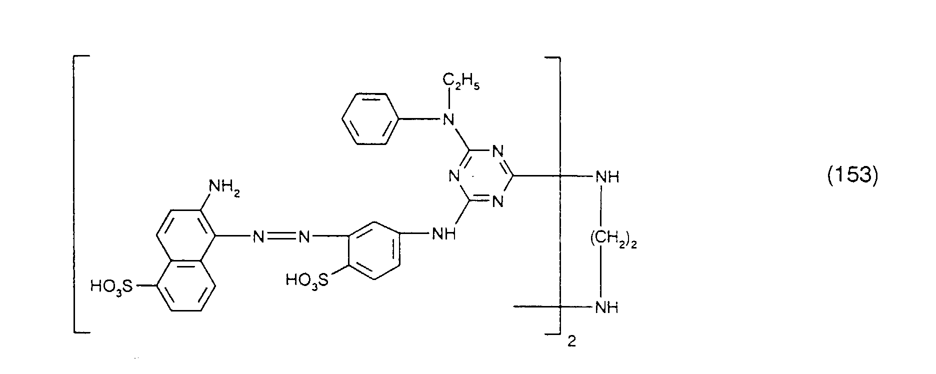 im Verhältnis von ca. 1:1 enthält. Die Farbstoffmischung der Farbstoffe der Formeln (109) und (153) färbt Wolle und synthetisches Polyamidfasermaterial in orangen Farbtönen.

### Beispiele 2 bis 25:

In analoger Weise zu den Angaben in Beispiel 1 können die in der folgenden Tabelle 4 angegebenen Farbstoffmischungen erhalten werden, welche Wolle und synthetisches Polyamidfasermaterial in den in Spalte 3 angegebenen Farbtönen färben.

**Tabelle 4**

| Bsp. | Farbstoffmischung | Farbton auf Wolle und Polyamid |
|---|---|---|
| 2 | Farbstoff gemäss Herstellungsbeispiel 2 und Farbstoff gemäss Herstellungsbeispiel 52 | gelb |
| | | |
| 3 | Farbstoff gemäss Herstellungsbeispiel 3 und Farbstoff gemäss Herstellungsbeispiel 53 | gelb |
| | | |
| 4 | Farbstoff gemäss Herstellungsbeispiel 4 und Farbstoff gemäss Herstellungsbeispiel 54 | gelb |
| | | |
| 5 | Farbstoff gemäss Herstellungsbeispiel 5 und Farbstoff gemäss Herstellungsbeispiel 55 | gelb |
| | | |
| 6 | Farbstoff gemäss Herstellungsbeispiel 6 und Farbstoff gemäss Herstellungsbeispiel 56 | gelb |
| | | |
| 7 | Farbstoff gemäss Herstellungsbeispiel 7 und Farbstoff gemäss Herstellungsbeispiel 57 | gelb |
| | | |
| 8 | Farbstoff gemäss Herstellungsbeispiel 9 und Farbstoff gemäss Herstellungsbeispiel 59 | orange |
| | | |
| 9 | Farbstoff gemäss Herstellungsbeispiel 10 und Farbstoff gemäss Herstellungsbeispiel 60 | rot |
| | | |
| 10 | Farbstoff gemäss Herstellungsbeispiel 11 und Farbstoff gemäss Herstellungsbeispiel 61 | orange |
| | | |
| 1 1 | Farbstoff gemäss Herstellungsbeispiel 12 und Farbstoff gemäss Herstellungsbeispiel 62 | rot |
| | | |
| 12 | Farbstoff gemäss Herstellungsbeispiel 13 und Farbstoff gemäss Herstellungsbeispiel 63 | rot |
| | | |
| 13 | Farbstoff gemäss Herstellungsbeispiel 14 und Farbstoff gemäss Herstellungsbeispiel 64 | rot |
| | | |
| 14 | Farbstoff gemäss Herstellungsbeispiel 15 und Farbstoff gemäss Herstellungsbeispiel 65 | rot |
| | | |
| 15 | Farbstoff gemäss Herstellungsbeispiel 16 und Farbstoff gemäss Herstellungsbeispiel 66 | rot |
| | | |
| 16 | Farbstoff gemäss Herstellungsbeispiel 17 und Farbstoff gemäss Herstellungsbeispiel 67 | rot |
| | | |
| 17 | Farbstoff gemäss Herstellungsbeispiel 18 und Farbstoff gemäss Herstellungsbeispiel 68 | rot |
| | | |
| 18 | Farbstoff gemäss Herstellungsbeispiel 19 und Farbstoff gemäss Herstellungsbeispiel 69 | blau |
| | | |
| 19 | Farbstoff gemäss Herstellungsbeispiel 20 und Farbstoff gemäss Herstellungsbeispiel 70 | blau |
| | | |
| 20 | Farbstoff gemäss Herstellungsbeispiel 21 und Farbstoff gemäss Herstellungsbeispiel 71 | blau |
| | | |
| 21 | Farbstoff gemäss Herstellungsbeispiel 22 und Farbstoff gemäss Herstellungsbeispiel 72 | blau |
| | | |
| 22 | Farbstoff gemäss Herstellungsbeispiel 23 und Farbstoff gemäss Herstellungsbeispiel 73 | blau |
| | | |
| 23 | Farbstoff gemäss Herstellungsbeispiel 24 und Farbstoff gemäss Herstellungsbeispiel 74 | blau |
| | | |
| 24 | Farbstoff gemäss Herstellungsbeispiel 25 und Farbstoff gemäss Herstellungsbeispiel 75 | blau |
| | | |
| 25 | Farbstoff gemäss Herstellungsbeispiel 1 und Farbstoff gemäss Herstellungsbeispiel 76 | orange |

Die in den Beispielen 1 bis 25 angegebenen Farbstoffmischungen können ebenfalls durch Mischung der Einzelkomponenten in einem gewünschten Mischungsverhältnis, wie z.B. einem Mischungsverhältnis von 1:1, erhalten werden.

### Beispiel 26:

6,5 Teile der Verbindung der Formel 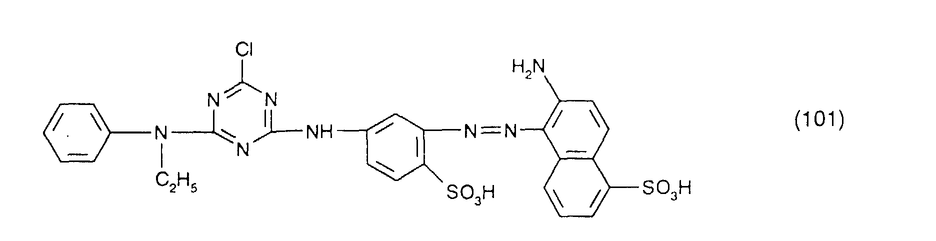 werden in 100 Teilen Wasser bei Raumtemperatur vorgelegt und es werden 10 Teile einer wässrigen, 1-normalen Natriumhydroxidlösung und 1,2 Teile 1,2-Diaminoethan zugegeben. Man erwärmt auf eine Temperatur von 55 bis 60°C und rührt 3 Stunden bei dieser Temperatur. Die Reaktionslösung wird bei einer Temperatur von 35 bis 40°C mittels Salzsäure (37 %-ig) auf einen pH-Wert von 6 gestellt und es werden 10 Teile Dioxan zugegeben. Dann tropft man innerhalb von 30 Minuten 6 Teile Essigsäureanhydrid zu, wobei der pH mittels 54 Teilen einer wässrigen, 1-molaren Natriumcarbonatlösung zwischen 5 und 6 gehalten wird. Die Reaktionslösung wird eingedampft und der Rückstand im Vakuum bei einer Temperatur von 70°C getrocknet. Man erhält eine Farbstoffmischung, welche die Farbstoffe der Formeln 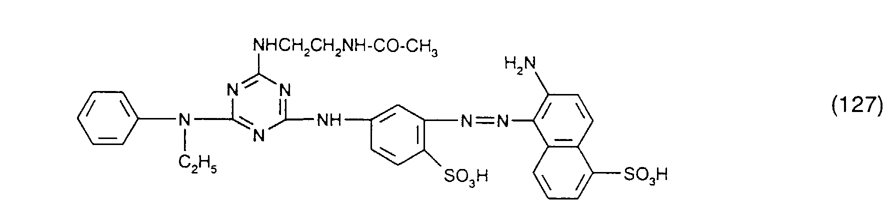 und 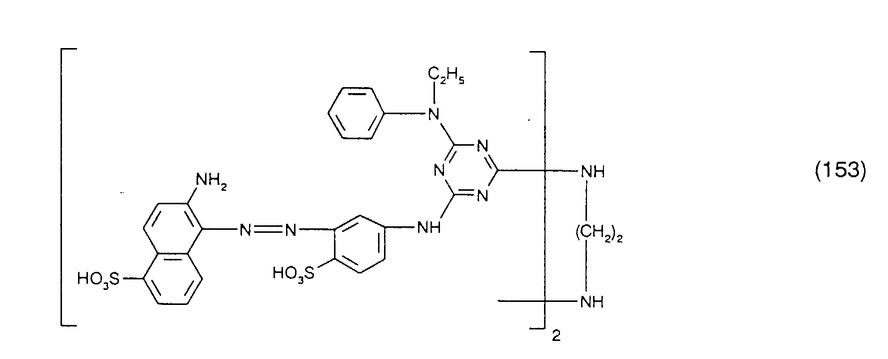 im Verhältnis von ca. 1:1 enthält. Die Farbstoffmischung der Farbstoffe der Formeln (127) und (153) färbt Wolle und synthetisches Polyamidfasermaterial in orangen Farbtönen.

### Beispiele 27 bis 50:

In analoger Weise zu den Angaben in Beispiel 26 können die in der folgenden Tabelle 5 angegebenen Farbstoffmischungen erhalten werden, welche Wolle und synthetisches Polyamidfasermaterial in den in Spalte 3 angegebenen Farbtönen färben.

**Tabelle 5**

| Bsp. | Farbstoffmischung | Farbton auf Wolle und Polyamid |
|---|---|---|
| 27 | Farbstoff gemäss Herstellungsbeispiel 27 und Farbstoff gemäss Herstellungsbeispiel 52 | gelb |
| | | |
| 28 | Farbstoff gemäss Herstellungsbeispiel 28 und Farbstoff gemäss Herstellungsbeispiel 53 | gelb |
| | | |
| 29 | Farbstoff gemäss Herstellungsbeispiel 29 und Farbstoff gemäss Herstellungsbeispiel 54 | gelb |
| | | |
| 30 | Farbstoff gemäss Herstellungsbeispiel 30 und Farbstoff gemäss Herstellungsbeispiel 55 | gelb |
| | | |
| 31 | Farbstoff gemäss Herstellungsbeispiel 31 und Farbstoff gemäss Herstellungsbeispiel 56 | gelb |
| | | |
| 32 | Farbstoff gemäss Herstellungsbeispiel 32 und Farbstoff gemäss Herstellungsbeispiel 57 | gelb |
| | | |
| 33 | Farbstoff gemäss Herstellungsbeispiel 34 und Farbstoff gemäss Herstellungsbeispiel 59 | orange |
| | | |
| 34 | Farbstoff gemäss Herstellungsbeispiel 35 und Farbstoff gemäss Herstellungsbeispiel 60 | rot |
| | | |
| 35 | Farbstoff gemäss Herstellungsbeispiel 36 und Farbstoff gemäss Herstellungsbeispiel 61 | orange |
| | | |
| 36 | Farbstoff gemäss Herstellungsbeispiel 37 und Farbstoff gemäss Herstellungsbeispiel 62 | rot |
| | | |
| 37 | Farbstoff gemäss Herstellungsbeispiel 38 und Farbstoff gemäss Herstellungsbeispiel 63 | rot |
| | | |
| 38 | Farbstoff gemäss Herstellungsbeispiel 39 und Farbstoff gemäss Herstellungsbeispiel 64 | rot |
| | | |
| 39 | Farbstoff gemäss Herstellungsbeispiel 40 und Farbstoff gemäss Herstellungsbeispiel 65 | rot |
| | | |
| 40 | Farbstoff gemäss Herstellungsbeispiel 41 und Farbstoff gemäss Herstellungsbeispiel 66 | rot |
| | | |
| 41 | Farbstoff gemäss Herstellungsbeispiel 42 und Farbstoff gemäss Herstellungsbeispiel 67 | rot |
| | | |
| 42 | Farbstoff gemäss Herstellungsbeispiel 43 und Farbstoff gemäss Herstellungsbeispiel 68 | rot |
| | | |
| 43 | Farbstoff gemäss Herstellungsbeispiel 44 und Farbstoff gemäss Herstellungsbeispiel 69 | blau |
| | | |
| 44 | Farbstoff gemäss Herstellungsbeispiel 45 und Farbstoff gemäss Herstellungsbeispiel 70 | blau |
| | | |
| 45 | Farbstoff gemäss Herstellungsbeispiel 46 und Farbstoff gemäss Herstellungsbeispiel 71 | blau |
| | | |
| 46 | Farbstoff gemäss Herstellungsbeispiel 47 und Farbstoff gemäss Herstellungsbeispiel 72 | blau |
| | | |
| 47 | Farbstoff gemäss Herstellungsbeispiel 48 und Farbstoff gemäss Herstellungsbeispiel 73 | blau |
| | | |
| 48 | Farbstoff gemäss Herstellungsbeispiel 49 und Farbstoff gemäss Herstellungsbeispiel 74 | blau |
| | | |
| 49 | Farbstoff gemäss Herstellungsbeispiel 50 und Farbstoff gemäss Herstellungsbeispiel 75 | blau |
| | | |
| 50 | Farbstoff gemäss Herstellungsbeispiel 33 und Farbstoff gemäss Herstellungsbeispiel 76 | orange |

Die in den Beispielen 26 bis 50 angegebenen Farbstoffmischungen können ebenfalls durch Mischung der Einzelkomponenten in einem gewünschten Mischungsverhältnis, wie z.B. einem Mischungsverhältnis von 1:1, erhalten werden.

Mischt man den Farbstoff gemäss Herstellungsbeispiel 1 mit einem der Farbstoffe gemäss den Herstellungsbeispielen 51 bis 81 in einem Mischungsverhältnis von 1:1, so werden ebenfalls Farbstoffmischungen erhalten, welche Wolle und synthetisches Polyamidfasermaterial färben.

### Färbebeispiel

100 Teile eines Wollgewebes werden in einem wässrigen Bad, welches 2000 Teile Wasser, 5 Teile Natriumsulfat, 2 Teile Natriumacetat und 2 Teile 80%-iger Essigsäure enthält, während 5 Minuten bei einer Temperatur von 30°C und einem pH-Wert von 4,5 vorbehandelt. Nach Zugabe einer wässrigen Lösung enthaltend 0,9 Teile der Farbstoffmischung gemäss Beispiel 1 wird die Färbeflotte noch 5 Minuten bei einer Temperatur von 30°C gehalten und anschliessend mit einer Aufheizrate von 1,5°C pro Minute auf eine Temperatur von 100°C erhitzt. Man färbt 60 Minuten bei dieser Temperatur, kühlt dann auf 50°C ab und lässt die Färbeflotte ab. Das in einem orangen Farbton gefärbte Wollgewebe wird in üblicher Weise gespült und getrocknet.

## Patentansprüche

1. Farbstoffmischungen, dadurch gekennzeichnet, dass sie mindestens einen Farbstoff der Formel 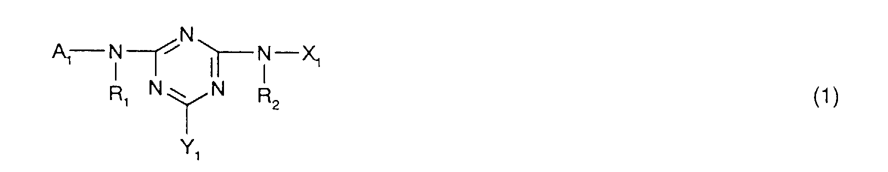 und mindestens einen Farbstoff der Formel 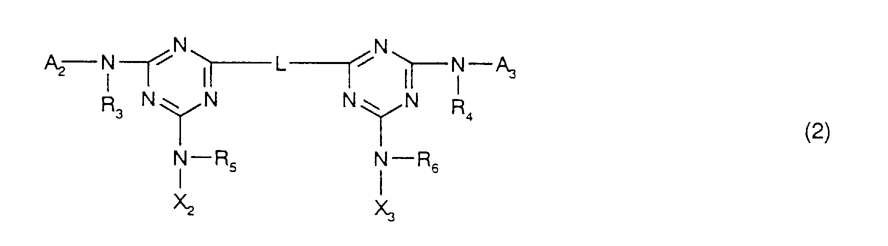 enthalten, worin
R₁, R₂, R₃, R₄, R₅ und R₆ unabhängig voneinander Wasserstoff oder gegebenenfalls substituiertes C₁-C₄-Alkyl sind,
X₁, X₂ und X₃ unabhängig voneinander gegebenenfalls substituiertes C₁-C₈-Alkyl, C₅-C₇-Cycloalkyl oder gegebenenfalls durch C₁-C₄-Alkyl, C₁-C₄-Alkoxy, C₂-C₄-Alkanoylamino, Amino, Hydroxy, Ureido, Halogen, Carboxy oder Sulfo substituiertes Phenyl oder Naphthyl sind oder der Rest der Formel -N(R₂)-X₁, -N(R₅)-X₂ oder
-N(R₆)-X₃ ein gegebenenfalls weitere Heteroatome enthaltender Ring ist,
L ein organisches Brückenglied,
Y₁ ein Rest der Formel 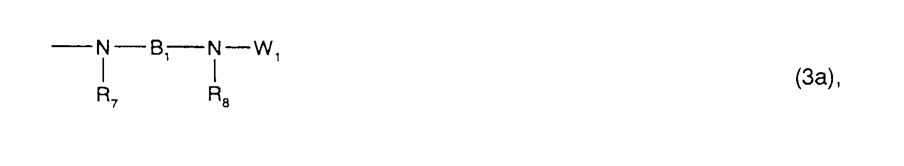 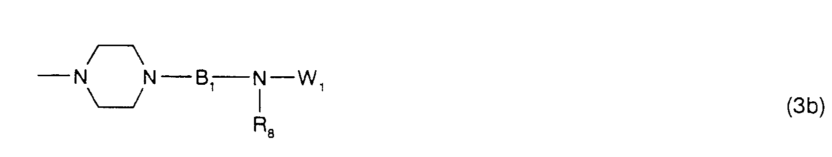 oder 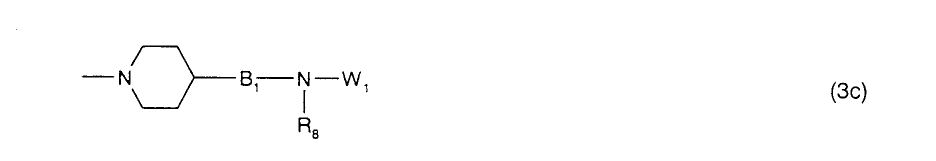 ist, worin
B₁ ein farbloses organisches Brückenglied,
R₇ und R₈ unabhängig voneinander Wasserstoff oder gegebenenfalls substituiertes C₁-C₄-Alkyl sind,
W₁ Wasserstoff, gegebenenfalls substituiertes C₁-C₈-Alkyl, C₅-C₇-Cycloalkyl, Phenyl oder Naphthyl oder ein Rest der Formel -CO-R ist, wobei R gegebenenfalls substituiertes C₁-C₈-Alkyl, C₅-C₇-Cycloalkyl, Phenyl oder Naphthyl bedeutet, und
A₁, A₂ und A₃ unabhängig voneinander Reste eines Monoazo-, Polyazo-, Metallkomplexazo-, Anthrachinon-, Formazan-, Phthalocyanin- oder Dioxazinfarbstoffes sind.

2. Farbstoffmischungen gemäss Anspruch 1, worin
R₁, R₂, R₃, R₄, R₅ und R₆ unabhängig voneinander Wasserstoff oder C₁-C₄-Alkyl sind.

3. Farbstoffmischungen gemäss einem der Ansprüche 1 und 2, worin
X₁, X₂ und X₃ unabhängig voneinander C₁-C₈-Alkyl, gegebenenfalls durch C₁-C₄-Alkyl substituiertes C₅-C₇-Cycloalkyl oder gegebenenfalls durch C₁-C₄-Alkyl, C₁-C₄-Alkoxy, C₂-C₄-Alkanoylamino, Ureido, Halogen, Carboxy oder Sulfo substituiertes Phenyl oder Naphthyl sind.

4. Farbstoffmischungen gemäss einem der Ansprüche 1 bis 3, worin
X₁, X₂ und X₃ unabhängig voneinander gegebenenfalls durch C₁-C₄-Alkyl, C₁-C₄-Alkoxy, C₂-C₄-Alkanoylamino, Ureido, Halogen, Carboxy oder Sulfo substituiertes Phenyl, insbesondere Phenyl, sind.

5. Farbstoffmischungen gemäss einem der Ansprüche 1 bis 4, worin
B₁ ein C₁-C₁₀-Alkylenrest ist, welcher durch 1, 2 oder 3 Glieder aus der Gruppe -NH-, -N(CH₃)- oder -O- unterbrochen sein kann und unsubstituiert oder durch Hydroxy, Sulfo, Sulfato, Cyano oder Carboxy substituiert ist.

6. Farbstoffmischungen gemäss einem der Ansprüche 1 bis 5, worin
R C₁-C₈-Alkyl oder gegebenenfalls durch C₁-C₄-Alkyl, C₁-C₄-Alkoxy, Halogen, Carboxy oder Sulfo substituiertes Phenyl ist.

7. Farbstoffmischungen gemäss einem der Ansprüche 1 bis 6, worin
W₁ Wasserstoff oder ein Rest der Formel -CO-R ist, wobei R C₁-C₈-Alkyl oder gegebenenfalls durch C₁-C₄-Alkyl, C₁-C₄-Alkoxy, Halogen, Carboxy oder Sulfo substituiertes Phenyl ist.

8. Farbstoffmischungen gemäss einem der Ansprüche 1 bis 7, worin
L ein Rest der Formel 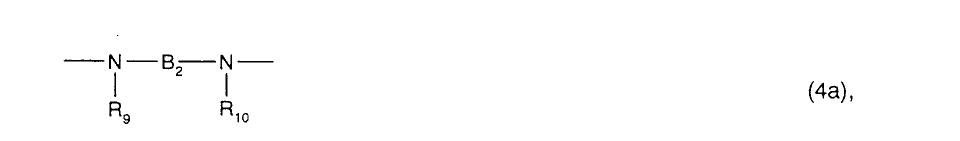 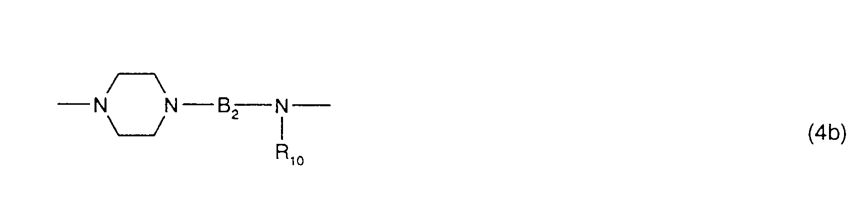 oder 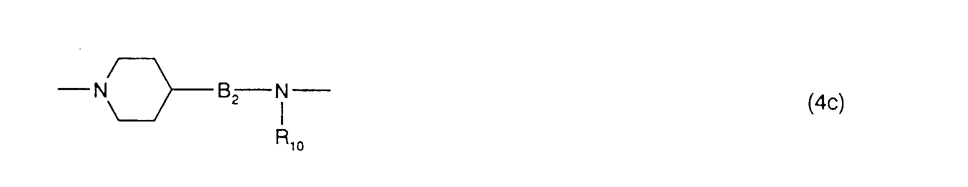 ist, worin
R₉ und R₁₀ unabhängig voneinander Wasserstoff oder C₁-C₄-Alkyl sind, und
B₂ ein C₁-C₁₀-Alkylenrest ist, welcher durch 1, 2 oder 3 Glieder aus der Gruppe -NH-,
-N(CH₃)- oder -O- unterbrochen sein kann und unsubstituiert oder durch Hydroxy, Sulfo, Sulfato, Cyano oder Carboxy substituiert ist.

9. Farbstoffmischungen gemäss einem der Ansprüche 1 bis 8, worin
A₁, A₂ und A₃ unabhängig voneinander Reste eines Monoazo-, Disazo- oder Anthrachinonfarbstoffes sind.

10. Farbstoffmischungen gemäss einem der Ansprüche 1 bis 9, worin
A₁, A₂ und A₃ unabhängig voneinander Reste der Formel 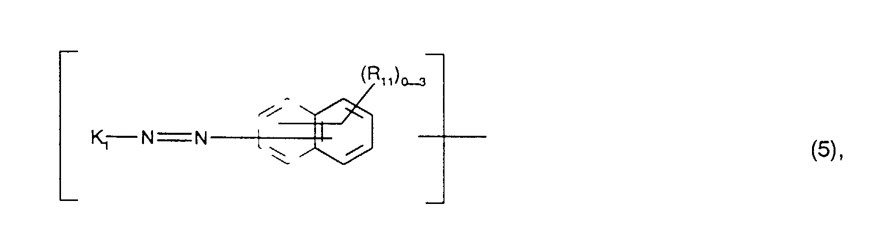 worin (R₁₁)₀₋₃ für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Cyano, Carbamoyl, Carboxyl, Sulfo, Amino und N-Mono- oder N,N-Di-C₁-C₄-Alkylamino steht, und K₁ ein Rest der Benzol- oder Naphthalinreihe oder ein heterocyclischer Rest ist, oder der Formel 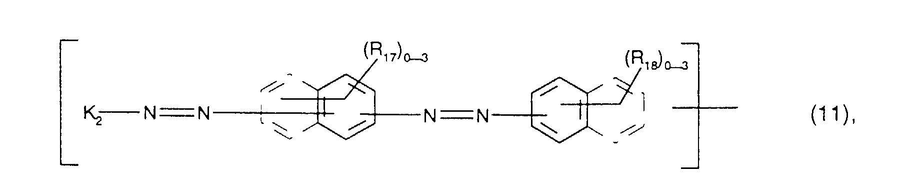 worin (R₁₇)₀₋₃ und (R₁₈)₀₋₃ unabhängig voneinander für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Cyano, Carbamoyl, Carboxyl, Sulfo, Amino und N-Mono- oder N,N-Di-C₁-C₄-Alkylamino stehen, und
K₂ ein Rest der Benzol- oder Naphthalinreihe oder ein heterocyclischer Rest ist,
oder der Formel 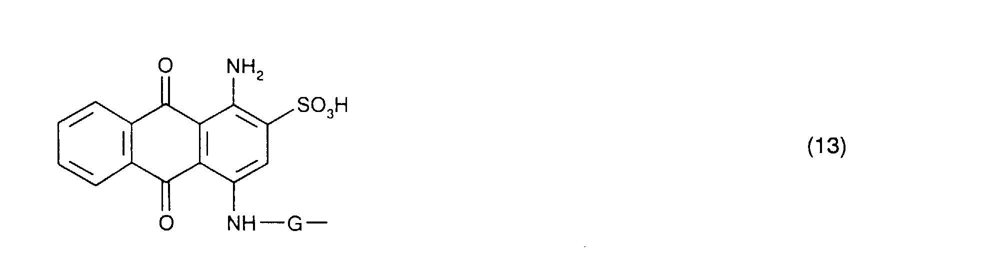 sind, worin G einen unsubstituierten oder durch C₁-C₄-Alkyl, C₁-C₄-Alkoxy, Halogen, Carboxy oder Sulfo substituierten Phenylenrest oder einen Cyclohexylen-, Phenylenmethylen- oder C₂-C₆-Alkylenrest bedeutet.

11. Farbstoffmischungen gemäss einem der Ansprüche 1 bis 10, worin
A₁, A₂ und A₃ unabhängig voneinander Reste der Formel 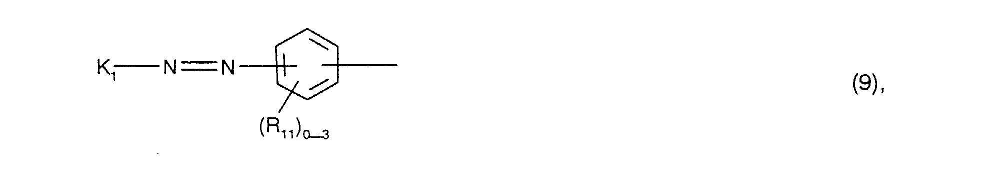 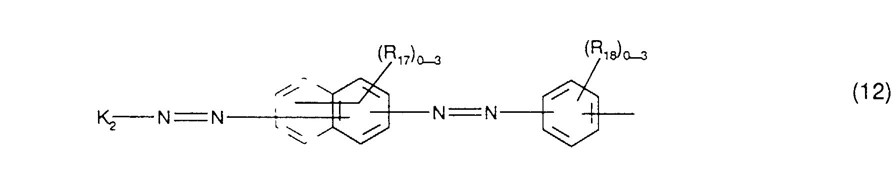 oder 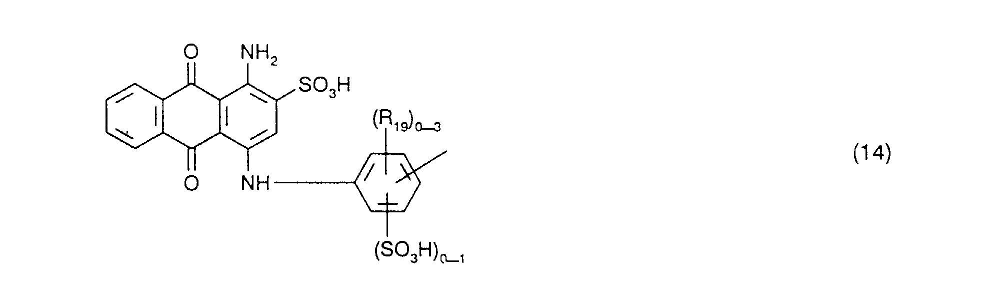 sind, worin
(R₁₁)₀₋₃ für 0 bis 3 gleiche oder voneinander verschiedene Substituenten ausgewählt aus der Gruppe C₁-C₄-Alkyl, C₁-C₄-Alkoxy, Halogen und Sulfo steht,
(R₁₇)₀₋₃ und (R₁₈)₀₋₃ unabhängig voneinander für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Cyano, Carbamoyl, Carboxyl, Sulfo, Amino und N-Mono- oder N,N-Di-C₁-C₄-Alkylamino stehen,
(R₁₉)₀₋₃ für 0 bis 3 gleiche oder voneinander verschiedene Substituenten ausgewählt aus der Gruppe C₁-C₄-Alkyl, C₁-C₄-Alkoxy, Halogen, Carboxy und Sulfo steht, und
K₁ und K₂ unabhängig voneinander einen Rest der Formel 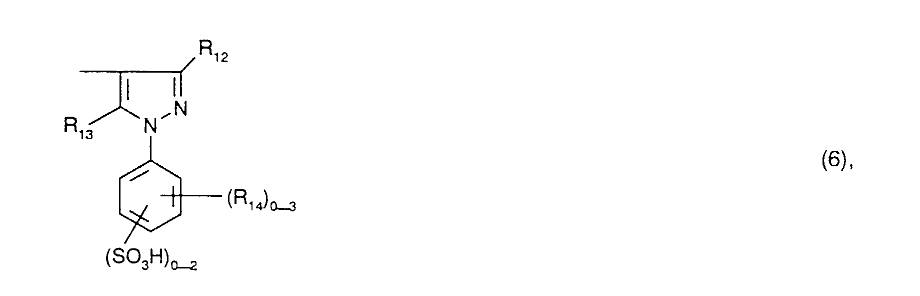 worin R₁₂ Methyl oder Carboxyl,
R₁₃ Amino oder Hydroxyl ist und
(R₁₄)₀₋₃ für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Ureido, Halogen, Carboxyl und Sulfo steht,
oder einen Rest der Formel 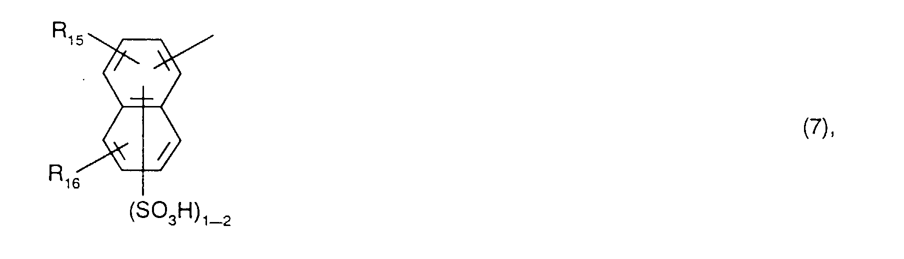
worin R₁₅ Wasserstoff, Amino oder N-Mono- oder N,N-Di-C₁-C₄-Alkylamino und
R₁₆ Wasserstoff oder Hydroxyl ist, bedeuten.

12. Farbstoffmischungen gemäss einem der Ansprüche 1 bis 11, worin
R₁, R₂, R₃, R₄, R₅, R₆, R₇ und R₈ Wasserstoff oder C₁-C₄-Alkyl sind,
X₁, X₂ und X₃ gegebenenfalls durch C₁-C₄-Alkyl, C₁-C₄-Alkoxy, C₂-C₄-Alkanoylamino, Ureido, Halogen, Carboxy oder Sulfo substituiertes Phenyl sind,
B₁ ein C₁-C₁₀-Alkylenrest ist, welcher durch 1, 2 oder 3 Glieder aus der Gruppe -NH-, -N(CH₃)- oder -O- unterbrochen sein kann und unsubstituiert oder durch Hydroxy, Sulfo, Sulfato, Cyano oder Carboxy substituiert ist,
W₁ Wasserstoff oder ein Rest der Formel -CO-R ist, wobei R C₁-C₈-Alkyl oder gegebenenfalls durch C₁-C₄-Alkyl, C₁-C₄-Alkoxy, Halogen, Carboxy oder Sulfo substituiertes Phenyl ist, und
L ein Rest der Formel 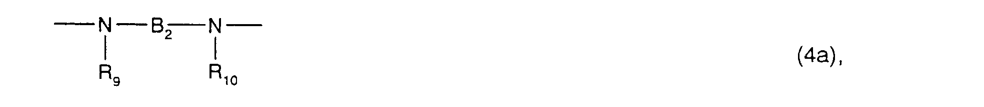 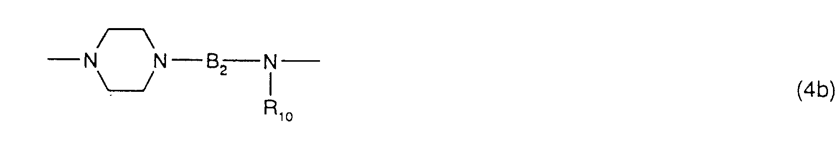 oder 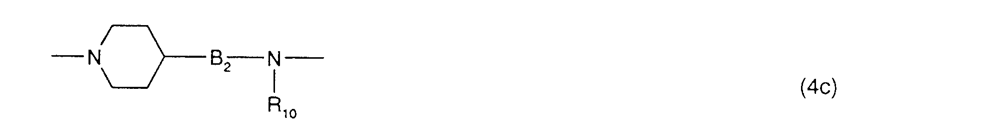 ist, wobei R₉ und R₁₀ Wasserstoff oder C₁-C₄-Alkyl sind, und
B₂ die oben für B₁ angegebenen Bedeutungen hat.

13. Farbstoffmischungen gemäss einem der Ansprüche 1 bis 12, worin
Y₁ ein Rest der Formel 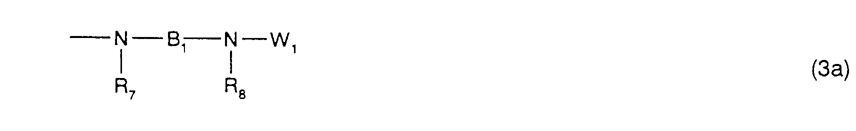 und
L ein Rest der Formel 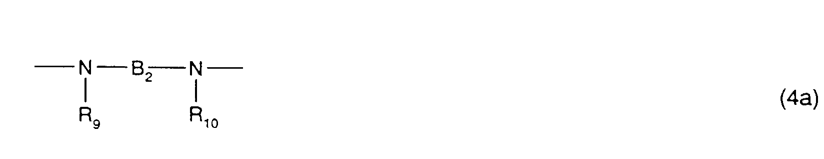 ist,
oder
Y₁ ein Rest der Formel 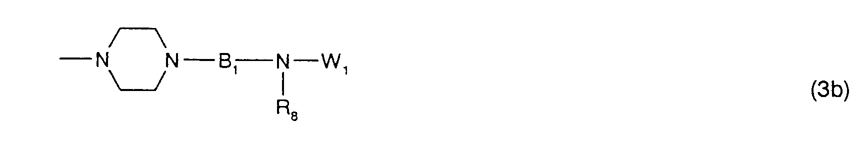 und
L ein Rest der Formel 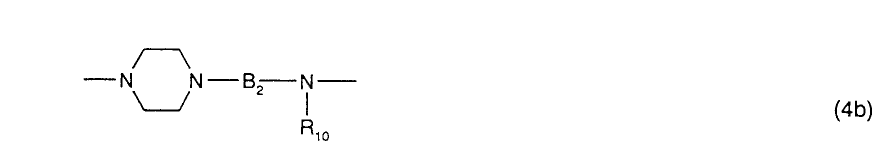 ist,
oder
Y₁ ein Rest der Formel 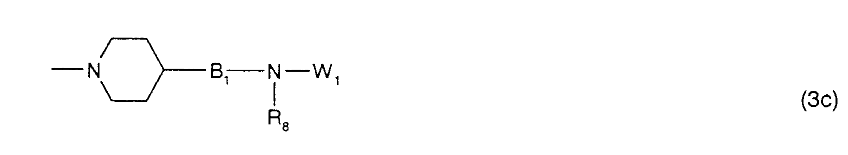 und
L ein Rest der Formel 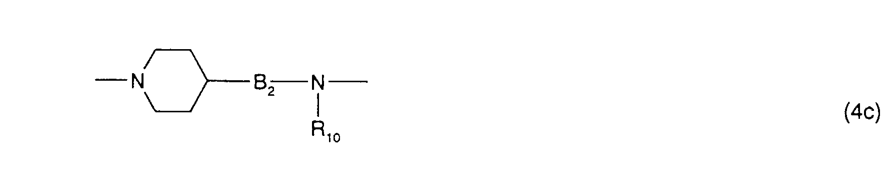 ist,
wobei
B₁ und B₂ identische Bedeutungen haben und einen C₁-C₁₀-Alkylenrest bedeuten, welcher durch 1, 2 oder 3 Glieder aus der Gruppe -NH-, -N(CH₃)- oder -O- unterbrochen sein kann und unsubstituiert oder durch Hydroxy, Sulfo, Sulfato, Cyano oder Carboxy substituiert ist,
R₇ und R₉ identische Bedeutungen haben und Wasserstoff oder C₁-C₄-Alkyl bedeuten,
R₈ und R₁₀ identische Bedeutungen haben und Wasserstoff oder C₁-C₄-Alkyl bedeuten, und
W₁ Wasserstoff oder ein Rest der Formel -CO-R ist, wobei R C₁-C₈-Alkyl oder gegebenenfalls durch C₁-C₄-Alkyl, C₁-C₄-Alkoxy, Halogen, Carboxy oder Sulfo substituiertes Phenyl ist.

14. Farbstoffmischungen gemäss einem der Ansprüche 1 bis 13, worin
R₂, R₅ und R₆ C₁-C₄-Alkyl bedeuten.

15. Verwendung der Farbstoffmischungen gemäss einem der Ansprüche 1 bis 14 zum Färben oder Bedrucken von hydroxylgruppenhaltigen oder stickstoffhaltigen Fasermaterialien.

16. Verwendung gemäss Anspruch 15 zum Färben oder Bedrucken von natürlichem oder synthetischem Polyamidfasermaterial.

## Claims

1. A dye mixture which comprises at least one dye of the formula 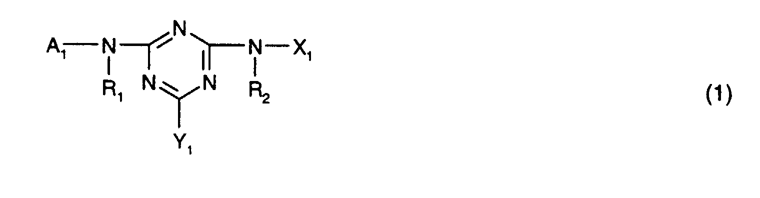 and at least one dye of the formula 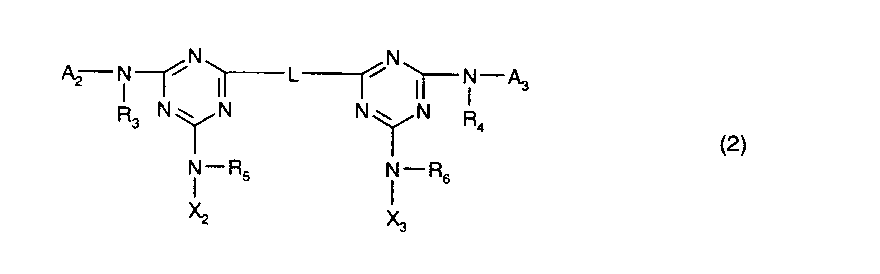 in which
R₁, R₂, R₃, R₄, R₅ and R₆ independently of one another are hydrogen or substituted or unsubstituted C₁-C₄alkyl,
X₁, X₂ and X₃ independently of one another are substituted or unsubstituted C₁-C₈alkyl, C₅-C₇cycloalkyl, or phenyl or naphthyl which are substituted or unsubstituted by C₁-C₄alkyl, C₁-C₄alkoxy, C₂-C₄alkanoylamino, amino, hydroxyl, ureido, halogen, carboxyl or sulfo, or
the radical of the formula -N(R₂)-X₁, -N(R₅)-X₂ or -N(R₆)-X₃ is a ring which may contain further heteroatoms,
L is an organic bridge member,
Y₁ is a radical of the formula 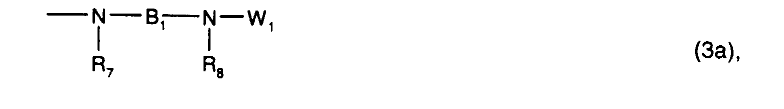 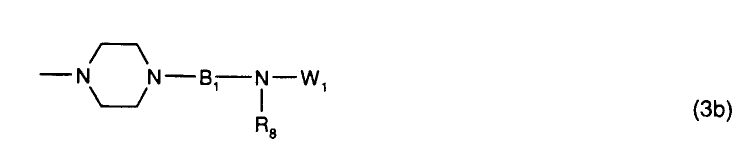 or 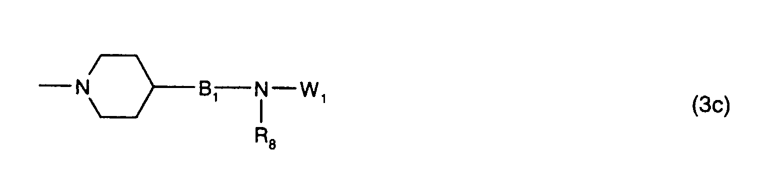 in which
B₁ is a colourless organic bridge member,
R₇ and R₈ independently of one another are hydrogen or substituted or unsubstituted C₁-C₄alkyl,
W₁ is hydrogen, substituted or unsubstituted C₁-C₈alkyl, C₅-C₇cycloalkyl, phenyl or naphthyl, or a radical of the formula -CO-R, in which R is substituted or unsubstituted C₁-C₈alkyl, C₅-C₇cycloalkyl, phenyl or naphthyl, and
A₁, A₂ and A₃ independently of one another are radicals of a monoazo, polyazo, metal complex azo, anthraquinone, formazan, phthalocyanine or dioxazine dye.

2. A dye mixture according to claim 1, in which
R₁, R₂, R₃, R₄, R₅ and R₆ independently of one another are hydrogen or C₁-C₄alkyl.

3. A dye mixture according to claim 1 or 2, in which
X₁, X₂ and X₃ independently of one another are C₁-C₈alkyl, C₅-C₇cycloalkyl which is unsubstituted or substituted by C₁-C₄alkyl, or phenyl or naphthyl which are unsubstituted or substituted by C₁-C₄alkyl, C₁-C₄alkoxy, C₂-C₄alkanoylamino, ureido, halogen, carboxyl or sulfo.

4. A dye mixture according to any one of claims 1 to 3, in which
X₁, X₂ and X₃ independently of one another are phenyl which is unsubstituted or substituted by C₁-C₄alkyl, C₁-C₄alkoxy, C₂-C₄alkanoylamino, ureido, halogen, carboxyl or sulfo, especially phenyl.

5. A dye mixture according to any one of claims 1 to 4, in which
B₁ is a C₁-C₁₀alkylene radical, which can be interrupted by 1, 2 or 3 members from the group consisting of -NH-, -N(CH₃)- and -O- and is unsubstituted or substituted by hydroxyl, sulfo, sulfato, cyano or carboxyl.

6. A dye mixture according to any one of claims 1 to 5, in which
R is C₁-C₈alkyl or phenyl which is unsubstituted or substituted by C₁-C₄alkyl, C₁-C₄alkoxy, halogen, carboxyl or sulfo.

7. A dye mixture according to any one of claims 1 to 6, in which
W₁ is hydrogen or a radical of the formula -CO-R, in which R is C₁-C₈alkyl or phenyl which is unsubstituted or substituted by C₁-C₄alkyl, C₁-C₄alkoxy, halogen, carboxyl or sulfo.

8. A dye mixture according to any one of claims 1 to 7, in which
L is a radical of the formula 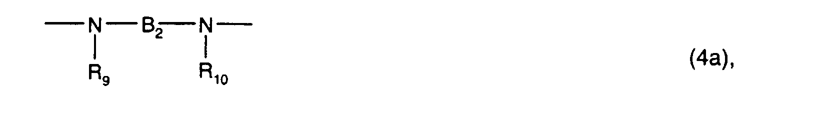 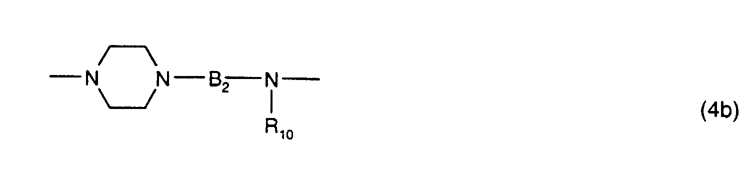 or 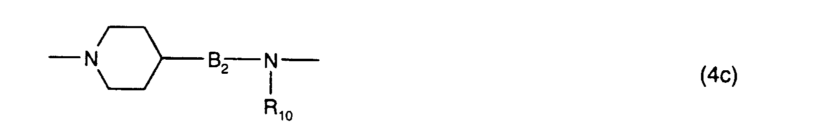 in which
R₉ and R₁₀ independently of one another are hydrogen or C₁-C₄alkyl and
B₂ is a C₁-C₁₀alkylene radical, which can be interrupted by 1, 2 or 3 members from the group consisting of -NH-, -N(CH₃)- and -O- and is unsubstituted or substituted by hydroxyl, sulfo, sulfato, cyano or carboxyl.

9. A dye mixture according to any one of claims 1 to 8, in which
A₁, A₂ and A₃ independently of one another are radicals of a monoazo, disazo or anthraquinone dye.

10. A dye mixture according to any one of claims 1 to 9, in which
A₁, A₂ and A₃ independently of one another are radicals of the formula 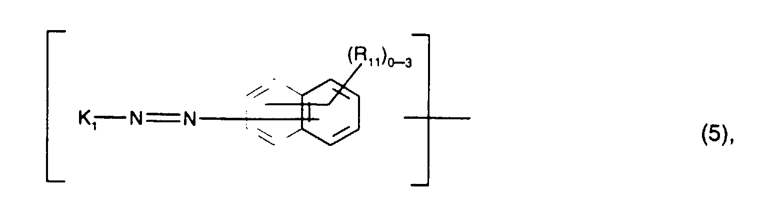 in which (R₁₁)₀₋₃ is 0 to 3 identical or different substituents chosen from the group consisting of C₁-C₄alkyl, C₁-C₄alkoxy, C₂-C₄alkanoylamino, halogen, hydroxyl, cyano, carbamoyl, carboxyl, sulfo, amino and N-mono- or N,N-di-C₁-C₄alkylamino and
K₁ is a radical of the benzene or naphthalene series or a heterocyclic radical, or of the formula 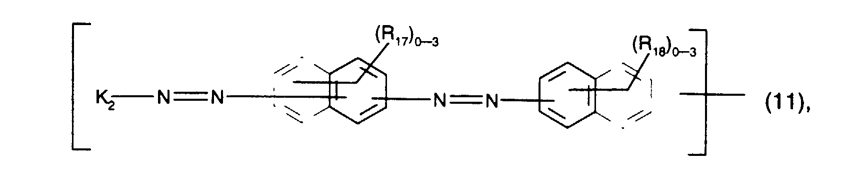 in which (R₁₇)₀₋₃ and (R₁₈)₀₋₃ independently of one another are 0 to 3 identical or different substituents chosen from the group consisting of C₁-C₄alkyl, C₁-C₄alkoxy, C₂-C₄alkanoylamino, halogen, hydroxyl, cyano, carbamoyl, carboxyl, sulfo, amino and N-mono- or N,N-di-C₁-C₄alkylamino, and
K₂ is a radical of the benzene or naphthalene series or a heterocyclic radical, or of the formula 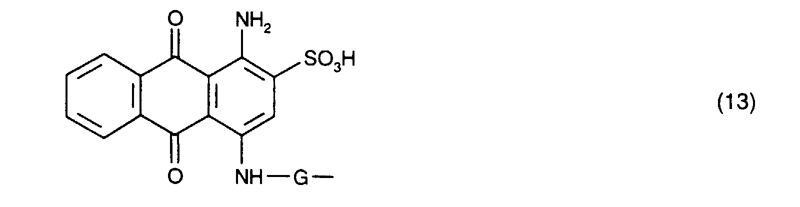 in which G is a phenylene radical which is unsubstituted or substituted by C₁-C₄alkyl, C₁-C₄alkoxy, halogen, carboxyl or sulfo, or a cyclohexylene, phenylenemethylene or C₂-C₆alkylene radical.

11. A dye mixture according to any one of claims 1 to 10, in which
A₁, A₂ and A₃ independently of one another are radicals of the formula 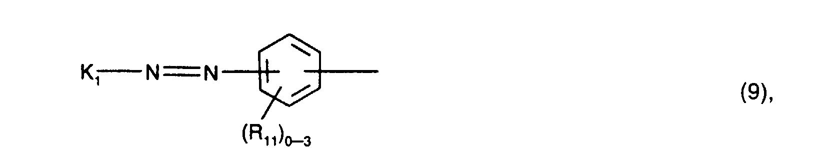 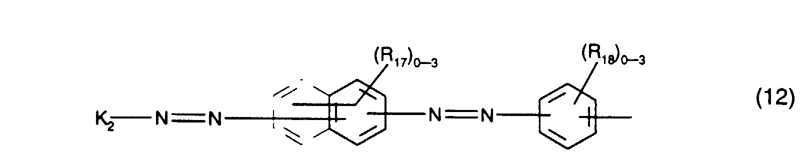 or 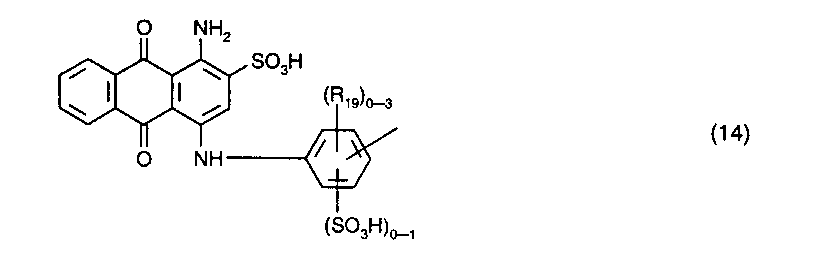 in which
(R₁₁)₀₋₃ is 0 to 3 identical or different substituents chosen from the group consisting of C₁-C₄alkyl, C₁-C₄alkoxy, halogen and sulfo,
(R₁₇)₀₋₃ and (R₁₈)₀₋₃ independently of one another are 0 to 3 identical or different substituents chosen from the group consisting of C₁-C₄alkyl, C₁-C₄alkoxy, C₂-C₄alkanoylamino, halogen, hydroxyl, cyano, carbamoyl, carboxyl, sulfo, amino and N-mono- or N,N-di-C₁-C₄alkylamino,
(R₁₉)₀₋₃ is 0 to 3 identical or different substituents chosen from the group consisting of C₁-C₄alkyl, C₁-C₄alkoxy, halogen, carboxyl and sulfo, and
K₁ and K₂ independently of one another are a radical of the formula 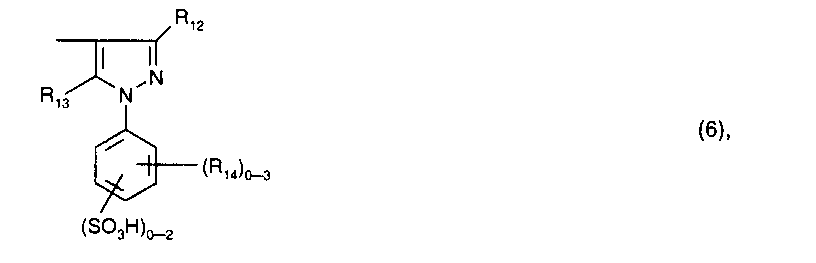 in which R₁₂ is methyl or carboxyl,
R₁₃ is amino or hydroxyl and
(R₁₄)₀₋₃ is 0 to 3 identical or different substituents chosen from the group consisting of C₁-C₄alkyl, C₁-C₄alkoxy, C₂-C₄alkanoylamino, ureido, halogen, carboxyl and sulfo,
or are a radical of the formula 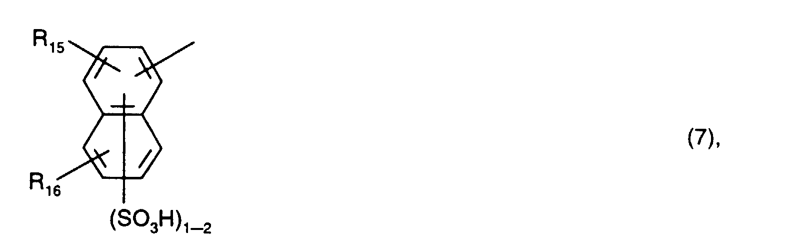 in which R₁₅ is hydrogen, amino or N-mono- or N,N-di-C₁-C₄alkylamino and R₁₆ is hydrogen or hydroxyl.

12. A dye mixture according to any one of claims 1 to 11, in which
R₁, R₂, R₃, R₄, R₅, R₆, R₇ and R₈ are hydrogen or C₁-C₄alkyl,
X₁, X₂ and X₃ are phenyl which is unsubstituted or substituted by C₁-C₄alkyl, C₁-C₄alkoxy, C₂-C₄alkanoylamino, ureido, halogen, carboxyl or sulfo,
B₁ is a C₁-C₁₀alkylene radical, which can be interrupted by 1, 2 or 3 members from the group consisting of -NH-, -N(CH₃)- and -O- and is unsubstituted or substituted by hydroxyl, sulfo, sulfato, cyano or carboxyl,
W₁ is hydrogen or a radical of the formula -CO-R, in which R is C₁-C₈alkyl or phenyl which is unsubstituted or substituted by C₁-C₄alkyl, C₁-C₄alkoxy, halogen, carboxyl or sulfo, and
L is a radical of the formula 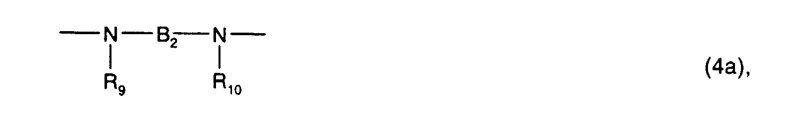 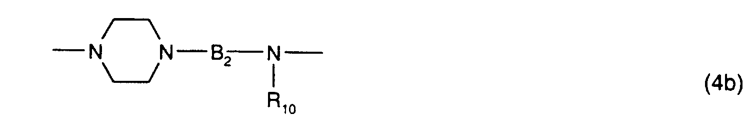 or 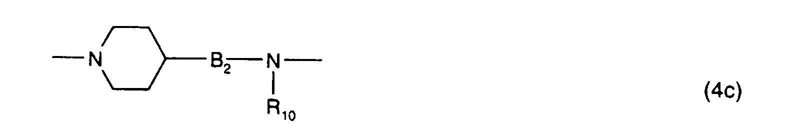
in which R₉ and R₁₀ are hydrogen or C₁-C₄alkyl and
B₂ is as defined above for B₁.

13. A dye mixture according to any one of claims 1 to 12, in which
Y₁ is a radical of the formula 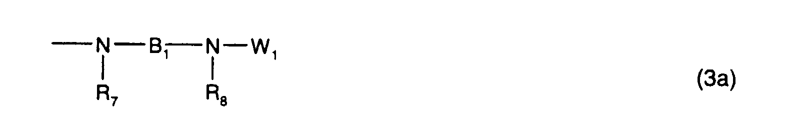 and
L is a radical of the formula 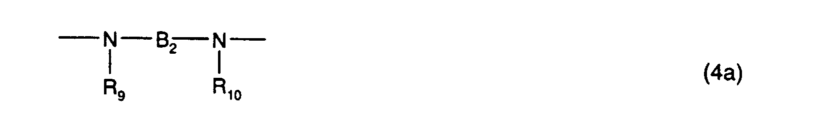 or
Y₁ is a radical of the formula 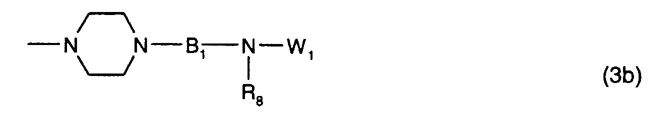 and
L is a radical of the formula 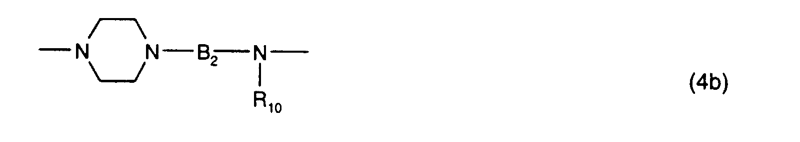 or
Y₁ is a radical of the formula 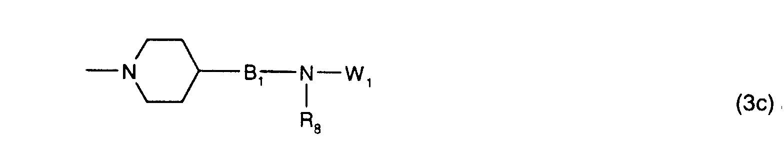 and
L is a radical of the formula 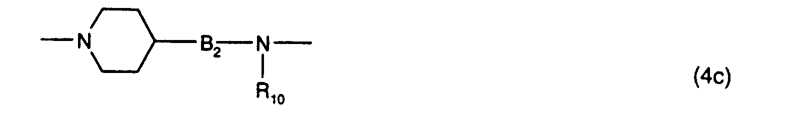 in which
B₁ and B₂ have identical meanings and are a C₁-C₁₀alkylene radical, which can be interrupted by 1, 2 or 3 members from the group consisting of -NH-, -N(CH₃)- and -O- and is unsubstituted or substituted by hydroxyl, sulfo, sulfato, cyano or carboxyl,
R₇ and R₉ have identical meanings and are hydrogen or C₁-C₄alkyl,
R₈ and R₁₀ have identical meanings and are hydrogen or C₁-C₄alkyl and
W₁ is hydrogen or a radical of the formula -CO-R, in which R is C₁-C₈alkyl or phenyl which is unsubstituted or substituted by C₁-C₄alkyl, C₁-C₄alkoxy, halogen, carboxyl or sulfo.

14. A dye mixture according to any one of claims 1 to 13, in which
R₂, R₅ and R₆ are C₁-C₄alkyl.

15. The use of a dye mixture according to any one of claims 1 to 14 for dyeing or printing fibre materials containing hydroxyl groups or nitrogen.

16. The use according to claim 15 for dyeing or printing natural or synthetic polyamide fibre material.

## Revendications

1. Mélanges de colorants caractérisés en ce qu'ils contiennent au moins un colorant de formule 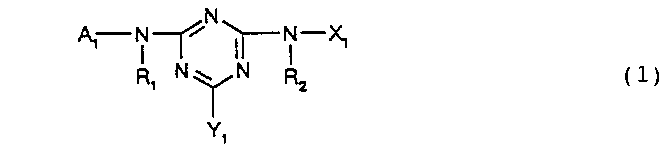 et au moins un colorant de formule 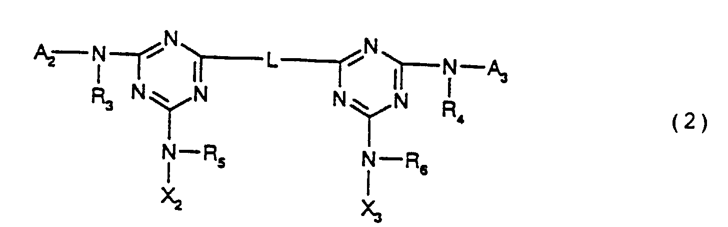 dans laquelle
R₁, R₂, R₃, R₄, R₅ et R₆ représentent, indépendamment les uns des autres, un atome d'hydrogène ou un groupe alkyle en C₁-C₄ éventuellement substitué,
X₁, X₂ et X₃ représentent, indépendamment les uns des autres, des groupes cycloalkyle en C₅-C₇, alkyle en C₁-C₈ éventuellement substitué, phényle ou naphtyle éventuellement substitué par des groupes alkyle en C₁-C₄, alkoxy en C₁-C₄, (alcanoyl en C₂-C₄) amino, amino, hydroxy, uréido, halogène, carboxy ou sulfo, ou le reste de formule -N(R₂)-X₁, -N(R₅)-X₂ ou -N(R₆)X₃ est un noyau contenant éventuellement d'autres hétéroatomes,
L représente un élément de pontage organique,
Y₁ représente un reste de formule 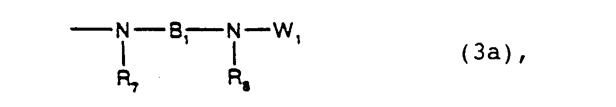 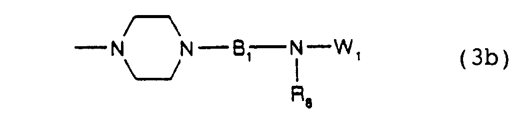 ou 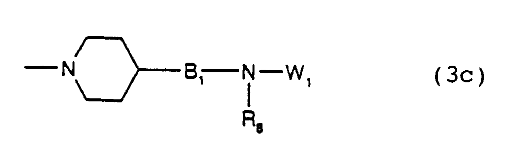
où
B₁ représente un élément de pontage organique incolore,
R₇ et R₈ représentent, indépendamment l'un de l'autre, un atome d'hydrogène ou un groupe alkyle en C₁-C₄ éventuellement substitué,
W₁ représente un atome d'hydrogène, des groupes naphtyle, phényle, cycloalkyle en C₅-C₇ ou alkyle en C₁-C₈ éventuellement substitué, ou un reste de formule -CO-R, R représentant des groupes naphtyle, phényle, cycloalkyle en C₅-C₇ ou alkyle en C₁-C₈ éventuellement substitué, et
A₁, A₂ et A₃ représentent, indépendamment les uns des autres, des restes d'un colorant monoazoïque, polyazoïque, azoïque à complexe métallique, d'anthraquinone, de formazane, de phtalocyanine ou de dioxazine.

2. Mélanges de colorants selon la revendication 1, dans lesquels R₁, R₂, R₃, R₄, R₅ et R₆ représentent, indépendamment les uns des autres, un atome d'hydrogène ou un groupe alkyle en C₁-C₄.

3. Mélanges de colorants selon les revendications 1 et 2, dans lesquels X₁, X₂ et X₃ représentent, indépendamment les uns des autres, un groupe alkyle en C₁-C₈, phényle ou naphtyle éventuellement substitué par des groupes alkyle en C₁-C₄, alkoxy en C₁-C₄, (alcanoyl en C₂-C₄)amino, uréido, halogène, carboxy ou sulfo.

4. Mélanges de colorants selon l'une des revendications 1 à 3, dans lesquels X₁, X₂ et X₃ représentent, indépendamment les uns des autres, des groupes phényle éventuellement substitué par des substituants alkyle en C₁-C₄, alkoxy en C₁-C₄, (alcanoyl en C₂-C₄)amino, uréido, halogène, carboxy ou sulfo, en particulier phényle.

5. Mélanges de colorants selon l'une des revendications 1 à 4, B₁ dans représente un reste alkylène en C₁-C₁₀, lequel peut être interrompu par 1, 2 ou 3 membres pris parmi les groupes -NH-, -N(CH₃)- ou en particulier -O- et est non substitué ou substitué par les groupes hydroxy, sulfo, sulfato, cyano ou carboxy.

6. Mélanges de colorants selon l'une des revendications 1 à 5, dans lesquels R représente un groupe alkyle en C₁-C₈ ou un groupe phényle éventuellement substitué par des groupes alkyle en C₁-C₄, alkoxy en C₁-C₄, halogène, carboxy ou sulfo.

7. Mélanges de colorants selon l'une des revendications 1 à 6, dans lesquels W₁ représente un atome d'hydrogène ou un reste de formule -CO-R, R représentant un groupe alkyle en C₁-C₈ ou un groupe phényle éventuellement substitué par des groupes alkyle en C₁-C₄, alkoxy en C₁-C₄, halogène, carboxy ou sulfo.

8. Mélanges de colorants selon l'une des revendications 1 à 7, dans lesquels
L représente un reste de formule 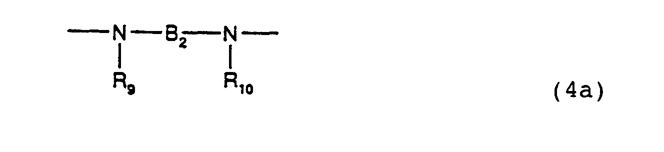 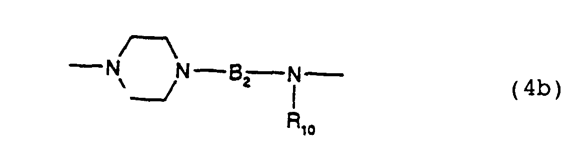 ou 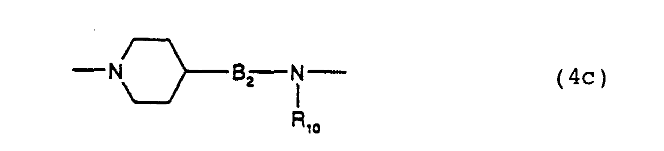
R₉ et R₁₀ représentent, indépendamment l'un de l'autre, des atomes d'hydrogène ou des groupes alkyle en C₁-C₄, et
B₂ représente un reste alkylène en C₁-C₁₀, lequel peut être interrompu par 1, 2 ou 3 membres pris parmi les groupes -NH-, -N(CH₃)- ou -O- et est non substitué ou substitué par des groupes hydroxy, sulfo, sulfato, cyano ou carboxy.

9. Mélanges de colorants selon l'une des revendications 1 à 8, dans lesquels A₁, A₂ et A₃ représentent, indépendamment l'un de l'autre, des restes de colorants monoazoïques, disazoïques ou d'anthraquinone.

10. Mélanges de colorants selon l'une des revendications 1 à 9, dans lesquels A₁, A₂ et A₃ représentent, indépendamment les uns des autres, un reste de formule 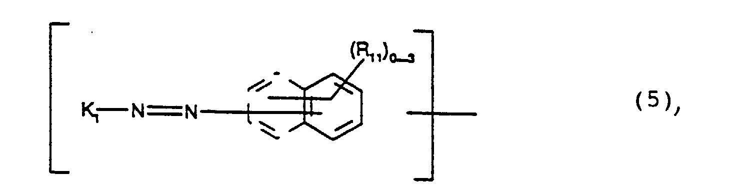 dans laquelle
(R₁₁)₀₋₃ représente 0 à 3 substituants identiques ou différents pris parmi les groupes alkyle en C₁-C₄, alkoxy en C₁-C₄, (alcanoyl en C₂-C₄) amino, halogène, hydroxyl, cyano, carbamoyle, carboxyle, sulfo, amino et N-mono- ou N,N-di-(alkyl en C₁-C₄)amino, et
K₁ représente un reste de la famille du benzène ou du naphtalène ou un reste hétérocyclique,
ou de formule 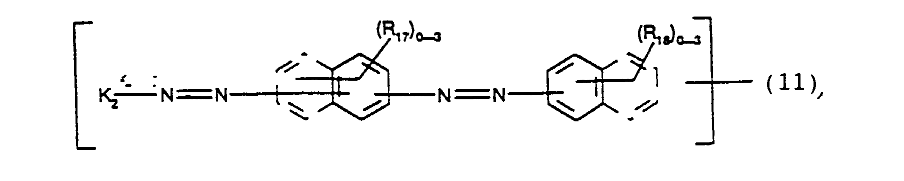 dans laquelle
(R₁₇)₀₋₃ et (R₁₈)₀₋₃ représentent, indépendamment l'un de l'autre, 0 à 3 substituants identiques ou différents pris parmi les groupes alkyle en C₁-C₄, alkoxy en C₁-C₄, (alcanoyl en C₂-C₄) amino, halogène, hydroxyle, cyano, carbamoyle, carboxyle, sulfo, amino et N-mono- ou N,N-di-(alkyl en C₁-C₄)-amino, et
K₂ représente un reste de la famille du benzène oiu du naphtalène ou un reste hétérocyclique,
ou de formule 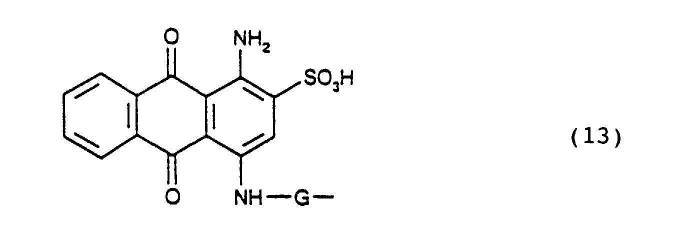 dans laquelle G représente représente un reste un reste phénylène non substitué ou substitué par des groupes alkyle en C₁-C₄, alkoxy en C₁-C₄, halogène, carboxy ou sulfo, ou un reste cyclohexylène, phénylméthylène ou alkylène en C₂-C₆.

11. Mélanges de colorants selon l'une des revendications 1 à 10, dans lesquels A₁, A₂ et A₃ représentent, indépendamment les uns des autres, un reste de formule 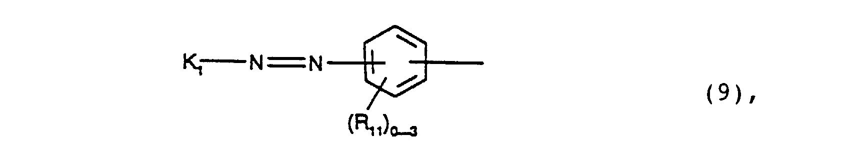 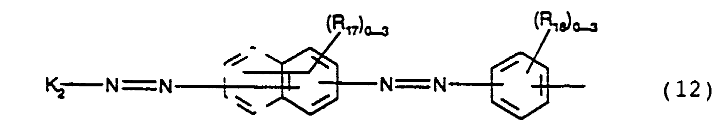 ou 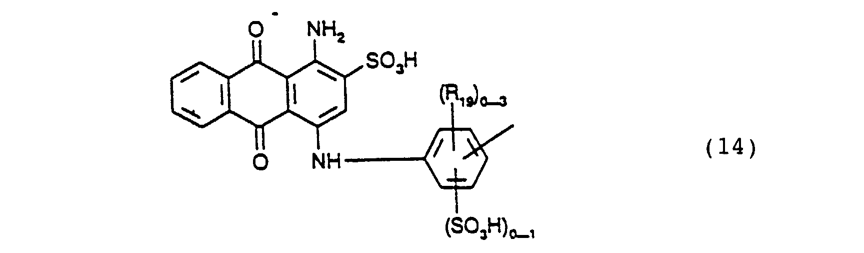 dans lesquelles
(R₁₁)₀₋₃ représente 0 à 3 substituants identiques ou différents pris parmi les groupes alkyle en C₁-C₄, alkoxy en C₁-C₄, halogène ou sulfo,
(R₁₇)₀₋₃ et (R₁₈)₀₋₃ représentent, indépendamment l'un de l'autre, 0 à 3 substituants identiques ou différents pris parmi les groupes alkyle en C₁-C₄, alkoxy en C₁-C₄, (alcanoyl en C₂-C₄) amino, halogène, hydroxyle, cyano, carbamoyle, carboxyle, sulfo, amino et N-mono- ou N,N-di-(alkyl en C₁-C₄)-amino,
(R₁₉)₀₋₃ représente 0 à 3 substituants identiques ou différents pris parmi les groupes alkyle en C₁-C₄, alkoxy en C₁-C₄, halogène, carboxy ou sulfo, et
K₁ et K₂ représentent, indépendamment l'un de l'autre, un reste de formule 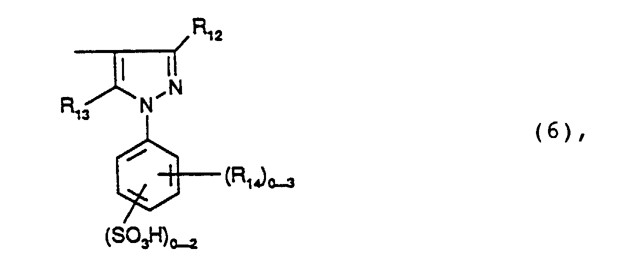
dans laquelle
R₁₂ représente des groupes méthyle ou carboxyle,
R₁₃ représente des groupes amino ou hydroxyle et
(R₁₄)₀₋₃ représente 0 à 3 substituants identiques ou différents pris parmi les groupes alkyl en C₁-C₄, alkoxy en C₁-C₄, (alcanoyl en C₂-C₄)amino, uréido, halogène, carboxyle et sulfo,
ou un reste de formule 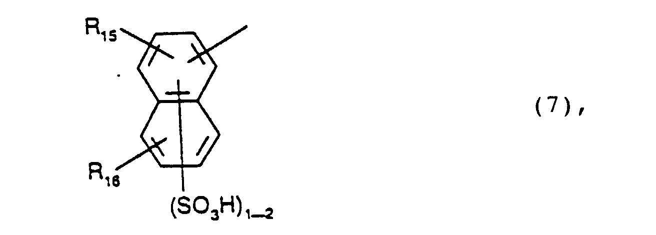 dans laquelle
R₁₅ représente un atome d'hydrogène, des groupes amino ou N-mono- ou N,N-di-(alkyl en C₁-C₄)amino et
R₁₆ représente un atome d'hydrogène ou un groupe hydroxyle.

12. Mélanges de colorants selon l'une des revendications 1 à 11, dans lesquels
R₁, R₂, R₃, R₄, R₅ et R₆ représentent, indépendamment les uns des autres, un atome d'hydrogène ou un groupe alkyle en C₁-C₄,
X₁, X₂ et X₃ représentent, indépendamment les uns des autres, des groupes phényle éventuellement substitué par des groupes alkyle en C₁-C₄, alkoxy en C₁-C₄, (alcanoyl en C₂-C₄) amino, uréido, halogène, carboxy ou sulfo,
B₁ représente un reste alkylène en C₁-C₁₀, lequel peut être interrompu par 1, 2 ou 3 membres pris parmi les groupes -NH-, -N(CH₃)- ou -O-, et est non susbttiué ou substitué par des substituants hydroxy, sulfo, sulfato, cyano ou carboxy,
W₁ représente un atome d'hydrogène ou un reste de formule -CO-R, R étant un groupe alkyle en C₁-C₈ ou un groupe phényle éventuellement substitué par des groupes C₁-C₄, alkoxy en C₁-C₄, halogène, carboxy ou sulfo, et
L représente un reste de formule 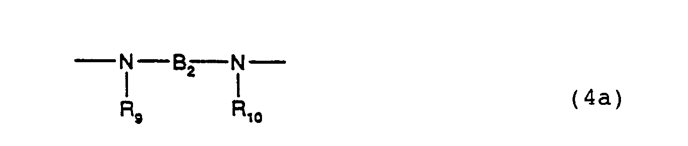 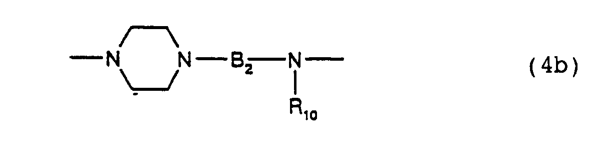 ou 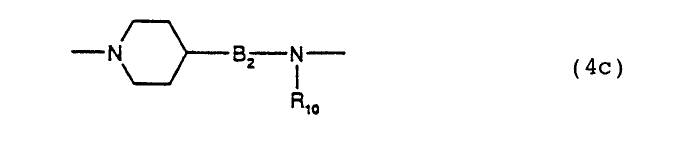
R₉ et R₁₀ représentant un atome d'hydrogène ou un groupe alkyle en C₁-C₄, et
B₂ possède la signification donnée pour B₁ ci-dessus.

13. Mélanges de colorants selon l'une des revendications 1 à 12, dans lesquels
Y₁ représente un reste de formule 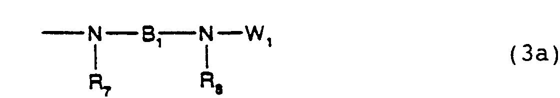 et
L représente un reste de formule 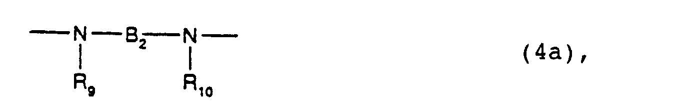 ou
Y₁ représente un reste de formule 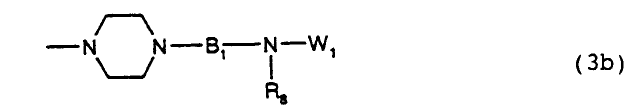 et
L représente un reste de formule 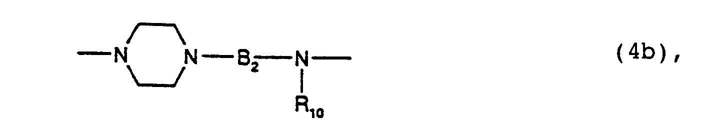 ou
Y₁ représente un reste de formule 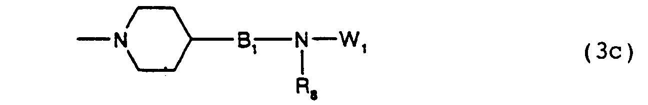 et
L représente un reste de formule 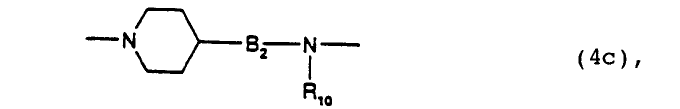
B₁ et B₂ ayant des significations identiques et représentent un reste alkylène en C₁-C₁₀, lequel peut être interrompu par 1, 2 ou 3 membres pris parmi les groupes -NH-, -N(CH₃)- ou -O- et est non susbtitué ou substitué par des groupes hydroxy, sulfo, sulfato, cyano ou carboxy,
R₇ et R₉ ayant des significations identiques, et représentent un atome d'hydrogène ou un groupe alkyle en C₁-C₄,
R₈ et R₁₀ ayant des significations identiques et représentent un atome d'hydrogène ou un groupe alkyle en C₁-C₄, et
W₁ représente un atome d'hydrogène ou un reste de formule -CO-R, R représentant un groupe alkyle en C₁-C₈ ou un groupe phényle éventuellement substitué par des groupes alkyle en C₁-C₄, alkoxy en C₁-C₄, halogène, carboxy ou sulfo.

14. Mélanges de colorants selon l'une des revendications 1 à 13, dans lesquels R₂, R₅ et R₆ représentent un groupe alkyle en C₁-C₄.

15. Utilisation des mélanges de colorants selon l'une des revendications 1 à 14 pour la teinture ou l'impression de matières de fibres contenant des groupes hydroxyle ou l'azote.

16. Utilisation selon la revendication 15 pour la teinture ou l'impression de matières de fibres polyamides naturelles ou synthétiques.
